(19) **Europäisches Patentamt / European Patent Office / Office européen des brevets**

(11) **EP 4 716 315 A1**

(12) **EUROPEAN PATENT APPLICATION**
published in accordance with Art. 153(4) EPC

(43) Date of publication:
25.03.2026 Bulletin 2026/13

(21) Application number: 24854486.8

(22) Date of filing: 16.08.2024

(51) International Patent Classification (IPC):
H04W 52/02 (2009.01)    H04W 56/00 (2009.01)
H04W 48/10 (2009.01)    H04J 11/00 (2006.01)

(52) Cooperative Patent Classification (CPC):
H04J 11/00; H04W 48/10; H04W 52/02;
H04W 56/00

(86) International application number:
PCT/KR2024/012232

(87) International publication number:
WO 2025/037935 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 16.08.2023 KR 20230107222

(71) Applicant: Samsung Electronics Co., Ltd.
Suwon-si, Gyeonggi-do 16677 (KR)

(72) Inventors:
• LEE, Jaewon
Suwon-si, Gyeonggi-do 16677 (KR)
• KIM, Youngbum
Suwon-si, Gyeonggi-do 16677 (KR)
• RYU, Hyunsuk
Suwon-si, Gyeonggi-do 16677 (KR)
• YI, Junyung
Suwon-si, Gyeonggi-do 16677 (KR)

(74) Representative: HGF
HGF Limited
4th Floor, 1 City Square
Leeds LS1 2ES (GB)

(54) **METHOD AND DEVICE FOR ENERGY SAVING IN WIRELESS COMMUNICATION SYSTEM**

(57) The present disclosure relates to a 5th generation (5G) or 6th generation (6G) communication system for supporting a higher data transmission rate. Also, the present disclosure provides a method and device for energy saving of a base station (BS) in a mobile communication system. According to the present disclosure, the problem of excessive energy consumption of a BS in a mobile communication system may be resolved and high energy efficiency may be achieved.

A method, performed by a terminal, of transmitting and receiving a signal in a wireless communication system according to an embodiment of the present disclosure includes: synchronizing with a first cell, receiving, from the first cell, a first control signal including information for a cell controllable by the first cell; and transmitting data to a second cell based on the first control signal.

FIG. 19

EP 4 716 315 A1

**Description**

**Technical Field**

The present disclosure relates to a wireless communication system, and more particularly, to a method and device for energy saving of a base station in a wireless communication system.

**Background Art**

A 5th generation (5G) mobile communication technology defines a broad frequency band to enable a high data rate and new services, and may be implemented not only in a 'Sub 6 GHz' band including 3.5 GHz but also in an ultra-high frequency band ('Above 6 GHz') referred to as millimeter wave (mmWave) including 28 GHz, 39 GHz, and the like. Also, for 6th generation (6G) mobile communication technology referred to as a system beyond 5G communication (beyond 5G), in order to achieve a data rate fifty times faster than the 5G mobile communication technology and ultra-low latency one-tenth of the 5G mobile communication technology, implementation of the 6G mobile communication technology in the terahertz band (e.g., 95 GHz to 3 THz band) is being considered.

In the early phase of the development of the 5G mobile communication technology, in order to support services and satisfy performance requirements of enhanced Mobile BroadBand (eMBB), Ultra Reliable Low Latency Communications (URLLC), and massive Machine-Type Communications (mMTC), there has been ongoing standardization about beamforming and massive multiple input multiple output (MIMO) for mitigating path loss of radio waves and increasing transmission distances of radio waves in a mmWave band, supporting numerologies (e.g., operation of multiple subcarrier spacings) for efficiently utilizing mmWave resources and dynamic operation of slot formats, initial access technology for supporting multi-beam transmission and broadband, definition and operation of bandwidth part (BWP), new channel coding methods such as a low density parity check (LDPC) code for a large amount of data transmission and a polar code for highly reliable transmission of control information, L2 pre-processing, and network slicing for providing a dedicated network specialized to a specific service.

Currently, there are ongoing discussions about improvement and performance enhancement of initial 5G mobile communication technology in consideration of services to be supported by the 5G mobile communication technology, and there has been physical layer standardization of technologies such as vehicle-to-everything (V2X) for aiding driving determination by autonomous vehicles based on information regarding locations and states of vehicles transmitted by the vehicles and for enhancing user convenience, new radio unlicensed (NR-U) aimed at system operations following various regulation-related requirements in unlicensed bands, NR user equipment (NR UE) power saving, non-terrestrial network (NTN) that is UE-satellite direct communication for providing coverage in an area in which communication with terrestrial networks is unavailable, and positioning.

Moreover, there has been ongoing standardization of air interface architecture/protocol regarding technologies such as industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR), and standardization of system architecture/service regarding a 5G baseline architecture (e.g., service based architecture or service based interface) for combining network functions virtualization (NFV) and software-defined networking (SDN) technologies, and mobile edge computing (MEC) for receiving services based on UE locations.

When the 5G mobile communication system is commercialized, connected devices being on a rapidly increasing trend are being predicted to be connected to communication networks, and therefore, it is predicted that enhancement of functions and performance of the 5G mobile communication system and integrated operations of the connected devices are required. To this end, new researches are scheduled for eXtended Reality (XR) for efficiently supporting Augmented Reality (AR), Virtual Reality (VR), Mixed Reality (MR) and the like, 5G performance improvement and complexity reduction by utilizing artificial intelligence (AI) and machine learning (ML), AI service support, metaverse service support, drone communication, and the like.

Also, such development of the 5G mobile communication system will serve as a basis for developing not only new waveforms for providing coverage in terahertz bands of 6G mobile communication technology, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of the 6G mobile communication technology and improving system networks, AI-based communication technology for implementing system optimization by utilizing satellites and AI from a design stage and internalizing end-to-end AI support functions, and next-generation distributed computing technology for implementing services at levels of complexity exceeding the limit of UE operation capability by utilizing ultra-high-performance communication and computing resources.

## Disclosure of Invention

## Technical Problem

The present disclosure provides a method and device for energy saving in a wireless communication system.

## Solution to Problem

According to the present disclosure, a method of processing a control signal in a wireless communication system includes: receiving a first control signal transmitted from a base station (BS); processing the received first control signal; and transmitting a second control signal, generated based on the processing, to the BS.

According to an embodiment of the present disclosure, a method, performed by a terminal, of transmitting and receiving a signal in a wireless communication system includes: synchronizing with a first cell; receiving, from the first cell, a first control signal including information for a cell controllable by the first cell; and transmitting data to a second cell based on the first control signal.

## Advantageous Effects of Invention

According to an embodiment of the present disclosure, a signal transmission method of a base station is defined in a wireless communication system, the problem of excessive energy consumption may be resolved and high energy efficiency may be achieved.

## Brief Description of Drawings

FIG. 1 illustrates a basic structure of a time-frequency resource domain of a 5th generation (5G) system, according to an embodiment of the present disclosure.

FIG. 2 illustrates a time domain mapping structure and a beam sweeping operation for a synchronization signal, according to an embodiment of the present disclosure.

FIG. 3 illustrates a random access procedure, according to an embodiment of the present disclosure.

FIG. 4 illustrates a procedure in which a user equipment (UE) reports UE capability information to a base station, according to an embodiment of the present disclosure.

FIG. 5 illustrates a control resource set (CORESET), which is a time-frequency resource on which a physical downlink control channel (PDCCH) is mapped, according to an embodiment of the present disclosure.

FIG. 6 illustrates mapping between downlink control information (DCI) and a demodulation reference signal (DMRS) in a resource element group (REG), which is a basic unit of a DL control channel, according to an embodiment of the present disclosure.

FIG. 7 illustrates beam allocation by a base station according to transmission configuration indication (TCI) state configuration, according to an embodiment of the present disclosure.

FIG. 8 illustrates a hierarchical signaling method for dynamic allocation of PDCCH beams in new radio (NR), according to an embodiment of the present disclosure.

FIG. 9 illustrates a TCI indication medium access control (MAC) control element (CE) signaling structure for a PDCCH DMRS, according to an embodiment of the present disclosure.

FIG. 10 is a diagram for describing a method by which a base station and a UE transmit and receive data by considering a DL data channel and a rate matching resource, according to an embodiment of the present disclosure.

FIG. 11 illustrates an aperiodic channel state information (CSI) reporting method when a CSI-reference signal (RS) offset is 0, according to an embodiment of the present disclosure.

FIG. 12 illustrates an aperiodic CSI reporting method when a CSI-RS offset is 1, according to an embodiment of the present disclosure.

FIG. 13 illustrates an example of configuration of bandwidth parts (BWPs) in a 5G communication system, according to an embodiment of the present disclosure.

FIG. 14 illustrates discontinuous reception (DRX) in a 5G communication system, according to an embodiment of the present disclosure.

FIG. 15 is a diagram for describing an existing network communication system.

FIG. 16A is a diagram for describing a network communication system for achieving energy saving, according to an embodiment of the present disclosure.

FIG. 16B is a diagram for describing a network communication system for achieving energy saving, according to an embodiment of the present disclosure.

FIG. 17A is a diagram for describing a network communication system for achieving energy saving, according to an embodiment of the present disclosure.

FIG. 17B is a diagram for describing a network communication system for achieving energy saving, according to an embodiment of the present disclosure.

FIG. 18A illustrates a synchronization signal block (SSB) structure of a sync cell and data cells (excluding a physical broadcast channel (PBCH)), according to an embodiment of the present disclosure.

FIG. 18B illustrates an SSB structure of a sync cell and data cells (excluding a PBCH), according to an embodiment of the present disclosure.

FIG. 18C illustrates an SSB structure of a sync cell and data cells (excluding a PBCH), according to an embodiment of the present disclosure.

FIG. 19 illustrates a procedure for obtaining a physical cell identification (PCI) between a sync cell, a data cell, and a UE, according to an embodiment of the present disclosure.

FIG. 20 illustrates a UE transceiving device, according to an embodiment of the present disclosure.

FIG. 21 is a block diagram illustrating a UE, according to an embodiment of the present disclosure.

FIG. 22 is a block diagram illustrating a base station, according to an embodiment of the present disclosure.

For convenience of explanation, the illustration and description of devices not directly related to the present disclosure may be omitted.

**Mode for the Invention**

Embodiments of the present disclosure will now be described more fully with reference to the accompanying drawings. Also, in the following descriptions of the present disclosure, well-known functions or configurations are not described in detail because they would obscure the present disclosure with unnecessary details. The terms used herein are those defined in consideration of functions in the present disclosure, and may vary according to the intention of users or operators, precedents, etc. Hence, the terms used herein should be defined based on the meaning of the terms together with the descriptions throughout the specification.

The advantages and features of the present disclosure and methods of achieving them will become apparent with reference to embodiments of the present disclosure described in detail below along with the attached drawings. The present disclosure may, however, be embodied in many different forms and should not be construed as limited to embodiments of the present disclosure set forth herein; rather these embodiments of the present disclosure are provided so that this disclosure will be thorough and complete, and will fully convey the scope of the present disclosure to one of ordinary skill in the art, and the scope of the present disclosure is defined only by the accompanying claims. In the specification, the same reference numerals denote the same elements.

It will be understood that each block of flowchart illustrations and combinations of blocks in the flowchart illustrations may be implemented by computer program instructions. Because these computer program instructions may be loaded into a processor of a general-purpose computer, special purpose computer, or other programmable data processing equipment, the instructions, which are executed via the processor of the computer or other programmable data processing equipment generate means for performing the functions specified in the flowchart block(s). Because these computer program instructions may also be stored in a computer-executable or computer-readable memory that may direct the computer or other programmable data processing equipment to function in a particular manner, the instructions stored in the computer-executable or computer-readable memory may produce an article of manufacture including instruction means for performing the functions stored in the flowchart block(s). Because the computer program instructions may also be loaded into a computer or other programmable data processing equipment, a series of operational steps may be performed on the computer or other programmable data processing equipment to produce a computer implemented process, and thus, the instructions executed on the computer or other programmable data processing equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in reverse order, according to the functionality involved.

The term "... unit" used in the present embodiment of the present disclosure refers to a software or hardware component, such as a field-programmable gate array (FPGA) or an application-specific integrated circuit (ASIC), which performs certain tasks. However, the term "... unit" does not mean to be limited to software or hardware. A "... unit" may be configured to be in an addressable storage medium or may be configured to operate one or more processors. Accordingly, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "... units" may be combined into fewer components and "... units" or may be further separated into additional components and "... units". Furthermore, components and "... units" may be implemented to operate one or more central processing units (CPUs) in a device or a secure multimedia card. Also, a "... unit" in an embodiment may include one or more processors.

In the following descriptions of the present disclosure, well-known functions or configurations are not described in detail because they would obscure the gist of the present disclosure with unnecessary details. Hereinafter, embodiments of the present disclosure will be described with reference to the attached drawings.

Hereinafter, terms for identifying access nodes, terms indicating network entities, terms indicating messages, terms indicating an interface between network entities, and terms indicating various pieces of identification information used herein are exemplified for convenience of explanation. Accordingly, the present disclosure is not limited to the terms described below, and other terms indicating objects having equal technical meanings may be used.

In the following description, a physical channel and a signal may be interchangeably used with data or a control signal. For example, a physical downlink shared channel (PDSCH) is a term indicating a physical channel through which data is transmitted, but the PDSCH may also be used to indicate data. That is, in the present disclosure, when a 'physical channel is transmitted', it may be interpreted as 'data or a signal is transmitted through a physical channel'.

Hereinafter, in the present disclosure, higher layer signaling refers to a method of transmitting a signal from a base station to a terminal by using a downlink data channel of a physical layer or transmitting a signal from a terminal to a base station by using an uplink data channel of a physical layer. Higher layer signaling may be radio resource control (RRC) signaling or media access control (MAC) control element (CE).

For convenience of explanation, terms and names defined in the 3GPP new radio (NR) standards (5G mobile communication standards) are used. However, the present disclosure may not be limited to the terms and names and may also be applied to systems following other standards. Also, the term "terminals (UEs)" may refer to not only mobile phones, smartphones, Internet of things (IoT) devices, and sensors but also other wireless communication devices.

Hereinafter, a base station is an entity that allocates resources to a UE, and may be at least one of a next-generation node B (gNode B /gNB), an evolved node B (eNode B /eNB), a Node B, a base station (BS), a radio access unit, a BS controller, or a node on a network. A terminal may include a UE, a mobile station (MS), a cellular phone, a smartphone, a computer, or a multimedia system capable of performing a communication function. However, the present disclosure is not limited to the above examples.

In order to satisfy exponentially increasing demand with respect wireless data traffic, initial standards of the 5th-generation (5G) system or the NR access technology which is a next-generation communication system after LTE or evolved universal terrestrial radio access (E-UTRA) and LTE-A or E-UTRA evolution are completed. Compared to the legacy mobile communication system focusing on general voice/data communications, the 5G system aims to satisfy various services and requirements, such as enhanced Mobile BroadBand (eMBB) services for improving the existing voice/data communication, Ultra-Reliable and Low Latency Communication (URLLC) services, massive MTC (mMTC) services for supporting communication between a massive number of devices, etc.

Compared to the legacy LTE and LTE-A where a maximum system transmission bandwidth for a single carrier is limited to 20 MHz, the 5G system aims to provide a highspeed data service at several Gbps by using a very large ultra-wide bandwidth. Accordingly, for the 5G system, an ultra-high frequency band from several GHz up to 100 GHz, in which frequencies having ultrawide bandwidths are easily made available, is being considered as a candidate frequency. In addition, wide-bandwidth frequencies for the 5G system may be obtained by reassigning or allocating frequencies among frequency bands included in a range of several hundreds of MHz to several GHz used by the legacy mobile communication systems.

A radio wave in the ultra-high frequency band has a wavelength of several millimeters (mm) and is also referred to as a millimeter wave (mmWave). However, in the ultra-high frequency band, a pathloss of radio waves increases with an increase in frequency, and thus, a coverage range of a mobile communication system is reduced.

In order to overcome the reduction in coverage in the ultra-high frequency band, a beamforming technology may be applied to increase a radio wave arrival distance by focusing a radiation energy of radio waves to a certain target point using a plurality of antennas. That is, a signal to which the beamforming technology is applied has a relatively narrow beam width, and radiation energy is concentrated within the narrow beam width, so that the radio wave arrival distance is increased. The beamforming technology may be applied at both a transmitter and a receiver. In addition to increasing the coverage range, the beamforming technology also has an effect of reducing interference in a region other than a beamforming direction. In order to appropriately implement the beamforming technology, an accurate transmission/reception beam measurement and feedback method is required. The beamforming technology may be applied to a control channel or a data channel having a one-to-one correspondence between a certain UE and a BS. Also, in order to increase coverage, the beamforming technology may be applied for control channels and data channels via which the BS transmits, to multiple UEs in a system, common signals such as a synchronization signal, a physical broadcast channel (PBCH), and system information. When the beamforming technology is applied to the common signals, a beam sweeping technique of transmitting a signal by changing a beam direction is additionally applied to allow the common signals to reach a UE located at any position within a cell.

As another requirement for the 5G systems, an ultra-low latency service with a transmission delay of about 1 ms between a transmitter and a receiver is required. As a method for reducing the transmission delay, a frame structure based on a short transmission time interval (TTI) compared to that in LTE and LTE-A needs to be designed. A TTI is a basic time unit for performing scheduling, and a TTI in the legacy LTE and LTE-A systems corresponds to one subframe with a length of 1 ms. For example, as a short TTI for satisfying the requirement for the ultra-low latency service in the 5G systems, TTIs of 0.5 ms, 0.25 ms, 0.125 ms, etc. that are shorter than the TTI in the legacy LTE and LTE-A systems may be supported.

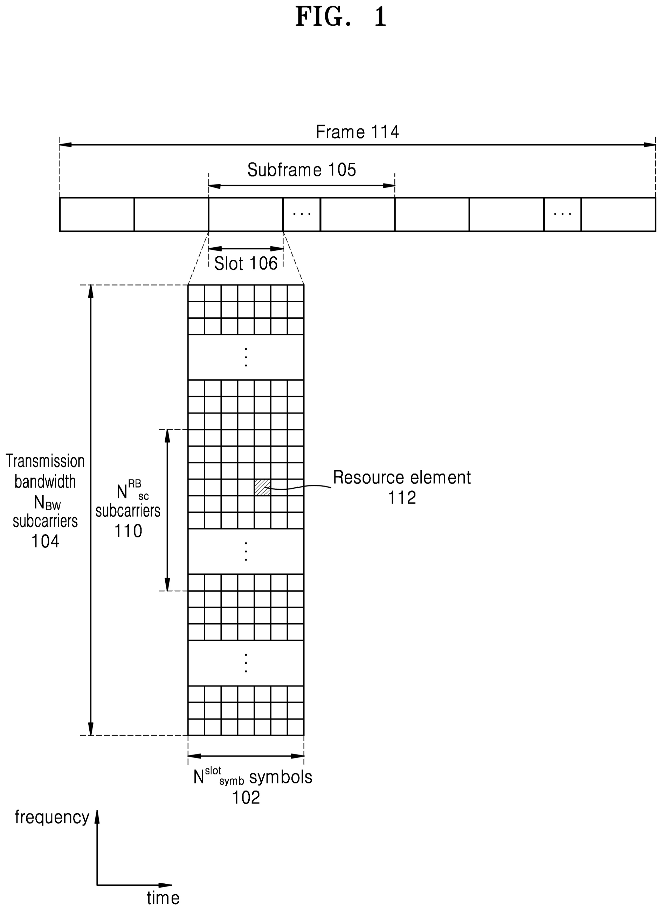

FIG. 1 illustrates a basic structure of a time-frequency resource domain in a 5G system, according to an embodiment of the present disclosure. That is, FIG. 1 illustrates a basic structure of a time-frequency resource domain that is a radio resource region over which data or a control channel of a 5G system is transmitted.

Referring to FIG. 1, the horizontal axis represents a time domain and the vertical axis represents a frequency domain in FIG. 1. A minimum transmission unit in the time domain of the 5G system is an orthogonal frequency division multiplexing (OFDM) symbol, and $N_{symb}^{slot}$ symbols 102 may be gathered to constitute one slot 106, and $N_{slot}^{subframe}$ slots may be gathered to constitute one subframe 105. A length of the subframe 105 may be 1.0 ms, and 10 subframes may be gathered to constitute one frame 114 of 10 ms. A minimum transmission unit in the frequency domain is a subcarrier, and a bandwidth of an entire system transmission band (transmission bandwidth) may include a total of $N_{BW}$ subcarriers 104.

A basic unit of a resource in the time-frequency domain is a resource element (RE) 112 and may be defined as an OFDM symbol index and a subcarrier index A resource block (RB) or a physical resource block (PRB) may be defined as $N_{sc}^{RB}$ consecutive subcarriers 110 in the frequency domain. In the 5G system, $N_{sc}^{RB} = 12$, and a data rate may increase in proportion to the number of RBs scheduled to a UE.

In the 5G system, a BS maps data in in units of RBs, and in general, scheduling of RBs constituting one slot may be performed for a certain UE. That is, in the 5G system, a basic time unit for performing scheduling may be a slot, and a basic frequency unit for performing scheduling may be an RB. $N_{symb}^{slot}$ that is the number of OFDM symbols is determined according to a length of a cyclic prefix (CP) added to each symbol so as to prevent interference between symbols, and for example, when a normal CP is applied, $N_{symb}^{slot} = 14$, and when an extended CP is applied, $N_{symb}^{slot} = 12$. Because the extended CP is applied to a system having a relatively greater radio transmission distance than the normal CP, orthogonality between symbols may be maintained. In the case of the normal CP, a ratio of a CP length to a symbol length is maintained at a constant value, and thus, overhead due to the CP may be kept constant, regardless of subcarrier spacings. That is, when subcarrier spacing is small, the symbol length may increase, and thus, the CP length may also increase. On the contrary, when subcarrier spacing is large, the symbol length may decrease, and thus, the CP length may also decrease. The symbol length and the CP length may be inversely proportional to subcarrier spacing.

In the 5G system, various frame structures may be supported by adjusting subcarrier spacing so as to satisfy various services and requirements. For example,

- in terms of an operating frequency band, as the subcarrier spacing is greater, it is more advantageous to recover phase noise in a high frequency band.
- In terms of a transmission time, as the subcarrier spacing is greater, a symbol length of the time domain is shorter and a slot length is shorter, and as a result, it is more advantageous to support an ultra-low latency service such as URLLC.
- In terms of a cell size, as the CP length is longer, it is possible to support a large cell, and thus, as the subcarrier spacing is smaller, it is possible to support a relatively large cell. A cell indicates an area covered by one BS in mobile communication.

The subcarrier spacing, the CP length, etc. are essential information for OFDM transmission and reception, and seamless transmission and reception may be performed only when the BS and the UE recognize the subcarrier spacing, the CP length, etc. as common values. Table 1 shows a relation between subcarrier spacing configuration ($\mu$), subcarrier spacing ($\triangle$f), and CP length.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Table 2 shows the number of symbols ( $N_{symb}^{slot}$ ) per slot, the number of slots ( $N_{slot}^{frame,\mu}$ ) per frame, and the number of slots ( $N_{slot}^{subframe,\mu}$ ) per subframe, for each subcarrier spacing ($\mu$) in the case of the normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 3 shows the number of symbols ( $N_{symb}^{slot}$ ) per slot, the number of slots ( $N_{slot}^{frame,\mu}$ ) per frame, and the number of slots ( $N_{slot}^{subframe,\mu}$ ) per subframe, for each subcarrier spacing ($\mu$) in the case of the extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

At the initial stage of introduction of the 5G system, at least coexistence or dual mode operation with the legacy LTE and/or LTE-A system (hereinafter, the LTE/LTE-A system) is expected. Accordingly, the legacy LTE/LTE-A may provide a stable system operation to a UE, and the 5G system may provide improved services to the UE. Therefore, a frame structure of the 5G system may need to include at least the LTE/LTE-A frame structure or the essential parameter set (subcarrier spacing = 15 kHz).

For example, comparing a frame structure where subcarrier spacing configuration $\mu$=0 (hereinafter, frame structure A) with a frame structure where subcarrier spacing configuration $\mu$=1 (hereinafter, frame structure B), subcarrier spacing and an RB size in frame structure B are increased twice and a slot length and a symbol length are reduced twice, compared with frame structure A. In frame structure B, 2 slots may constitute 1 subframe, and 20 subframes may constitute 1 frame.

When the frame structures of the 5G system are generalized, high expandability is provided by making essential parameter sets such as the subcarrier spacing, the CP length, the slot length, etc. have an integer multiple relation for each frame structure Also, a subframe having a fixed length of 1 ms may be defined to indicate a reference time unit irrelevant to the frame structure.

The frame structures may be applied to correspond to various scenarios. In terms of the cell size, as the CP length is longer, a larger cell may be supported, and thus, frame structure A may support relatively large cells, compared with frame structure B. In terms of the operating frequency band, as the subcarrier spacing is greater, it is more advantageous to recover phase noise in a high frequency band, and thus, frame structure B may support a relatively high operating frequency, compared with frame structure A. In terms of the service, as the slot length that is a basic time unit of scheduling is shorter, it is more advantageous to support an ultra-low latency service such as URLLC, and thus, frame structure B may be relatively appropriate for URLLC services compared with frame structure A.

Hereinafter, in the description of the present disclosure, an uplink (UL) may refer to a radio link for transmitting data or a control signal from a UE to a BS, and a downlink (DL) may refer to a radio link for transmitting data or a control signal from the BS to the UE.

In an initial access operation in which a UE initially accesses a system, the UE may synchronize DL time and frequency from a synchronization signal transmitted from a BS and may obtain a cell identifier (cell ID), via cell search. Then, the UE may receive a physical broadcast channel (PBCH) by using the obtained cell ID, and may obtain, from the PBCH, a master information block (MIB) that is essential system information. In addition, the UE may receive a system information block (SIB) transmitted from the BS, and thus, may obtain cell-common transmission and reception control information from the SIB. The cell-common transmission and reception control information may include random access-associated control information, paging-associated control information, and common control information with respect to various physical channels.

A synchronization signal is a signal that is a reference of cell search, and subcarrier spacing may be applied to be adapted to a channel environment such as phase noise, for each frequency band. In order for a data channel or a control channel to support various services described above, subcarrier spacing may be differently applied according to service types.

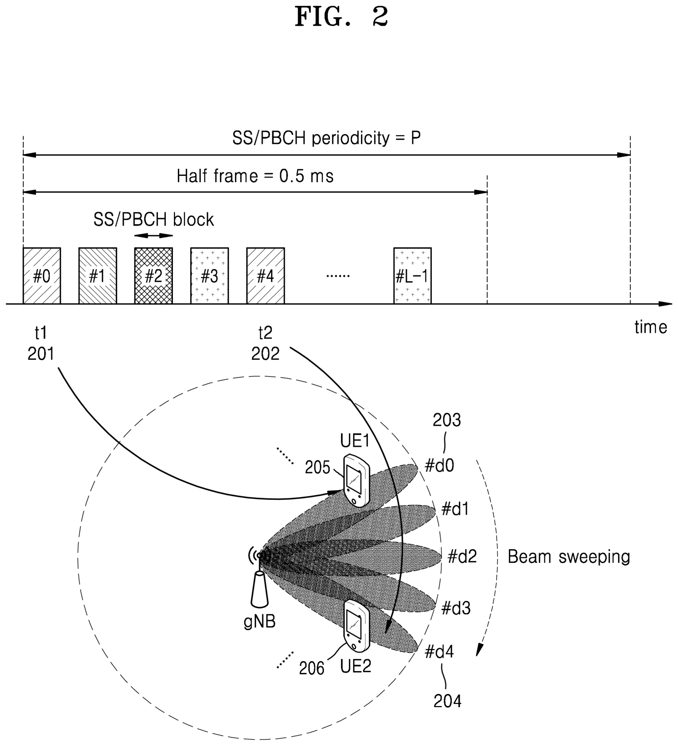

FIG. 2 illustrates a time domain mapping structure and a beam sweeping operation for a synchronization signal, according to an embodiment of the present disclosure.

The following elements may be defined for description.

- Primary synchronization signal (PSS): It is a signal used as a reference for DL time/frequency synchronization and provides partial information of a cell ID.
- Secondary synchronization signal (SSS): It is used as a reference for DL time/frequency synchronization and provides other partial information of the cell ID. The SSS may also serve as a reference signal for demodulation of a PBCH.
- Physical broadcast channel (PBCH): A PBCH provides a master information block (MIB) that is essential system information needed for the UE to transmit and receive a data channel and a control channel. The essential system information may include search space-associated control information indicating radio resource mapping information of a control channel, scheduling control information of a separate data channel for transmitting system information, information such as a system frame number (SFN) that is an index in a frame level that is timing reference.
- SS/PBCH block (or SSB): An SS/PBCH block consists of N OFDM symbols and includes a combination of the PSS, the SSS, and the PBCH. For a system using a beam sweeping technique, the SS/PBCH block is the smallest unit for applying beam sweeping. In the 5G system, N=4. The BS may transmit up to L SS/PBCH blocks, and the L SS/PBCH blocks are mapped within a half frame (0.5 ms). The L SS/PBCH blocks are periodically repeated with a periodicity P. The BS may inform the UE of the periodicity P by signaling. When there is no separate signaling for the periodicity P, the UE applies a predetermined default value.

FIG. 2 illustrates an example in which beam sweeping is applied in units of SS/PBCH blocks over time. Referring to FIG. 2, a first UE (UE1) 205 receives an SS/PBCH block by using a beam emitted in direction #d0 203 due to beamforming applied to SS/PBCH block#0 at a time point t1 201. Also, a second UE (UE2) 206 receives an SS/PBCH block by using a beam emitted in direction #d4 204 due to beamforming applied to SS/PBCH block#4 at a time point t2 202. The UE may obtain an optimal synchronization signal via a beam emitted from the BS in a direction toward a location of the UE. For example, it may be difficult for the UE1 205 to obtain time/frequency synchronization and essential system information from a SS/PBCH block via the beam emitted in the direction #d4 204 that is far from the location of the UE1 205.

In addition to reception for the initial access procedure, the UE may receive an SS/PBCH block to determine whether a radio link quality of a current cell is maintained above a certain level. Also, in a handover procedure in which the UE moves from a current cell to a neighboring cell, the UE may receive an SS/PBCH block from the neighboring cell so as to determine a radio link quality of the neighboring cell and obtain time/frequency synchronization of the neighboring cell.

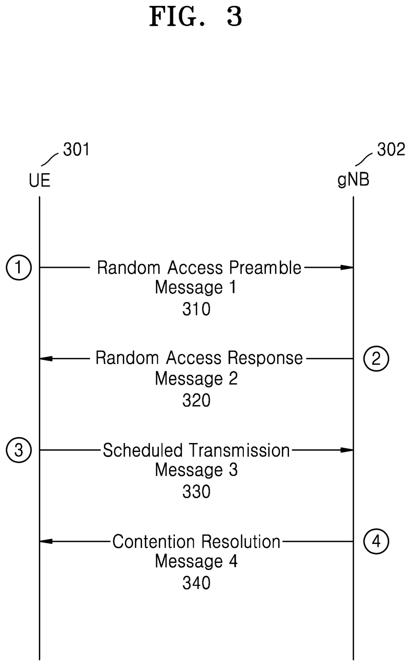

After the UE obtains an MIB and system information from the BS via the initial access procedure, the UE may perform a random access procedure to switch a link with the BS to a connected state (or RRC_CONNECTED state). Upon completion of the random access procedure, the UE transitions to a connected state, and one-to-one communication is enabled between the BS and the UE. Hereinafter, a random access procedure will be described in detail with reference to FIG. 3.

FIG. 3 illustrates a random access procedure, according to an embodiment of the present disclosure.

Referring to FIG. 3, in a first step 310 of a random access procedure, a UE transmits a random access preamble to a gNB. In the random access procedure, the random access preamble, which is a first message transmitted by the UE, may be referred to as Message 1. The gNB may measure a transmission delay value between the UE and the gNB from the random access preamble and perform UL synchronization. In this case, the UE may randomly select a random access preamble to use from a set of random access preambles given by system information in advance. In addition, initial transmission power for the random access preamble may be determined according to a pathloss between the gNB and the UE, which is measured by the UE. Also, the UE may determine a direction of a transmission beam for the random access preamble, from a synchronization signal received from the gNB, and may transmit the random access preamble in the determined direction of the transmission beam.

In a second step 320, the gNB transmits a UL transmission timing control command to the UE, based on the transmission delay value measured from the random access preamble received in the first step 310. Also, the gNB may transmit a power control command and a UL resource to be used by the UE as scheduling information. The scheduling information may include control information regarding a UL transmission beam of the UE.

When the UE does not successfully receive, from the gNB, a random access response (RAR) (or Message 2) that is the scheduling information for Message 3 within a certain time period in the second step 320, the UE may perform the first step 310 again. When the UE performs the first step 310 again, the UE may transmit the random access preamble with transmission power increased by a certain step (power ramping), thereby increasing the probability of reception of the random access preamble at the gNB.

In a third step 330, the UE transmits UL data (Message 3) including its UE ID to the gNB by using the UL resource allocated in the second step 320 through a physical uplink shared channel (PUSCH). A transmission timing of the UL data channel for transmitting Message 3 may be controlled according to the timing control command received from the gNB in the second step 320. Transmission power for the UL data channel for transmitting Message 3 may be determined by considering the power control command received from the gNB in the second step 320 and a power ramping value applied to the random access preamble. The UL data channel for transmitting Message 3 may mean a first UL data signal transmitted by the UE to the gNB after the UE transmits the random access preamble.

In a fourth step 340, when it is determined that the gNB determines that the UE has performed the random access procedure without colliding with another UE, the gNB transmits data (Message 4) including the ID of the UE that has transmitted the UL data in the third step 330 to the UE. When the UE receives the data transmitted by the gNB in the fourth step 340, the UE may determine that the random access procedure is successful. The UE may transmit hybrid automatic repeat request acknowledgement (HARQ-ACK) information indicating whether Message 4 is successfully received to the gNB via a physical UL control channel (PUCCH).

When the data transmitted by the UE in the third step 330 and data transmitted by another UE collide with each other and thus the gNB fails to receive a data signal from the UE, the gNB may no longer transmit data the UE. Accordingly, when the UE fails to receive the data transmitted from the gNB in the fourth step 340 within a certain period, the UE may determine that the random access procedure has failed and may restart the random access procedure from the first step 310.

Upon successful completion of the random access procedure, the UE transitions to a connected state, and one-to-one communication between the gNB and the UE is enabled. The gNB may receive UE capability information from the UE in the connected state, and may adjust scheduling by referring to the UE capability information of the UE. The UE may inform, via the UE capability information, the gNB of whether the UE itself supports a certain function, a maximum allowable value of the function supported by the UE, etc. Accordingly, the UE capability information reported by each UE to the gNB may have a different value for each UE.

For example, the UE may report, to the gNB, UE capability information including at least one of the following control information as the UE capability information.

- Control information associated with a frequency band supported by the UE
- Control information associated with a channel bandwidth supported by the UE
- Control information associated with a highest modulation scheme supported by the UE
- Control information associated with a maximum number of beams supported by the UE
- Control information associated with a maximum number of layers supported by the UE
- Control information associated with channel state information (CSI) reporting supported by the UE
- Control information about whether the UE supports frequency hopping
- Control information associated with a bandwidth when carrier aggregation (CA) is supported
- Control information about whether cross-carrier scheduling is supported when CA is supported

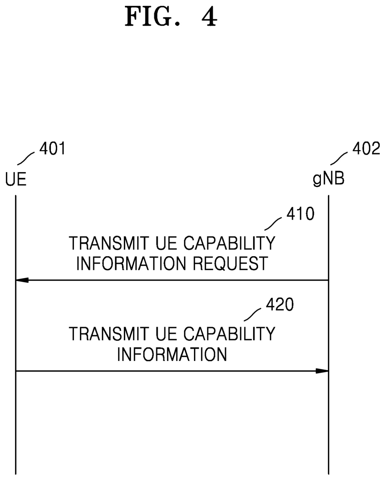

FIG. 4 illustrates a procedure in which a UE reports UE capability information to a gNB, according to an embodiment of the present disclosure.

Referring to FIG. 4, in operation 410, a gNB 402 may transmit a message of UE capability information request to a UE 401. In response to the UE capability information request from the gNB, the UE transmits UE capability information to the gNB.

A UE connected to the gNB through the above process may become a UE in an RRC_CONNECTED state, and the UE in the RRC_CONNECTED state may perform one-to-one communication with the gNB. On the other hand, a UE not connected to the gNB is in an RRC_IDLE state, and an operation of the UE in the RRC_IDLE state is classified as follows.

- To perform a UE-specific discontinuous reception (DRX) cycle configured by a higher layer
- To receive a paging message from a core network
- To obtain system information
- Measurement operation associated with neighboring cell and cell reselection

A UE in a new state referred to as RRC_INACTIVE is defined so as to reduce energy and time consumed for initial access by the UE in the 5G system. The UE in RRC_INACTIVE performs operations below, in addition to operations performed by the UE in RRC_IDLE.

- To store access stratum (AS) information required for cell access
- To perform a UE-specific DRX cycle operation configured by an RRC layer
- To configure and periodically update a radio access network (RAN)-based notification area (RNA) that may be used for handover by an RRC layer
- To monitor a RAN-based paging message transmitted through an inactive-radio network temporary identifier (I-RNTI)

Hereinafter, a scheduling method by which a BS transmits DL data to a UE or indicates UL data transmission performed by the UE will now be described.

Downlink control information (DCI) may be control information transmitted by the BS to the UE via a DL, and may include DL data scheduling information or UL data scheduling information for a certain UE. In general, the BS may independently channel-code DCI for each UE and then may transmit it to a corresponding UE via a physical downlink control channel (PDCCH) that is a physical control channel for DL.

The BS may apply and operate a predefined DCI format for a UE to be scheduled according to purposes such as whether DCI carries scheduling information for DL data (DL assignment), whether the DCI carries scheduling information for UL data (UL grant), or whether the DCI is DCI for power control.

The BS may transmit DL data to the UE via a physical downlink shared channel (PDSCH) that is a physical channel for DL data transmission. The BS may inform the UE of scheduling information, such as a specific mapping location of the PDSCH in the time-frequency domain, a modulation scheme, HARQ-associated control information, power control information, etc., via DCI related to DL data scheduling information among DCIs transmitted on the PDCCH.

The UE may transmit UL data to the BS via a physical uplink shared channel (PUSCH) that is a physical channel for UL data transmission. The BS may inform the UE of scheduling information, such as a specific mapping location of the PUSCH in the time-frequency domain, a modulation scheme, HARQ-associated control information, power control information, etc., via DCI related to UL data scheduling information among DCIs transmitted on the PDCCH.

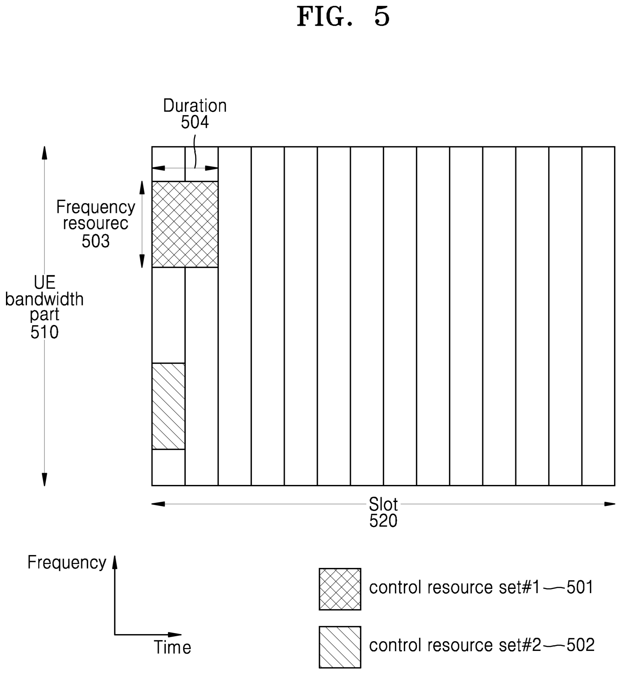

FIG. 5 illustrates a control resource set (CORESET), which is a time-frequency resource on which a PDCCH is mapped, according to an embodiment of the present disclosure.

Referring to FIG. 5, a UE bandwidth part (BWP) 510 may be configured in a frequency axis, and two control resource sets (a control resource set #1 501 and a control resource set #2 502) may be configured in one slot 520 in a time axis. The control resource sets 501 and 502 may be configured in a specific frequency resource 503 within the entire UE BWP 510 along the frequency axis. The control resource sets 501 and 502 may be configured with one or more OFDM symbols along the time axis and may be defined by a control resource set duration 504.

The control resource set #1 501 may be configured to have a control resource set duration of two symbols, and the control resource set #2 502 may be configured to have a control resource set duration of one symbol.

A BS may configure one or more CORESETs in a UE through higher layer signaling (e.g., system information, master information block (MIB), or radio resource control (RRC) signaling). When the CORESET is configured for the UE, it may mean that information such as a CORESET ID, a frequency location of the CORESET, and a symbol length of the CORESET is provided. A plurality of pieces of information provided from the BS to the UE so as to configure the CORESET may include at least some of information included in Table 4.

[Table 4]

```
ControlResourceSet ::=            SEQUENCE {
    controlResourceSetId          ControlResourceSetId,
    (CORESET identifier)
    frequencyDomainResources      BIT STRING (SIZE (45)),
    (Frequency domain resource)
    duration                      INTEGER (1..maxCoReSetDuration),
    (CORESET duration)
    cce-REG-MappingType           CHOICE {
    (CCE-to-REG mapping type)
        interleaved                   SEQUENCE {
            reg-BundleSize        ENUMERATED {n2, n3, n6},
            (REG bundle size)
            interleaverSize     ENUMERATED {n2, n3, n6},
            (Interleaver size)
            shiftIndex
INTEGER(0..maxNrofPhysicalResourceBlocks-1)        OPTIONAL -- Need S
            (Interleaver shift)
        },
        nonInterleaved                NULL
    },
    precoderGranularity           ENUMERATED {sameAsREG-bundle,
allContiguousRBs},
    (Precoding unit)
```

```
    tci-StatesPDCCH-ToAddList              SEQUENCE(SIZE  (1..maxNrofTCI-
StatesPDCCH)) OF TCI-StateId OPTIONAL, -- Cond NotSIB1-initialBWP
    (QCL configuration information)
    tci-StatesPDCCH-ToReleaseList          SEQUENCE(SIZE   (1..maxNrofTCI-
StatesPDCCH)) OF TCI-StateId OPTIONAL, -- Cond NotSIB1-initialBWP
    (QCL configuration information)
    tci-PresentInDCI                                      ENUMERATED  {enabled}
OPTIONAL, -- Need S
    (QCL indicator configuration information in DCI)
    pdcch-DMRS-ScramblingID                              INTEGER   (0..65535)
OPTIONAL, -- Need S
    (PDCCH DMRS scrambling identifier)


}
```

A CORESET may consist of $N_{RB}^{CORESET}$ RBs in a frequency domain and may consist of $N_{symb}^{CORESET} \in \{1,2,3\}$ symbols in a time domain. An NR PDCCH may consist of one or more control channel elements (CCEs). One CCE may include 6 resource element groups (REGs), and each REG may be defined as one reference block (RB) during one OFDM symbol. REGs in one CORESET may be indexed in a time-first manner, starting with 0 for a first OFDM symbol and a lowest-numbered RB in the CORESET.

An interleaving method and a non-interleaving method may be supported as a method of transmitting a PDCCH. A BS may configure whether to perform interleaving transmission or non-interleaving transmission for each CORESET in a UE through higher layer signaling. Interleaving may be performed in units of REG bundles. The term 'REG bundle' may be defined as a set of one or more REGs. The UE may determine a CCE-to-REG mapping method in the CORESET by using the following method as in Table 5 based on whether to perform interleaving or non-interleaving transmission configured from the BS.

[Table 5]

| |
|---|
| The CCE-to-REG mapping for a control-resource set can be interleaved or non-interleaved and is described by REG bundles: <br><br> - REG bundle $i$ is defined as REGs $\{iL,iL+1,...,iL+L-1\}$ where $L$ is the REG bundle size, <br><br> $i = 0,1,...,N_{REG}^{CORESET}/L - 1$, and $N_{REG}^{CORESET} = N_{RB}^{CORESET} N_{symb}^{CORESET}$ is the number of REGs in the CORESET <br><br> - CCE $j$ consists of REG bundles $\{f(6j/L), f(6j/L+1),...,f(6j/L+6/L-1)\}$ **where** $f(\cdot)$ **is** an interleaver <br> For non-interleaved CCE-to-REG mapping, L = 6 and $f(x) = x$. <br><br> For interleaved CCE-to-REG mapping, $L \in \{2,6\}$ for $N_{symb}^{CORESET} = 1$ and $L \in \{N_{symb}^{CORESET},6\}$ for <br><br> $N_{symb}^{CORESET} \in \{2,3\}$. The interleaver is defined by <br><br> $$f(x) = (rC + c + n_{shift}) \bmod (N_{REG}^{CORESET}/L)$$ <br> $$x = cR + r$$ <br> $$r = 0,1,...,R-1$$ |

(continued)

| |
|---|
| $c = 0, 1, \ldots, C - 1$ |
| $$C = N_{\text{REG}}^{\text{CORESET}} / (LR)$$ |

where $R \in \{2, 3, 6\}$.

The BS may inform, by signaling, the UE of information about a symbol to which a PDCCH is mapped within a slot, configuration information such as transmission periodicity, or the like.

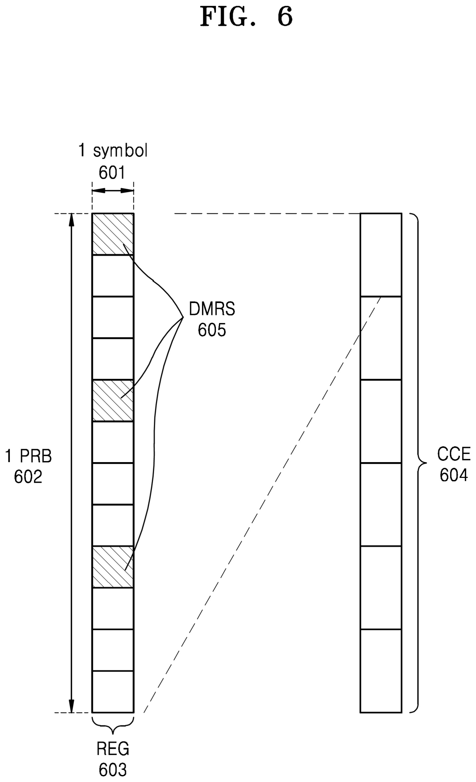

FIG. 6 illustrates mapping between DCI and a demodulation reference signal (DMRS) in an REG, which is a basic unit of a DL control channel, according to an embodiment of the present disclosure.

Referring to FIG. 6, a basic unit of a DL control channel, that is, an REG 603, may include both of REs to which DCI is mapped and regions to which a DMRS 605, which is a reference signal for decoding the DCI, is mapped. Also, three DMRSs 605 may be transmitted in one REG 603.

Hereinafter, a search space of a PDCCH will be described. The number of CCEs required to transmit the PDCCH may be 1, 2, 4, 8, or 16 depending on an aggregation level (AL), and different numbers of CCEs may be used to implement link adaptation of the DL control channel. For example, when AL=L, one DL control channel may be transmitted in L CCEs. The UE performs blind decoding to detect a signal without knowing information about the DL control channel, and thus, a search space representing a set of CCEs may be defined for the blind decoding. The search space is a set of DL control channel candidates including CCEs that the UE has to attempt to decode on a given ALA, and because there are various ALs that make 1, 2, 4, 8, or 16 CCEs into one bundle, the UE may have a plurality of search spaces. A search space set may be defined as a set of search spaces at all the configured ALs.

The search spaces may be classified into a common search space (CSS) and a UE-specific search space (USS). A certain group of UEs or all the UEs may monitor a common search space of the PDCCH so as to receive dynamic scheduling of system information (system information block (SIB)) or receive cell-common control information such as a paging message. For example, the UE may monitor a CSS of the PDCCH so as to receive PDSCH scheduling allocation information for receiving system information. Because a certain group of UEs or all the UEs need to receive the PDCCH, the common search space may be defined as a set of predefined CCEs. The UE may receive UE-specific PDSCH or PUSCH scheduling allocation information by monitoring a USS of the PDCCH. The USS may be UE-specifically defined as a function of various system parameters and an ID of the UE.

A BS may configure a UE with configuration information about a search space of a PDCCH by higher layer signaling (e.g., SIB, MIB, or RRC signaling). For example, the BS may configure the UE with the number of PDCCH candidates at each aggregation level L, a monitoring periodicity for the search space, a monitoring occasion in units of symbols within a slot for the search space, a search space type (CSS or USS), a combination of a DCI format to be monitored in the search space and a radio network temporary identifier (RNTI), a CORESET index for monitoring the search space, or the like. For example, a parameter with respect to the search space of the PDCCH may include a plurality of pieces of information as in Table 6 below.

[Table 6]

| |
|---|
| SearchSpace ::=                   SEQUENCE { |
|     searchSpaceId                   SearchSpaceId, |

(search space identifier)

controlResourceSetId ControlResourceSetId OPTIONAL, -- Cond SetupOnly

(CORESET identifier)

monitoringSlotPeriodicityAndOffset CHOICE {

(Monitoring slot level periodicity and offset)

| | |
|---|---|
| sl1 | NULL, |
| sl2 | INTEGER (0..1), |
| sl4 | INTEGER (0..3), |
| sl5 | INTEGER (0..4), |
| sl8 | INTEGER (0..7), |
| sl10 | INTEGER (0..9), |
| sl16 | INTEGER (0..15), |
| sl20 | INTEGER (0..19), |
| sl40 | INTEGER (0..39), |
| sl80 | INTEGER (0..79), |
| sl160 | INTEGER (0..159), |
| sl320 | INTEGER (0..319), |
| sl640 | INTEGER (0..639), |
| sl1280 | INTEGER (0..1279), |
| sl2560 | INTEGER (0..2559) |

}

OPTIONAL, -- Cond Setup

duration INTEGER (2..2559) OPTIONAL, -- Need R

(Monitoring duration)

```
        monitoringSymbolsWithinSlot                    BIT  STRING  (SIZE  (14))
OPTIONAL,    -- Cond Setup
    (Monitoring symbol position within slot)
    nrofCandidates                    SEQUENCE {
    (Number of PDCCH candidates for each aggregation level)
        aggregationLevel1                ENUMERATED {n0, n1, n2, n3,
n4, n5, n6, n8},
        aggregationLevel2                ENUMERATED {n0, n1, n2, n3,
n4, n5, n6, n8},
        aggregationLevel4                ENUMERATED {n0, n1, n2, n3,
n4, n5, n6, n8},
        aggregationLevel8                ENUMERATED {n0, n1, n2, n3,
n4, n5, n6, n8},
        aggregationLevel16               ENUMERATED {n0, n1, n2, n3,
n4, n5, n6, n8}
        }
OPTIONAL,    -- Cond Setup
    searchSpaceType                    CHOICE {
    (Search space type)
        common                         SEQUENCE {
        (Common search space)
            dci-Format0-0-AndFormat1-0        SEQUENCE {
                ...
            }
OPTIONAL,    -- Need R
            dci-Format2-0                SEQUENCE {
                nrofCandidates-SFI              SEQUENCE {
```

```
                    aggregationLevel1                ENUMERATED {n1,
n2}      OPTIONAL,     -- Need R
                    aggregationLevel2                ENUMERATED {n1,
n2}      OPTIONAL,     -- Need R
                    aggregationLevel4                ENUMERATED {n1,
n2}      OPTIONAL,     -- Need R
                    aggregationLevel8                ENUMERATED {n1,
n2}      OPTIONAL,     -- Need R
                    aggregationLevel16               ENUMERATED {n1,
n2}      OPTIONAL      -- Need R
                  },
                  ...
                }
OPTIONAL,    -- Need R
          dci-Format2-1              SEQUENCE {
                  ...
                }
OPTIONAL,    -- Need R
          dci-Format2-2              SEQUENCE {
                  ...
                }
OPTIONAL,    -- Need R
          dci-Format2-3              SEQUENCE {
                  dummy1                       ENUMERATED {sl1,
sl2, sl4, sl5, sl8, sl10, sl16, sl20}    OPTIONAL,    -- Cond Setup
                  dummy2                       ENUMERATED {n1,
n2},
```

```
                    ...
              }
OPTIONAL      -- Need R
          },
          ue-Specific                        SEQUENCE {
        (UE-specific search space)
              dci-Formats                              ENUMERATED
{formats0-0-And-1-0, formats0-1-And-1-1},
              ...,


          }
      }
OPTIONAL       -- Cond Setup2
}
```

According to the configuration information, the BS may configure one or more search space sets in the UE. According to some embodiments, the BS may configure a search space set 1 and a search space set 2 in the UE. The BS may configure the UE to monitor DCI format A scrambled by an X-RNTI in the search space set 1 in the CSS and to monitor DCI format B scrambled by a Y-RNTI in the search space set 2 in the USS.

According to configuration information, the CSS or the USS may include one or more search space sets. For example, search space set #1 and search space set #2 may be configured as the CSS, and search space set #3 and search space set #4 may be configured as the USS.

In the CSS, the UE may monitor combinations of DCI formats and RNTIs below. However, the present disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI
- DCI format 2_4 with CRC scrambled by CI-RNTI
- DCI format 2_5 with CRC scrambled by AI-RNTI
- DCI format 2_6 with CRC scrambled by PS-RNTI
- DCI format 2_7 with CRC scrambled by PEI-RNTI

In the USS, the UE may monitor combinations of DCI formats and RNTIs below. However, the present disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The RNTIs may follow definitions and purposes below.

Cell RNTI (C-RNTI): For scheduling UE-specific PDSCH or PUSCH

Temporary Cell RNTI (TC-RNTI): For scheduling UE-specific PDSCH
Configured scheduling RNTI (CS-RNTI): For scheduling semi-statically configured UE-specific PDSCH
Random Access RNTI (RA-RNTI): For scheduling PDSCH during random access
Paging RNTI (P-RNTI): For scheduling PDSCH where paging is transmitted
System Information RNTI (SI-RNTI): For scheduling PDSCH where system information is transmitted
Interruption RNTI (INT-RNTI): For notifying whether PDSCH is punctured
Transmit Power Control for PUSCH RNTI (TPC-PUSCH-RNTI): For indicating power control command for PUSCH
Transmit Power Control for PUCCH RNTI (TPC-PUCCH-RNTI): For indicating power control command for PUCCH
Transmit Power Control for SRS RNTI (TPC-SRS-RNTI): For indicating power control command for SRS
The DCI formats described above may follow definitions as in Table 7 below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying paging early indication and TRS availability indication for one or more UEs. |
| 3_0 | Scheduling of NR sidelink in one cell |
| 3_1 | Scheduling of LTE sidelink in one cell |
| 4_0 | Schedulng of PDSCH with CRC scrambled by MCCH-RNTI/G-RNTI for broadcast |
| 4_1 | Schedulng of PDSCH with CRC scrambled by G-RNTI/GCS-RNTI for multicast |
| 4_2 | Schedulng of PDSCH with CRC scrambled by G-RNTI/GCS-RNTI for multicast |

A search space at an aggregation level L with a CORESET p and a search space set s may be represented as in Equation 1 below.

[Equation 1]

$$L \cdot \left\{ \left( Y_{p,n_{s,f}^{\mu}} + \left\lfloor \frac{m_{s,n_{CI}} \cdot N_{\mathrm{CCE},p}}{L \cdot M_{p,s,\mathrm{max}}^{(L)}} \right\rfloor + n_{CI} \right) \bmod \left\lfloor N_{\mathrm{CCE},p}/L \right\rfloor \right\} + i$$

- L: aggregation level
- $n_{CI}$: carrier index
- $N_{\mathrm{CCE},p}$: the total number of CCEs in control resource set p
- $n_{s,f}^{\mu}$: slot index

- $M^{(L)}_{p,s,max}$: the number of PDCCH candidates of aggregation level L
- $m_{snCI} = 0, ... , M^{(L)}_{p,s,max} -1$: indexes of PDCCH candidates of aggregation level L
- i = 0, ..., L-1

- $Y_{p,n^{\mu}_{s,f}} = \left(A_p \cdot Y_{p,n^{\mu}_{s,f}-1}\right) \bmod D$ , $Y_{p-1} = n_{RNTI} \neq 0$, $A_0 = 39827$, $A_1 = 39829$, $A_2 = 39839$, D = 65537

- $n_{RNTI}$: UE ID

Value of $Y_{p,n^{\mu}_{s,f}}$ may correspond to 0 in a CSS.

Value of $Y_{p,n^{\mu}_{s,f}}$ may correspond to a value that changes according to a UE Identity (C-RNTI or ID configured by the BS for the UE) and a time index in a USS.

A method of configuring a transmission configuration indication (TCI) state for a PDCCH (or PDCCH DMRS) in a 5G communication system will be described in detail.

The BS may configure and indicate a TCI state for a PDCCH (or PDCCH DMRS) through appropriate signaling. According to the description, the BS may configure and indicate a TCI state for a PDCCH (or PDCCH DMRS) through appropriate signaling. The TCI state is used to indicate a quasi co-location (QCL) relationship between a PDCCH (or PDCCH DMRS) and another RS (or channel), and when a reference antenna port A (reference RS #A) and another target antenna port B (target RS #B) are QCLed, it means that the UE is allowed to apply some or all of large-scale channel parameters estimated from antenna port A to channel measurement from antenna port B. QCL may require different parameters to be associated with one another according to situations including 1) time tracking affected by average delay and delay spread, 2) frequency tracking affected by Doppler shift and Doppler spread, 3) radio resource management (RRM) affected by average gain, and 4) beam management (BM) affected by a spatial parameter. Accordingly, NR supports four types of QCL relationships as shown in Table 8.

[Table 8]

| QCL type | Large-scale characteristics |
| --- | --- |
| A | Doppler shift, Doppler spread, average delay, delay spread |
| B | Doppler shift, Doppler spread |
| C | Doppler shift, average delay |
| D | Spatial Rx parameter |

The spatial Rx parameter may be a generic term for all or some of various parameters including angle of arrival (AoA), power angular spectrum (PAS) of AoA, angle of departure (AoD), PAS of AoD, transmit/receive channel correlation, transmit/receive beamforming, and spatial channel correlation.

The QCL relationships may be configured in the UE through an RRC parameter TCI-State and QCL-Info as shown in Table 9. Referring to Table 9, the BS may configure at least one TCI state in the UE to notify the UE of up to two QCL relationships (qcl-Type1 and qcl-Type2) relating to an RS referring to an ID of the TCI state, that is, a target RS. In this case, each QCL information (QCL-Info) included in each TCI state includes a serving cell index and a BWP index of a reference RS indicated by the QCL information, a type and an ID of the reference RS, and a QCL type as shown in Table 8.

[Table 9]

| | |
|---|---|
| TCI-State ::= | SEQUENCE { |
| tci-StateId | TCI-StateId, |
| (ID of TCI state) | |
| qcl-Type1 | QCL-Info, |
| (QCL information of first reference RS of RS (target RS) referring to TCI state ID) | |
| qcl-Type2 | QCL-Info | OPTIONAL, -- Need R |

```
    (QCL information of second reference RS of RS (target RS) referring to
TCI state ID)

    ...

}


QCL-Info ::=                SEQUENCE {
    cell                   ServCellIndex           OPTIONAL,

    (serving cell index of reference RS indicated by QCL information)
    bwp-Id                 BWP-Id                  OPTIONAL,

    (BWP index of reference RS indicated by QCL information)
    referenceSignal        CHOICE {
        csi-rs             NZP-CSI-RS-ResourceId,
        ssb                SSB-Index
        (one of CSI-RS ID or SSB ID indicated by QCL information)
    },
    qcl-Type               ENUMERATED  {typeA,  typeB,  typeC,
typeD},

    ...

}
```

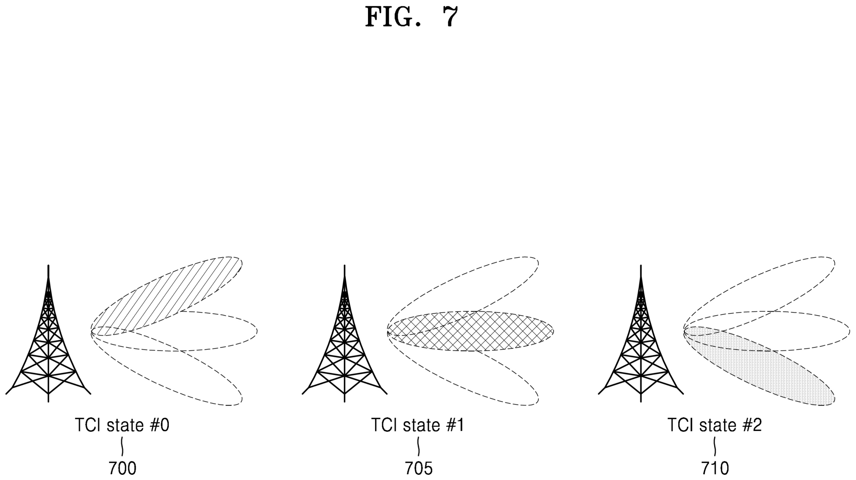

FIG. 7 illustrates beam allocation by a BS according to TCI state configuration, according to an embodiment of the present disclosure.

Referring to FIG. 7, a BS may transmit information about N different beams to a UE through N different TCI states. For example, when N is 3, the BS may configure qcl-Type 2 parameters included in three TCI states 700, 705, and 710 to be associated with CSI-RSs or SSBs corresponding to different beams and to be set to QCL type D, so as to notify that antenna ports referring to the different TCI states 700, 705, and 710 are associated with different spatial Rx parameters, that is, different beams.

Specifically, a combination of TCI states applicable to a PDCCH DMRS antenna port is as shown in Table 10 below. In Table 10, a combination in a fourth row is assumed by the UE before RRC configuration, and configuration after RRC is not possible.

[Table 10]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

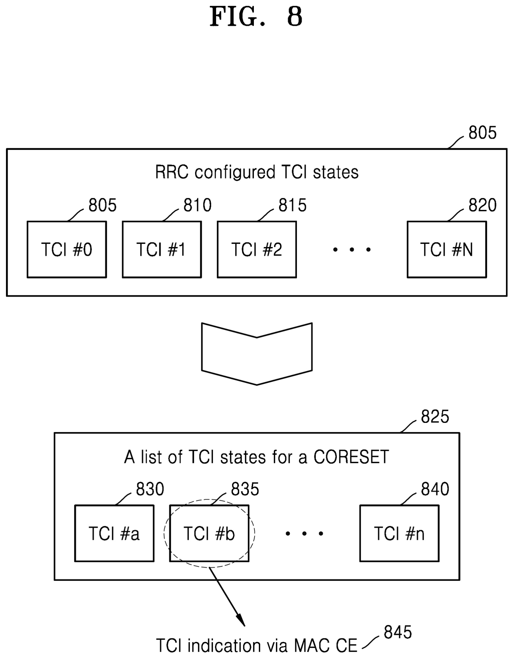

In NR, a hierarchical signaling method as shown in FIG. 8 is supported for dynamic allocation of PDCCH beams.

FIG. 8 illustrates a hierarchical signaling method for dynamic allocation of PDCCH beams in NR, according to an embodiment of the present disclosure.

Referring to FIG. 8, a BS may configure N TCI states 805, 810, . . . , and 820 for a UE via RRC signaling 800, and may configure some of the TCI states as TCI states for a CORESET (825). Thereafter, the BS may indicate one of the TCI states 830, 835, ... , and 840 for the CORESET to the UE via MAC CE signaling (845). Thereafter, the UE receives a PDCCH based on beam information included in the TCI state indicated by the MAC CE signaling.

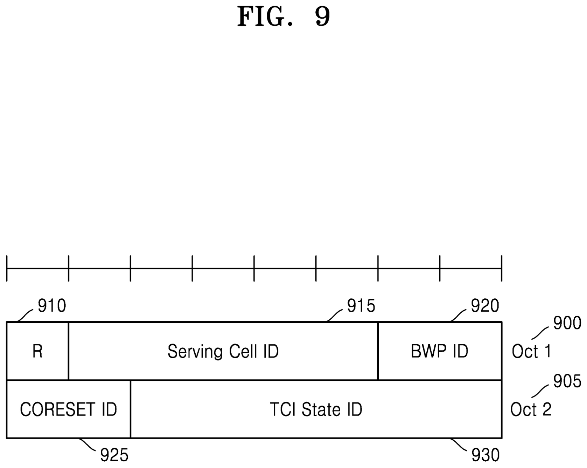

FIG. 9 illustrates a TCI indication MAC CE signaling structure for a PDCCH DMRS, according to an embodiment of the present disclosure.

Referring to FIG. 9, the TCI indication MAC CE signaling for the PDCCH DMRS consists of 2 bytes (16 bits), and includes a reserved field 910 of 1 bit, a serving cell ID 915 of 5 bits, a BWP ID 920 of 2 bits, a CORESET ID 925 of 2 bits, and a TCI state ID 930 of 6 bits.

A BS may indicate a TCI state in a TCI state list included in CORESET configuration through MAC CE signaling. Next, until another TCI state is indicated for the CORESET through another MAC CE signaling, a UE considers that the same QCL information is applied to all of one or more search spaces connected to the CORESET.

The above-described PDCCH beam allocation method has a problem in that it is difficult to indicate beam switching faster than MAC CE signaling delay, and the same beam is uniformly applied to each CORESET regardless of search space characteristics, thereby making flexible PDCCH beam operation difficult. Hereinafter, an embodiment of the present disclosure provides a more flexible PDCCH beam configuration and operation method. Although multiple distinct examples will be provided for convenience of description of embodiments of the present disclosure, the examples are not mutually exclusive and may be applied in an appropriate combination according to a situation.

The BS may configure the UE with one or multiple TCI states for a specific control resource set, and may activate one of the configured TCI states through a MAC CE activation command. For example, TCI states {TCI state #0, TCI state #1, and TCI state #2} may be configured for control resource set #1, the BS may transmit, to the UE, an activation command through MAC CE to assume TCI state #0 as the TCI state for control resource set #1. Based on the activation command for the TCI state received through the MAC CE, the UE may correctly receive a DMRS of the corresponding control resource set, based on QCL information in the activated TCI state.

When the UE fails to receive the MAC CE activation command for a TCI state for a CORESET indexed with 0 (i.e., the CORESET #0), the UE may assume that a DMRS transmitted in CORESET #0 is QCLed with an SS/PBCH block (SSB) identified in an initial access procedure or in a non-contention based random access procedure that is not triggered by a PDCCH command.

With respect to a CORESET (CORESET #X) configured with a different index value (X) instead of index 0, when the UE is not configured with a TCI state for the CORESET #X or is configured with one or more TCI states but fails to receive the MAC CE activation command for activating one of the configured one or more TCI states, the UE may assume that a DMRS transmitted in CORESET #X is QCLed with an SS/PBCH block identified in an initial access procedure.

Downlink control information (DCI) in a 5G system will now be described in detail.

In the 5G system, scheduling information for UL data (or PUSCH) or DL data (or PDSCH) may be transmitted in the DCI from the BS to the UE. The UE may monitor a fallback DCI format and a non-fallback DCI format for PUSCH or PDSCH. The fallback DCI format may include a fixed field predefined between the BS and the UE, and the non-fallback DCI format may include a configurable field.

DCI may be transmitted on a physical downlink control channel (PDCCH) after channel coding and modulation processes. Cyclic redundancy check (CRC) may be added to a DCI message payload, and the CRC may be scrambled by a radio network temporary identifier (RNTI) that corresponds to an ID of the UE. Depending on a purpose of the DCI message, e.g., UE-specific data transmission, power control command, random access response, or the like, different RNTIs may be used. That is, the RNTI may not be explicitly transmitted but may be transmitted in a CRC calculation process. Upon reception of a DCI message transmitted on the PDCCH, the UE may check CRC by using an allocated RNTI, and may identify that the DCI message is transmitted to the UE, based on a result of the CRC checking.

For example, DCI that schedules a PDSCH for system information (SI) may be scrambled by an SI-RNTI. DCI that schedules a PDSCH for a random access response (RAR) message may be scrambled by an RA-RNTI. DCI that schedules a PDSCH for a paging message may be scrambled by a P-RNTI. DCI that notifies a slot format indicator (SFI) may be scrambled by an SFI-RNTI. DCI that notifies a transmit power control (TPC) may be scrambled by a TPC-RNTI. DCI that schedules UE-specific PDSCH or PUSCH may be scrambled by a Cell RNTI (C-RNTI).

DCI format 0_0 may be used for the fallback DCI that schedules a PUSCH, and here, the CRC may be scrambled by a C-RNTI. The DCI format 0_0 with the CRC scrambled by the C-RNTI may include a plurality of pieces of information shown in Table 11 below.

[Table 11]

- Identifier for DCI formats - 1 bit
  - The value of this bit field is always set to 0, indicating an UL DCI format

- Frequency domain resource assignment - $\left\lceil \log_2(N_{RB}^{UL,BWP}(N_{RB}^{UL,BWP}+1)/2) \right\rceil$ bits where $N_{RB}^{UL,BWP}$ is defined in subclause 7.3.1.0
  - For PUSCH hopping with resource allocation type 1:

    - $N_{UL\_hop}$ MSB bits are used to indicate the frequency offset according to Subclause 6.3 of [6, TS 38.214], where $N_{UL\_hop}$ = 1 if the higher layer parameter *frequencyHoppingOffsetLists* contains two offset values and $N_{UL\_hop}$ = 2 if the higher layer parameter *frequencyHoppingOffsetLists* contains four offset values

    - $\left\lceil \log_2(N_{RB}^{UL,BWP}(N_{RB}^{UL,BWP}+1)/2) \right\rceil - N_{UL\_hop}$ bits provides the frequency domain resource allocation according to Subclause 6.1.2.2.2 of [6, TS 38.214]

  - For non-PUSCH hopping with resource allocation type 1:

    - $\left\lceil \log_2(N_{RB}^{UL,BWP}(N_{RB}^{UL,BWP}+1)/2) \right\rceil$ bits provides the frequency domain resource allocation according to Subclause 6.1.2.2.2 of [6, TS 38.214]

- Time domain resource assignment - 4 bits as defined in Subclause 6.1.2.1 of [6, TS 38.214]
- Frequency hopping flag - 1 bit according to Table 7.3.1.1.1-3, as defined in Subclause 6.3 of [6, TS 38.214]
- Modulation and coding scheme - 5 bits as defined in Subclause 6.1.4.1 of [6, TS 38.214]
- New data indicator - 1 bit
- Redundancy version - 2 bits as defined in Table 7.3.1.1.1-2
- HARQ process number - 4 bits
- TPC command for scheduled PUSCH - 2 bits as defined in Subclause 7.1.1 of [5, TS 38.213]
- Padding bits, if required.
- UL/SUL indicator - 1 bit for UEs configured with *supplementary Uplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s).
  - If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured;

| - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured.<br>- If the UL/SUL indicator is not present in DCI format 0_0 and *pucch-Config* is not configured, the corresponding PUSCH scheduled by the DCI format 0_0 is for the uplink on which the latest PRACH is transmitted. |
| --- |

DCI format 0_1 may be used for the non-fallback DCI that schedules a PUSCH, and here, the CRC may be scrambled by a C-RNTI. The DCI format 0_1 with the CRC scrambled by the C-RNTI may include a plurality of pieces of information shown in Table 12 below.

[Table 12]

| - Identifier for DCI formats - 1 bit<br>    - The value of this bit field is always set to 0, indicating an UL DCI format<br>- Carrier indicator - 0 or 3 bits, as defined in Subclause 10.1 of [5, TS38.213].<br>- UL/SUL indicator - 0 bit for UEs not configured with *supplementaryUplink* in *ServingCellConfig* in the cell or UEs configured with *supplementaryUplink* in *ServingCellConfig* in the cell but only PUCCH carrier in the cell is configured for PUSCH transmission; otherwise, 1 bit as defined in Table 7.3.1.1.1-1.<br>- Bandwidth part indicator - 0, 1 or 2 bits as determined by the number of UL BWPs $n_{\mathrm{BWP,RRC}}$ configured by higher layers, excluding the initial UL bandwidth part. The bitwidth for this field is determined as $\lceil \log_2(n_{\mathrm{BWP}}) \rceil$ bits, where<br>    - $n_{\mathrm{BWP}} = n_{\mathrm{BWP,RRC}} + 1$ if $n_{\mathrm{BWP,RRC}} \leq 3$, in which case the bandwidth part indicator is equivalent to the ascending order of the higher layer parameter *BWP-Id;*<br>    - otherwise $n_{\mathrm{BWP}} = n_{\mathrm{BWP,RRC}}$, in which case the bandwidth part indicator is defined in Table 7.3.1.1.2-1;<br>    If a UE does not support active BWP change via DCI, the UE ignores this bit field.<br><br>- Frequency domain resource assignment - number of bits determined by the following, where $N_{\mathrm{RB}}^{\mathrm{UL,BWP}}$ is the size of the active UL bandwidth part:<br>    - $N_{\mathrm{RBG}}$ bits if only resource allocation type 0 is configured, where $N_{\mathrm{RBG}}$ is defined in Subclause 6.1.2.2.1 of [6, TS 38.214],<br>    - $\lceil \log_2(N_{\mathrm{RB}}^{\mathrm{UL,BWP}}(N_{\mathrm{RB}}^{\mathrm{UL,BWP}}+1)/2) \rceil$ bits if only resource allocation type 1 is configured, or<br>    $\max\left( \lceil \log_2(N_{\mathrm{RB}}^{\mathrm{UL,BWP}}(N_{\mathrm{RB}}^{\mathrm{UL,BWP}}+1)/2) \rceil, N_{\mathrm{RBG}} \right)+1$ bits if both resource allocation type 0 and 1 are configured.<br>    - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.<br>- For resource allocation type 0, the $N_{\mathrm{RBG}}$ LSBs provide the resource allocation as defined in Subclause 6.1.2.2.1 of [6, TS 38.214].<br><br>- For resource allocation type 1, the $\lceil \log_2(N_{\mathrm{RB}}^{\mathrm{UL,BWP}}(N_{\mathrm{RB}}^{\mathrm{UL,BWP}}+1)/2) \rceil$ LSBs provide the resource allocation as follows:<br>    - For PUSCH hopping with resource allocation type 1:<br>        - $N_{\mathrm{UL\_hop}}$ MSB bits are used to indicate the frequency offset according to Subclause 6.3 of [6, TS 38.214], where $N_{\mathrm{UL\_hop}} = 1$ if the higher layer parameter *frequencyHoppingOffsetLists* contains two offset values and $N_{\mathrm{UL\_hop}} = 2$ if the higher layer parameter *frequencyHoppingOffsetLists* contains four offset values |
| --- |

(continued)

- $\left\lceil \log_2(N_{\mathrm{RB}}^{\mathrm{UL,BWP}}(N_{\mathrm{RB}}^{\mathrm{UL,BWP}}+1)/2) \right\rceil - N_{\mathrm{UL\_hop}}$ bits provides the frequency domain resource allocation according to Subclause 6.1.2.2 of [6, TS 38.214]

- For non-PUSCH hopping with resource allocation type 1:

- $\left\lceil \log_2(N_{\mathrm{RB}}^{\mathrm{UL,BWP}}(N_{\mathrm{RB}}^{\mathrm{UL,BWP}}+1)/2) \right\rceil$ bits provides the frequency domain resource allocation according to Subclause 6.1.2.2 of [6, TS 38.214]

If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment - 0, 1, 2, 3, or 4 bits as defined in Subclause 6.1.2.1 of [6, TS38.214]. The bitwidth for this field is determined as $\left\lceil \log_2(I) \right\rceil$ bits, where I is the number of entries in the higher layer parameter *pusch-TimeDomainAllocationList* if the higher layer parameter is configured; otherwise *I* is the number of entries in the default table.

- Frequency hopping flag - 0 or 1 bit:
    - 0 bit if only resource allocation type 0 is configured or if the higher layer parameter *frequencyHopping* is not configured;
    - 1 bit according to Table 7.3.1.1.1-3 otherwise, only applicable to resource allocation type 1, as defined in Subclause 6.3 of [6, TS 38.214].

- Modulation and coding scheme - 5 bits as defined in Subclause 6.1.4.1 of [6, TS 38.214]

- New data indicator - 1 bit

- Redundancy version - 2 bits as defined in Table 7.3.1.1.1-2

- HARQ process number - 4 bits

- 1st downlink assignment index - 1 or 2 bits:
    - 1 bit for semi-static HARQ-ACK codebook;
    - 2 bits for dynamic HARQ-ACK codebook.

- 2nd downlink assignment index - 0 or 2 bits:
    - 2 bits for dynamic HARQ-ACK codebook with two HARQ-ACK sub-codebooks;
    - 0 bit otherwise.

- TPC command for scheduled PUSCH - 2 bits as defined in Subclause 7.1.1 of [5, TS38.213]

- SRS resource indicator $\left\lceil \log_2\left( \sum_{k=1}^{\min\{L_{\max}, N_{\mathrm{SRS}}\}} \binom{N_{\mathrm{SRS}}}{k} \right) \right\rceil$ or $\left\lceil \log_2(N_{\mathrm{SRS}}) \right\rceil$ bits, where $N_{\mathrm{SRS}}$ is the number of configured SRS resources in the SRS resource set associated with the higher layer parameter *usage* of value *'codeBook'* or *'nonCodeBook'*,

- $\left\lceil \log_2\left( \sum_{k=1}^{\min\{L_{\max}, N_{\mathrm{SRS}}\}} \binom{N_{\mathrm{SRS}}}{k} \right) \right\rceil$ bits according to Tables 7.3.1.1.2-28/29/30/31 if the higher layer parameter *txConfig = nonCodebook,* where $N_{\mathrm{SRS}}$ is the number of configured SRS resources in the SRS resource set associated with the higher layer parameter *usage* of value *'nonCodeBook'* and

    - if UE supports operation with *maxMIMO-Layers* and the higher layer parameter *maxMIMO-Layers* of *PUSCH-ServingCellConfig* of the serving cell is configured, $L_{max}$ is given by that parameter
    - otherwise, $L_{max}$ is given by the maximum number of layers for PUSCH supported by the UE for the serving cell for non-codebook based operation.

- $\left\lceil \log_2(N_{\mathrm{SRS}}) \right\rceil$ bits according to Tables 7.3.1.1.2-32 if the higher layer parameter *txConfig = codebook,* where $N_{\mathrm{SRS}}$ is the number of configured SRS resources in the SRS resource set associated with the higher layer parameter *usage* of value *'codeBook'*.

(continued)

- Precoding information and number of layers - number of bits determined by the following:

 - 0 bits if the higher layer parameter *txConfig = nonCodeBook;*

 - 0 bits for 1 antenna port and if the higher layer parameter *txConfig = codebook;*

 - 4, 5, or 6 bits according to Table 7.3.1.1.2-2 for 4 antenna ports, if *txConfig = codebook,* and according to whether transform precoder is enabled or disabled, and the values of higher layer parameters *maxRank,* and *codebookSubset;*

 - 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset;*

 - 2 or 4 bits according to Table7.3.1.1.2-4 for 2 antenna ports, if *txConfig = codebook,* and according to whether transform precoder is enabled or disabled, and the values of higher layer parameters *maxRank* and *codebookSubset*;

 - 1 or 3 bits according to Table7.3.1.1.2-5 for 2 antenna ports, if *txConfig = codebook,* and according to whether transform precoder is enabled or disabled, and the values of higher layer parameters *maxRank* and *codebookSubset.*

- Antenna ports - number of bits determined by the following

 - 2 bits as defined by Tables 7.3.1.1.2-6, if transform precoder is enabled, *dmrs-Type*=1, and *maxLength*=1;

 - 4 bits as defined by Tables 7.3.1.1.2-7, if transform precoder is enabled, *dmrs-Type*=1, and *maxLength*=2;

 - 3 bits as defined by Tables 7.3.1.1.2-8/9/10/11, if transform precoder is disabled, *dmrs-Type=1,* and *maxLength*=1, and the value of rank is determined according to the SRS resource indicator field if the higher layer parameter *txConfig = nonCodebook* and according to the Precoding information and number of layers field if the higher layer parameter *txConfig = codebook;*

 - 4 bits as defined by Tables 7.3.1.1.2-12/13/14/15, if transform precoder is disabled, *dmrs-Type*=1, and *maxLength*=2, and the value of rank is determined according to the SRS resource indicator field if the higher layer parameter *txConfig = nonCodebook* and according to the Precoding information and number of layers field if the higher layer parameter *txConfig = codebook;*

 - 4 bits as defined by Tables 7.3.1.1.2-16/17/18/19, if transform precoder is disabled, *dmrs-Type=2,* and *maxLength*=1, and the value of rank is determined according to the SRS resource indicator field if the higher layer parameter *txConfig = nonCodebook* and according to the Precoding information and number of layers field if the higher layer parameter *txConfig = codebook;*

 - 5 bits as defined by Tables 7.3.1.1.2-20/21/22/23, if transform precoder is disabled, *dmrs-Type=2,* and *maxLength*=2, and the value of rank is determined according to the SRS resource indicator field if the higher layer parameter *txConfig = nonCodebook* and according to the Precoding information and number of layers field if the higher layer parameter *txConfig = codebook.*

 where the number of CDM groups without data of values 1, 2, and 3 in Tables 7.3.1.1.2-6 to 7.3.1.1.2-23 refers to CDM groups {0}, {0,1}, and {0, 1,2} respectively.

 If a UE is configured with both *dmrs-UplinkForPUSCH-MappingTypeA* and *dmrs-UplinkForPUSCH-MappingTypeB,* the bitwidth of this field equals max{$x_A$,$x_B$}, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB*. A number of $|x_A - x_B|$ zeros are padded in the MSB of this field, if the mapping type of the PUSCH corresponds to the smaller value of $x_A$ and $x_B$.

- SRS request - 2 bits as defined by Table 7.3.1.1.2-24 for UEs not configured with *supplementary Uplink* in *ServingCellConfig* in the cell; 3 bits for UEs configured with *supplementary Uplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CSI request - 0, 1, 2, 3, 4, 5, or 6 bits determined by higher layer parameter *reportTriggerSize.*

- CBG transmission information (CBGTI) - 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH.

- PTRS-DMRS association - number of bits determined as follows

 - 0 bit if *PTRS-UplinkConfig* is not configured and transform precoder is disabled, or if transform precoder is enabled, or if *maxRank=1;*

(continued)

- 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field.

If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.

- beta_offset indicator - 0 if the higher layer parameter *betaOffsets* = *semiStatic;* otherwise 2 bits as defined by Table 9.3-3 in [5, TS 38.213].

- DMRS sequence initialization - 0 bit if transform precoder is enabled; 1 bit if transform precoder is disabled.

- UL-SCH indicator - 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a UE is not expected to receive a DCI format 0_1 with UL-SCH indicator of "0" and CSI request of all zero(s).

DCI format 1_0 may be used for the fallback DCI that schedules a PDSCH, and here, the CRC may be scrambled by a C-RNTI. The DCI format 1_0 with the CRC scrambled by the C-RNTI may include a plurality of pieces of information shown in Table 13 below.

[Table 13]

- Identifier for DCI formats - 1 bits
        - The value of this bit field is always set to 1, indicating a DL DCI format

- Frequency domain resource assignment - $\left\lceil \log_2 (N_{\mathrm{RB}}^{\mathrm{DL,BWP}} (N_{\mathrm{RB}}^{\mathrm{DL,BWP}} + 1)/2) \right\rceil$ bits where $N_{\mathrm{RB}}^{\mathrm{DL,BWP}}$ is given by subclause 7.3.1.0

If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows:

- Random Access Preamble index - 6 bits according to *ra-PreambleIndex* in Subclause 5.1.2 of [8, TS38.321]

- UL/SUL indicator - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved

- SS/PBCH index - 6 bits. If the value of the "Random Access Preamble index" is not all zeros, this field indicates the SS/PBCH that shall be used to determine the RACH occasion for the PRACH transmission; otherwise, this field is reserved.

- PRACH Mask index - 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved

- Reserved bits - 10 bits

Otherwise, all remaining fields are set as follows:

- Time domain resource assignment - 4 bits as defined in Subclause 5.1.2.1 of [6, TS 38.214]

- VRB-to-PRB mapping - 1 bit according to Table 7.3.1.2.2-5

- Modulation and coding scheme - 5 bits as defined in Subclause 5.1.3 of [6, TS 38.214]

- New data indicator - 1 bit

- Redundancy version - 2 bits as defined in Table 7.3.1.1.1-2

- HARQ process number - 4 bits

- Downlink assignment index - 2 bits as defined in Subclause 9.1.3 of [5, TS 38.213], as counter DAI

- TPC command for scheduled PUCCH - 2 bits as defined in Subclause 7.2.1 of [5, TS 38.213]

- PUCCH resource indicator - 3 bits as defined in Subclause 9.2.3 of [5, TS 38.213]

- PDSCH-to-HARQ_feedback timing indicator - 3 bits as defined in Subclause 9.2.3 of [5, TS38.213]

DCI format 1_1 may be used for the non-fallback DCI that schedules a PDSCH, and here, the CRC may be scrambled by a C-RNTI. The DCI format 1_1 with the CRC scrambled by the C-RNTI may include a plurality of pieces of information shown in Table 14 below.

[Table 14]

- Identifier for DCI formats - 1 bits
    - The value of this bit field is always set to 1, indicating a DL DCI format
- Carrier indicator - 0 or 3 bits as defined in Subclause 10.1 of [5, TS 38.213].
- Bandwidth part indicator - 0, 1 or 2 bits as determined by the number of DL BWPs $n_{BWP,RRC}$ configured by higher layers, excluding the initial DL bandwidth part. The bitwidth for this field is determined as $\lceil \log_2(n_{BWP}) \rceil$ bits, where
    - $n_{BWP} = n_{BWP,RRC} + 1$ if $n_{BWP,RRC} \leq 3$, in which case the bandwidth part indicator is equivalent to the ascending order of the higher layer parameter *BWP-Id;*
    - otherwise $n_{BWP} = n_{BWP,RRC}$, in which case the bandwidth part indicator is defined in Table 7.3.1.1.2-1;
    If a UE does not support active BWP change via DCI, the UE ignores this bit field.

- Frequency domain resource assignment - number of bits determined by the following, where $N_{RB}^{DL,BWP}$ is the size of the active DL bandwidth part:
    - $N_{RBG}$ bits if only resource allocation type 0 is configured, where $N_{RBG}$ is defined in Subclause 5.1.2.2.1 of [6, TS38.214],

    - $\lceil \log_2(N_{RB}^{DL,BWP}(N_{RB}^{DL,BWP}+1)/2) \rceil$ bits if only resource allocation type 1 is configured, or

    - $\max\left( \lceil \log_2(N_{RB}^{DL,BWP}(N_{RB}^{DL,BWP}+1)/2) \rceil, N_{RBG} \right) + 1$ bits if both resource allocation type 0 and 1 are configured.
    - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.
    - For resource allocation type 0, the $N_{RBG}$ LSBs provide the resource allocation as defined in Subclause 5.1.2.2.1 of [6, TS 38.214].

    - For resource allocation type 1, the $\lceil \log_2(N_{RB}^{DL,BWP}(N_{RB}^{DL,BWP}+1)/2) \rceil$ LSBs provide the resource allocation as defined in Subclause 5.1.2.2.2 of [6, TS 38.214]
    If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.
- Time domain resource assignment - 0, 1, 2, 3, or 4 bits as defined in Subclause 5.1.2.1 of [6, TS 38.214]. The bitwidth for this field is determined as $\lceil \log_2(I) \rceil$ bits, where *I* is the number of entries in the higher layer parameter *pdsch-TimeDomainAllocationList* if the higher layer parameter is configured; otherwise *I* is the number of entries in the default table.
- VRB-to-PRB mapping - 0 or 1 bit:
    - 0 bit if only resource allocation type 0 is configured or if interleaved VRB-to-PRB mapping is not configured by high layers;
    - 1 bit according to Table 7.3.1.2.2-5 otherwise, only applicable to resource allocation type 1, as defined in Subclause 7.3.1.6 of [4, TS 38.211].
- PRB bundling size indicator - 0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214].

- Rate matching indicator - 0, 1, or 2 bits according to higher layer parameters *rateMatchPatternGroup1* and *rateMatchPatternGroup2,* where the MSB is used to indicate *rateMatchPatternGroup1* and the LSB is used to indicate *rateMatchPatternGroup2* when there are two groups.

- ZP CSI-RS trigger - 0, 1, or 2 bits as defined in Subclause 5.1.4.2 of [6, TS 38.214]. The bitwidth for this field is determined as $\left\lceil \log_2(n_{ZP}+1) \right\rceil$ bits, where $n_{ZP}$ is the number of aperiodic ZP CSI-RS resource sets configured by higher layer.

For transport block 1:

    - Modulation and coding scheme - 5 bits as defined in Subclause 5.1.3.1 of [6, TS 38.214]

    - New data indicator - 1 bit

    - Redundancy version - 2 bits as defined in Table 7.3.1.1.1-2

For transport block 2 (only present if *maxNrofCodeWordsScheduledByDCI* equals 2):

    - Modulation and coding scheme - 5 bits as defined in Subclause 5.1.3.1 of [6, TS 38.214]

    - New data indicator - 1 bit

    - Redundancy version - 2 bits as defined in Table 7.3.1.1.1-2

    If "Bandwidth part indicator" field indicates a bandwidth part other than the active bandwidth part and the value of *maxNrofCodeWordsScheduledByDCI* for the indicated bandwidth part equals 2 and the value of *maxNrofCodeWordsScheduledByDCI* for the active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number - 4 bits

- Downlink assignment index - number of bits as defined in the following

    - 4 bits if more than one serving cell are configured in the DL and the higher layer parameter *pdsch-HARQ-ACK-Codebook=dynamic,* where the 2 MSB bits are the counter DAI and the 2 LSB bits are the total DAI;

    - 2 bits if only one serving cell is configured in the DL and the higher layer parameter *pdsch-HARQ-ACK-Codebook=dynamic,* where the 2 bits are the counter DAI;

    - 0 bits otherwise.

- TPC command for scheduled PUCCH- 2 bits as defined in Subclause 7.2.1 of [5, TS 38.213]

- PUCCH resource indicator - 3 bits as defined in Subclause 9.2.3 of [5, TS 38.213]

- PDSCH-to-HARQ_feedback timing indicator - 0, 1, 2, or 3 bits as defined in Subclause 9.2.3 of [5, TS 38.213].

The bitwidth for this field is determined as $\left\lceil \log_2(I) \right\rceil$ bits, where *I* is the number of entries in the higher layer parameter *dl-DataToUL-ACK.*

- Antenna port(s) - 4, 5, or 6 bits as defined by Tables 7.3.1.2.2-1/2/3/4, where the number of CDM groups without data of values 1, 2, and 3 refers to CDM groups {0}, {0,1}, and {0, 1,2} respectively. The antenna ports $\{p_{0,\ldots}p_{\upsilon-1}\}$ shall be determined according to the ordering of DMRS port(s) given by Tables 7.3.1.2.2-1/2/3/4.

    If a UE is configured with both *dmrs-DownlinkForPDSCH-MappingTypeA* and *dmrs-DownlinkForPDSCH-MappingTypeB,* the bitwidth of this field equals max{$x_A,x_B$}, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB.* A number of $|x_A - x_B|$ zeros are padded in the MSB of this field, if the mapping type of the PDSCH corresponds to the smaller value of $x_A$ and $x_B$.

- Transmission configuration indication - 0 bit if higher layer parameter *tci-PresentInDCI* is not enabled; otherwise 3 bits as defined in Subclause 5.1.5 of [6, TS38.214].

    If "Bandwidth part indicator" field indicates a bandwidth part other than the active bandwidth part,

    - if the higher layer parameter *tci-PresentInDCI* is not enabled for the CORESET used for the PDCCH carrying the DCI format 1_1,

        - the UE assumes *tci-PresentInDCI* is not enabled for all CORESETs in the indicated bandwidth part;

    - otherwise,

        - the UE assumes *tci-PresentInDCI* is enabled for all CORESETs in the indicated bandwidth part.

(continued)

- SRS request - 2 bits as defined by Table 7.3.1.1.2-24 for UEs not configured with *supplementary Uplink* in *ServingCellConfig* in the cell; 3 bits for UEs configured with *supplementary Uplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].

- CBG transmission information (CBGTI) - 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH.

- CBG flushing out information (CBGFI) - 1 bit if higher layer parameter *codeBlockGroupFlushIndicator* is configured as "TRUE", 0 bit otherwise. - DMRS sequence initialization - 1 bit.

Hereinafter, a time domain resource allocation method for a data channel in the 5G communication system will now be described.

The BS may configure the UE with Table of time domain resource allocation information for a DL data channel (PDSCH) and a UL data channel (PUSCH) by higher layer signaling (e.g., RRC signaling). For the PDSCH, Table including maximally up to 16 (maxNrofDL-Allocations=16) entries may be configured, and for the PUSCH, Table including maximally up to 16 (maxNrofUL-Allocations=16) entries may be configured. For example, the time domain resource allocation information may include PDCCH-to-PDSCH slot timing (corresponding to a time interval in slots between a reception time of PDCCH and a transmission time of PDSCH scheduled by the received PDCCH, and indicated as K0), PDCCH-to-PUSCH slot timing (corresponding to a time interval in slots between a reception time of PDCCH and a transmission time of PUSCH scheduled by the received PDCCH, and indicated as K2), information about location and length of a start symbol scheduled on the PDSCH or the PUSCH in the slot, a mapping type of PDSCH or PUSCH, or the like. For example, a plurality of pieces of information as in Tables 15 and 16 below may be informed from the BS to the UE.

[Table 15]

| |
|---|
| *PDSCH-TimeDomainResourceAllocationList* information element |
| PDSCH-TimeDomainResourceAllocationList    ::=    SEQUENCE (SIZE(1..maxNrofDL-Allocations))    OF    PDSCH-TimeDomainResourceAllocation |
| |
| PDSCH-TimeDomainResourceAllocation ::=    SEQUENCE { |
| k0                    INTEGER(0..32) OPTIONAL,    -- Need S |
| (PDCCH-to-PDSCH timing, slot unit) |
| mappingType                    ENUMERATED {typeA, typeB}, |
| (PDSCH maping type) |
| startSymbolAndLength        INTEGER (0..127) |
| (start symbol and length of PDSCH) |
| } |

[Table 16]

*PUSCH-TimeDomainResourceAllocation* information element

PUSCH−TimeDomainResourceAllocationList ::=   SEQUENCE (SIZE(1..maxNrofUL−Allocations))                 OF           PUSCH−TimeDomainResourceAllocation


PUSCH−TimeDomainResourceAllocation ::=   SEQUENCE {
    k2                                        INTEGER(0..32) OPTIONAL,    −− Need S
    (PDCCH−to−PUSCH timing, slot unit)
    mappingType                            ENUMERATED  {typeA, typeB},
    (PUSCH mapping type)
    startSymbolAndLength              INTEGER (0..127)
    (start symbol and length of PUSCH)
}

The BS may notify the UE of at least one of the entries in Tables 15 and 16 about the time domain resource allocation information by L1 signaling (e.g., DCI) (e.g., the one entry may be indicated in a 'time domain resource allocation' field in the DCI). The UE may obtain the time domain resource allocation information for the PDSCH or the PUSCH, based on the DCI received from the BS.

Hereinafter, a frequency domain resource allocation method for a data channel in the 5G communication system will now be described.

The 5G communication system supports two types, which are resource allocation type 0 and resource allocation type 1, as a method of indicating frequency domain resource allocation information with respect to a PDSCH and a PUSCH.

**Resource allocation type 0**

RB allocation information may be notified from the BS to the UE in the form of a bitmap with respect to a resource block group (RBG). Here, the RBG may consist of a set of sequential virtual RBs (VRBs), and size P of the RBG may be determined based on a value configured by a higher layer parameter (*rbg-Size*) and a value of a BWP defined in Table 17 below.

[Table 17]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

- A total number of RBGs ($N_{RGB}$) of BWP i of which size is $N_{BWP}^{size}$ may be defined below.

■

$$N_{RBG} = \left\lceil N_{BWP_i}^{size} + \left(N_{BWP_i}^{start} \; mod \; P\right)\right\rceil /P,$$

where

♦ the size of the first RBG is $RBG_0^{size} = P - \left(N_{BWP_i}^{start} \; mod \; P\right)$,

♦ the size of last RBG is $RBG_{last}^{size} = \left(N_{BWP_i}^{start} + N_{BWP_i}^{start}\right) \; mod \; P$, if $\left(N_{BWP_i}^{start} + N_{BWP_i}^{start}\right) \; mod \; P > 0$ and P otherwise,

♦ the size of all other RBGs is *P*.

- Bits of a bitmap with a size of $N_{RGB}$ bits may respectively correspond to RBGs. The RBGs may be allocated indices in order from a lowest frequency location of a BWP to a higher frequency. With respect to $N_{RGB}$ RBGs in a BWP, RBG#0 through RBG# ($N_{RGB}$) may be sequentially mapped from a most significant bit (MSB) to a least significant bit (LSB) in the bitmap of an RBG. When a particular bit value in the bitmap is 1, the UE may determine that an RBG corresponding to the bit value is allocated, and when a particular bit value in the bitmap is 0, the UE may determine that an RBG corresponding to the bit value is not allocated.

## Resource allocation type 1

- It is information about a start location and length of VRBs to which RB allocation information is sequentially allocated, and may be notified from the BS to the UE. Here, interleaving or non-interleaving may be additionally applied to the sequentially-allocated VRBs. A resource allocation field of resource allocation type 1 may be configured of a resource indication value (RIV), and the RIV may be configured of a VRB start point $RB_{start}$ and a length of a sequentially-allocated RB $L_{RBs}$. In more detail, a RIV in a BWP having a size of $N_{BWP}^{size}$ may be defined as below.

■ if $(L_{RBs} - 1) \leq \left\lfloor N_{BWP}^{size}/2 \right\rfloor$ then

♦ $RIV = N_{BWP}^{size}(L_{RBs} - 1) + RB_{start}$

■ else

♦ $RIV = N_{BWP}^{size}\left(N_{BWP}^{size} - L_{RBs} - 1\right) + \left(N_{BWP}^{size} - 1 - RB_{start}\right)$

■ where $L_{RBs} \geq 1$ and shall not exceed $N_{BWP}^{size} - RB_{start}$.

The BS may semi-statically configure the UE with time and frequency transmission resources and various transmission and reception parameters for a PDSCH and a PUSCH so as to support grant-based transmission and reception with respect to the DL data channel (the PDSCH) or the UL data channel (the PUSCH).

In more detail, the BS may configure the UE with a plurality of pieces of information as in Table 18 below, by higher layer signaling (e.g., RRC signaling), so as to support DL semi-persistent scheduling (SPS).

[Table 18]

| SPS-Config ::= | SEQUENCE { |
|---|---|
| periodicity | ENUMERATED {ms10, ms20, ms32, ms40, ms64, ms80, ms128, ms160, ms320, ms640, spare6, spare5, spare4, spare3, spare2, spare1}, |
| nrofHARQ-Processes | INTEGER (1..8), |
| n1PUCCH-AN | PUCCH-ResourceId OPTIONAL,    -- Need M |

| mcs-Table | ENUMERATED {qam64LowSE} OPTIONAL,    -- Need S |
|---|---|
| ... |  |
| } |  |

DL SPS may be configured in a Primary Cell or a Secondary Cell, and in one cell group, DL SPS may be configured in one cell.

In the 5G communication system, two types (Type-1 PUSCH transmission with a configured grant and Type-2 PUSCH transmission with a configured grant) may be supported as a configured grant (or grant free)-based transmission method with respect to a PUSCH.

**Type-1 PUSCH transmission with configured grant**

In Type-1 PUSCH transmission with a configured grant, the BS may configure, by higher layer signaling such as RRC signaling, the UE with a specific time/frequency resource 600 on which configured-grant PUSCH transmission is allowed. For example, as illustrated in FIG. 6, the BS may configure time-axis allocation information 601, frequency-axis allocation information 602, periodicity information 603, etc. of the resource 600. Also, the BS may configure the UE with various parameters (e.g., frequency hopping, DMRS configuration, modulation coding scheme (MCS) table, MCS, RBG size, the number of repetition transmissions, redundancy version (RV), etc.) by higher layer signaling. In more detail, a plurality of pieces of configuration information as in Table 19 may be included.

[Table 19]

```
ConfiguredGrantConfig ::=          SEQUENCE {
   frequencyHopping                ENUMERATED {mode1, mode2}
                  OPTIONAL,
   cg-DMRS-Configuration           DMRS-UplinkConfig,
   mcs-Table                       ENUMERATED {qam256, spare1}
            OPTIONAL,
   mcs-TableTransformPrecoder        ENUMERATED        {qam256,
spare1}                  OPTIONAL,
   uci-OnPUSCH                     SetupRelease { CG-UCI-OnPUSCH },
   resourceAllocation              ENUMERATED                   {
resourceAllocationType0, resourceAllocationType1, dynamicSwitch
},
```

```
        rbg-Size                    ENUMERATED {config2}
                OPTIONAL,
        powerControlLoopToUse    ENUMERATED {n0, n1},
        p0-PUSCH-Alpha               P0-PUSCH-AlphaSetId,
        transformPrecoder         ENUMERATED {enabled}
                OPTIONAL,
        nrofHARQ-Processes       INTEGER(1..16),
        repK                         ENUMERATED {n1, n2, n4, n8},
        repK-RV                  ENUMERATED  {s1-0231,  s2-0303,  s3-
0000}               OPTIONAL,
        periodicity                      ENUMERATED {
                        sym2,  sym7,  sym1x14,  sym2x14,
sym4x14, sym5x14, sym8x14, sym10x14, sym16x14, sym20x14,
                        sym32x14,  sym40x14,  sym64x14,
sym80x14, sym128x14, sym160x14, sym256x14, sym320x14, sym512x14,
                        sym640x14,            sym1024x14,
sym1280x14, sym2560x14, sym5120x14,
                        sym6, sym1x12, sym2x12, sym4x12,
sym5x12, sym8x12, sym10x12, sym16x12, sym20x12, sym32x12,
                        sym40x12,  sym64x12,  sym80x12,
sym128x12,  sym160x12,   sym256x12,   sym320x12,   sym512x12,
sym640x12,
                        sym1280x12, sym2560x12
                    },
        configuredGrantTimer      INTEGER (1..64)
                OPTIONAL,
        rrc-ConfiguredUplinkGrant          SEQUENCE {
            timeDomainOffset          INTEGER (0..5119),
            timeDomainAllocation      INTEGER (0..15),
            frequencyDomainAllocation    BIT STRING (SIZE(18)),
             antennaPort           INTEGER (0..31),
             dmrs-SeqInitialization       INTEGER         (0..1)
                    OPTIONAL,
             precodingAndNumberOfLayers     INTEGER (0..63),
             srs-ResourceIndicator     INTEGER (0..15),
        mcsAndTBS(MCS 및 TBS)                 INTEGER (0..31),
             frequencyHoppingOffset    INTEGER            (1..
maxNrofPhysicalResourceBlocks-1)         OPTIONAL,
             pathlossReferenceIndex    INTEGER    (0..maxNrofPUSCH-
PathlossReferenceRSs-1),
             ...
        }
            OPTIONAL
}
```

When the UE receives configuration information for Type-1 PUSCH transmission with a configured grant from the BS, the UE may periodically transmit a PUSCH on the configured resource 600, without permission from the BS. Various parameters (e.g., frequency hopping, DMRS configuration, MCS, RBG size, the number of repetition transmissions, RV, the number of precoding and layers, antenna ports, frequency hopping offset, etc.) may follow configuration values notified by the BS.

**Type-2 PUSCH transmission with configured grant**

In Type-2 PUSCH transmission with a configured grant, the BS may configure, by higher layer signaling (e.g., RRC signaling), the UE with some information (e.g., the periodicity information 603) from among information about the specific time/frequency resource 600 on which configured-grant PUSCH transmission is allowed. Also, the BS may configure the UE with various parameters (e.g., frequency hopping, DMRS configuration, MCS table, RBG size, the number of repetition transmissions, RV, etc.) by higher layer signaling. In more detail, the BS may configure, by higher layer signaling, the UE with a plurality of pieces of configuration information as in Table 20.

[Table 20]

```
ConfiguredGrantConfig ::=              SEQUENCE {
   frequencyHopping                    ENUMERATED {mode1, mode2}
                       OPTIONAL,
   cg-DMRS-Configuration               DMRS-UplinkConfig,
   mcs-Table                           ENUMERATED {qam256, spare1}
              OPTIONAL,
   mcs-TableTransformPrecoder          ENUMERATED          {qam256,
spare1}                         OPTIONAL,
   uci-OnPUSCH                         SetupRelease { CG-UCI-OnPUSCH },
   resourceAllocation                  ENUMERATED                    {
resourceAllocationType0, resourceAllocationType1, dynamicSwitch
},
   rbg-Size                            ENUMERATED {config2}
              OPTIONAL,
   powerControlLoopToUse    ENUMERATED {n0, n1},
   p0-PUSCH-Alpha                      P0-PUSCH-AlphaSetId,
   transformPrecoder                   ENUMERATED {enabled}
              OPTIONAL,
   nrofHARQ-Processes       INTEGER(1..16),
   repK                                ENUMERATED {n1, n2, n4, n8},
```

```
   repK-RV                  ENUMERATED {s1-0231, s2-0303, s3-0000}
                   OPTIONAL, -- Cond RepK
   periodicity                         ENUMERATED {
                                sym2, sym7, sym1x14, sym2x14,
sym4x14, sym5x14, sym8x14, sym10x14, sym16x14, sym20x14,
                                sym32x14, sym40x14, sym64x14,
sym80x14, sym128x14, sym160x14, sym256x14, sym320x14, sym512x14,
                                sym640x14,            sym1024x14,
sym1280x14, sym2560x14, sym5120x14,
                                sym6, sym1x12, sym2x12, sym4x12,
sym5x12, sym8x12, sym10x12, sym16x12, sym20x12, sym32x12,
                                sym40x12, sym64x12, sym80x12,
sym128x12, sym160x12, sym256x12, sym320x12, sym512x12,
sym640x12,
                                sym1280x12, sym2560x12
                                },
   configuredGrantTimer     INTEGER (1..64)
              OPTIONAL, -- Need R
}
```

The BS may transmit, to the UE, DCI including a specific DCI field value for scheduling activation or scheduling release with respect to DL SPS and UL grant Type 2.

In more detail, the BS may configure the UE with a configured scheduling-RNTI (CS-RNTI), and the UE may monitor a DCI format with a CRC scrambled by the CS-RNTI. When the CRC of the DCI format received by the UE is scrambled by the CS-RNTI, a new data indicator (NDI) is set to '0', and the DCI field satisfies Table 21 below, the UE may regard the DCI as an instruction to activate transmission and reception respect to DL SPS or UL grant Type 2.

[Table 21]

|  | **DCI format 0_0/0_1** | **DCI format 1_0** | **DCI format 1_1** |
|---|---|---|---|
| HARQ process number | set to all '0's | set to all '0's | set to all '0's |
| Redundancy version | set to '00' | set to '00' | For the enabled transport block: set to '00' |

The BS may configure the UE with a CS-RNTI, and the UE may monitor a DCI format with a CRC scrambled by the CS-RNTI. When the CRC of the DCI format received by the UE is scrambled by the CS-RNTI, a NDI is set to '0', and the DCI field satisfies Table 22 below, the UE may regard the DCI as an instruction to activate transmission and reception respect to DL SPS or UL grant Type 2.

[Table 22]

|  | **DCI format 0_0** | **DCI format 1_0** |
|---|---|---|
| HARQ process number | set to all '0's | set to all '0's |
| Redundancy version | set to '00' | set to '00' |
| Modulation and coding scheme | set to all '1's | set to all '1's |
| Frequency domain resource assignment | set to all '1's | set to all '1's |

As the DCI indicating release with respect to DL SPS or UL grant Type 2 follows a DCI format corresponding to DCI format 0_0 or DCI format 1_0, and DCI format 0_0 or 1_0 does not include a carrier indicator field (CIF), in order to receive a release command with respect to DL SPS or UL grant Type 2 for a specific cell, the UE has to perform monitoring of a PDCCH in a cell for which corresponding DL SPS or UL grant Type 2 is always configured. Even when a specific cell is configured with cross-carrier scheduling, in order to receive a release command with respect to DL SPS or UL grant Type 2 for the specific cell, the UE has to monitor DCI format 1_0 or DCI format 0_0 always in the corresponding cell.

Hereinafter, a carrier aggregation (CA) and scheduling method in the 5G communication system will now be described in detail.

A UE may be configured with a plurality of cells (cells or component carriers (CCs)) from a BS, and may be configured with respect to cross-carrier scheduling for the cells configured for the UE. If cross-carrier scheduling is configured for a specific cell (cell A, scheduled cell), PDCCH monitoring with respect to cell A may not be performed in cell A, but may be performed in another cell (cell B, scheduling cell) indicated as cross-carrier scheduling. Here, scheduled cell (cell A) and scheduling cell (cell B) may be configured with different numerologies. Here, the numerology may include subcarrier spacing, a cyclic prefix, or the like. When numerologies of cell A and cell B are different, and a PDCCH of cell B schedules a PDSCH of cell B, minimum scheduling offset as below may be additionally considered between the PDCCH and the PDSCH.

**Cross-carrier scheduling method**

♦ When subcarrier spacing ($\mu_B$) of cell B is smaller than subcarrier spacing ($\mu_A$) of cell A, the PDSCH may be scheduled from a next PDSCH slot of a PDSCH slot after X symbol from a last symbol of the PDCCH received in cell B. Here, X may be different depending on $\mu_B$, it may be defined as X=4 symbol when $\mu_B$, X=4 symbol when $\mu_B$, and X=8 symbol when $\mu_B$.

♦ When subcarrier spacing ($\mu_B$) of cell B is larger than subcarrier spacing ($\mu_A$) of cell A, the PDSCH may be scheduled from a PDSCH slot after X symbol from a last symbol of the PDCCH received in cell B. Here, X may be different depending on $\mu_B$, and it may be defined as X=4 symbol when $\mu_B$, X=8 symbol when $\mu_B$, and X=12 symbol when $\mu_B$.

Hereinafter, a rate matching operation and a puncturing operation will now be described in detail.

When time and frequency resource A on which a random symbol sequence A is intended to be transmitted overlaps with random time and frequency resource B, a rate matching operation or a puncturing operation may be considered for operations of transmission and reception of channel A (or the symbol sequence A), in consideration of resource C of a region on which the resource A and the resource B are overlapped. Detailed operations will now be provided.

## Rate matching operation

- The BS may transmit the symbol sequence A by mapping channel A (or the symbol sequence A) to the whole resource A on which the symbol sequence A is intended to be transmitted to the UE, except for a region of the resource A which corresponds to the resource C overlapping with the resource B. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the BS may transmit the symbol sequence A by sequentially mapping the symbol sequence A to resources {resource #1, resource #2, and resource #4} of the resource A excluding {resource #3} corresponding to the resource C. As a result, the BS may transmit the symbol sequence {symbol #1, symbol #2, and symbol #3} by respectively mapping them to {resource #1, resource #2, and resource #4}.

The UE may determine the resource A and the resource B from scheduling information for the symbol sequence A from the BS, and thus, may determine the resource C corresponding to an overlapping region between the resource A and the resource B. The UE may receive the symbol sequence A assuming that the symbol sequence A is transmitted by being mapped to the whole resource A excluding the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the UE may receive the symbol sequence A assuming that the symbol sequence A is sequentially mapped to resources {resource #1, resource #2, and resource #4} of the resource A excluding {resource #3} corresponding to the resource C. As a result, the UE may assume that the symbol sequence {symbol #1, symbol #2, and symbol #3} is transmitted by being respectively mapped to {resource #1, resource #2, and resource #4}, and may perform a series of next operations.

## Puncturing operation

When there is the resource C corresponding to an overlapping region between the whole resource A on which the symbol sequence A is intended to be transmitted to the UE and the resource B, the BS may map the symbol sequence A to the whole resource A but may perform transmission in the resource regions of the resource A excluding the resource C without performing transmission on the resource region corresponding to the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the BS may map the symbol sequence A {symbol #1, symbol #2, symbol #3, and symbol #4} to the resource A {resource #1, resource #2, resource #3 and resource #4}, and may transmit a symbol sequence {symbol #1, symbol #2, and symbol #4} corresponding to resource regions {resource #1, resource #2, and resource #4} of the resource A excluding {resource #3} corresponding to the resource C without transmitting {symbol #3} mapped to {resource #3} corresponding to the resource C. As a result, the BS may transmit the symbol sequence {symbol #1, symbol #2, and symbol #4} by respectively mapping them to {resource #1, resource #2, and resource #4}.

The UE may determine the resource A and the resource B from scheduling information for the symbol sequence A from the BS, and thus, may determine the resource C corresponding to an overlapping region between the resource A and the resource B. The UE may receive the symbol sequence A assuming that the symbol sequence A is mapped to the whole resource A but transmitted only on the regions of the resource A excluding the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the UE may perform reception assuming that the symbol sequence A {symbol #1, symbol #2, symbol #3, and symbol #4} are mapped to the resource A {resource #1, resource #2, resource #3 and resource #4}, but {symbol #1, symbol #2, and symbol #4} of the symbol sequence A mapped to {resource #1, resource #2, and resource #4} are transmitted without {symbol #3} mapped to {resource #3} corresponding to the resource C. As a result, the UE may assume that the symbol sequence {symbol #1, symbol #2, and symbol #4} is transmitted by being respectively mapped to {resource #1, resource #2, and resource #4}, and may perform a series of next operations.

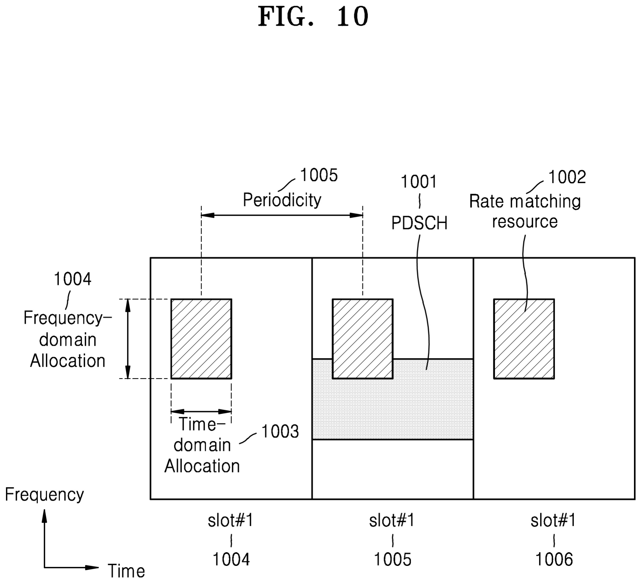

FIG. 10 is a diagram for describing a method by which a BS and a UE transmit or receive data by considering a DL data channel and a rate matching resource, according to an embodiment of the present disclosure.

Referring to FIG. 10, a DL data channel (PDSCH) 1001 and a rate matching resource 1002 are illustrated. The BS may configure the UE with one or more rate matching resources 1002 by higher layer signaling (e.g., RRC signaling). Configuration information for the rate matching resource 1002 may include time-domain resource allocation information 1003, frequency-domain resource allocation information 1004, and periodicity information 1005. Hereinafter, a bitmap corresponding to the frequency-domain resource allocation information 1004 is referred to as a "first bitmap", a bitmap corresponding to the time-domain resource allocation information 1003 is referred to as a "second bitmap", and a bitmap corresponding to the periodicity information 1005 is referred to as a "third bitmap". When all or some of time and frequency resources of the scheduled data channel 1001 overlap with the configured rate matching resource 1002, the BS may transmit the data channel 1001 by performing rate matching on the data channel 1001 in a portion of the rate matching resource 1002, and the UE may assume that the data channel 1001 has been rate matched in the portion of the rate matching resource 1002 and then may receive and decode the data channel 1001.

Through additional configuration, the BS may dynamically notify whether to perform rate matching on the data channel in the portion of the configured rate matching resource to the UE via DCI (corresponding to the "rate matching indicator" in the DCI format described above). In more detail, the BS may select and group some of the configured rate matching resources into a rate matching resource group, and may indicate whether to perform rate matching on the data channel for each rate matching resource group to the UE by DCI in a bitmap scheme. For example, when there are four rate matching resources configured, e.g., RMR#1, RMR#2, RMR#3, and RMR#4, the BS may configure rate matching groups RMG#1={RMR#1, RMR#2} and RMG#2={RMR#3, RMR#4}, and may indicate, by using 2 bits in a DCI field, whether to perform rate matching in each of RMG#1 and RMG#2 to the UE in a bitmap. For example, the BS may indicate "1" when the rate matching needs to be performed and may indicate "0" when the rate matching does not need to be performed.

The 5G communication system supports "RB symbol level" and "RE level" granularities for a method of configuring the rate matching resource for the UE. In more detail, a configuration method below may be performed.

### RB symbol level

The UE may be configured with maximally up to four RateMatchPatterns for each BWP by higher layer signaling, and each RateMatchPattern may include information below.

- For a reserved resource on a BWP, a resource configured with time and frequency resource region of the reserved resource in a combination of a symbol level bitmap and an RB level bitmap on the frequency axis may be included. The reserved resource may span one or two slots. A time domain pattern (periodicityAndPattern) in which a time and frequency region consisting of an RB-level and symbol-level bitmap pair is repeated may be additionally configured.
- A time and frequency domain resource region configured with a CORESET on a BWP and a resource region corresponding to a time domain pattern configured with a search space configuration in which the time and frequency domain resource region is repeated may be included.

### RE level

The UE may be configured with the following by higher layer signaling.

- configuration information (Ite-CRS-ToMatchAround) for an RE corresponding to an LTE cell-specific reference signal or common reference signal (CRS) pattern which may include the number of LTE CRS ports (nrofCRS-Ports), an LTE-CRS-vshift(s) value (v-shift), center subcarrier location information (carrierFreqDL) of an LTE carrier from a reference frequency point (e.g., reference point A), bandwidth size information of an LTE carrier (carrierBandwidthDL), and subframe configuration information (mbsfn-SubframConfigList) corresponding to a multicast-broadcast single-frequency network (MBSFN). The UE may determine a location of a CRS in an NR slot corresponding to an LTE subframe based on a plurality of pieces of information described above.
- Configuration information about a resource set corresponding to one or multiple zero power (ZP) CSI-RSs in a BWP.

Hereinafter, a method of measuring and reporting a channel state in a 5G communication system will be described in detail.

Channel state information (CSI) may include channel quality information (CQI), a precoding matric indicator (PMI), a CSI-reference signal (RS) resource indicator (CRI), a synchronization signal/physical broadcast channel (SS/PBCH) block resource indicator SSBRI, a layer indicator (LI), a rank indicator (RI), and/or L1-reference signal received power (RSRP). The BS may control time and frequency resource for the CSI measurement and reporting by the UE.

For the CSI measurement and reporting, the UE may be configured, by higher layer signaling, setting information for N(≥1) CSI reports (CSI-ReportConfig), setting information for M(≥1) RS transmission resources (CSI-ResourceConfig), one or two trigger state (CSI-AperiodicTriggerStateList, CSI-SemiPersistentOnPUSCH-TriggerStateList) list information.

The configuration information for the CSI measurement and reporting may be as shown in Tables 23 to 29 below.

## [Table 23]

The IE CSI-ReportConfig is used to configure a periodic or semi-persistent report sent on PUCCH on the cell in which the CSI-ReportConfig is included, or to configure a semi-persistent or aperiodic report sent on PUSCH triggered by DCI received on the cell in which the CSI-ReportConfig is included (in this case, the cell on which the report is sent is determined by the received DCI). See TS 38.214 [19], clause 5.2.1.

*CSI-ReportConfig* information element

```
-- ASN1START
-- TAG-CSI-REPORTCONFIG-START

CSI-ReportConfig ::=                    SEQUENCE {
    reportConfigId                          CSI-ReportConfigId,
    carrier                                 ServCellIndex                    OPTIONAL,
-- Need S
    resourcesForChannelMeasurement          CSI-ResourceConfigId,
    csi-IM-ResourcesForInterference         CSI-ResourceConfigId             OPTIONAL,    --
Need R
    nzp-CSI-RS-ResourcesForInterference     CSI-ResourceConfigId             OPTIONAL,    --
Need R
    reportConfigType                        CHOICE {
        periodic                                SEQUENCE {
            reportSlotConfig                        CSI-ReportPeriodicityAndOffset,
            pucch-CSI-ResourceList                  SEQUENCE (SIZE (1..maxNrofBWPs)) OF
PUCCH-CSI-Resource
        },
        semiPersistentOnPUCCH                   SEQUENCE {
            reportSlotConfig                        CSI-ReportPeriodicityAndOffset,
            pucch-CSI-ResourceList                  SEQUENCE (SIZE (1..maxNrofBWPs)) OF
PUCCH-CSI-Resource
        },
        semiPersistentOnPUSCH                   SEQUENCE {
            reportSlotConfig                        ENUMERATED {sl5, sl10, sl20, sl40,
sl80, sl160, sl320},
            reportSlotOffsetList                    SEQUENCE (SIZE (1.. maxNrofUL-
Allocations)) OF INTEGER(0..32),
            p0alpha                                 PO-PUSCH-AlphaSetId
        },
        aperiodic                               SEQUENCE {
            reportSlotOffsetList                    SEQUENCE (SIZE (1..maxNrofUL-
Allocations)) OF INTEGER(0..32)
        }
    },
    reportQuantity                         CHOICE {
        none                                    NULL,
        cri-RI-PMI-CQI                          NULL,
        cri-RI-i1                               NULL,
        cri-RI-i1-CQI                           SEQUENCE {
            pdsch-BundleSizeForCSI                  ENUMERATED {n2, n4}
OPTIONAL        -- Need S
        },
        cri-RI-CQI                              NULL,
        cri-RSRP                                NULL,
        ssb-Index-RSRP                          NULL,
        cri-RI-LI-PMI-CQI                       NULL
    },
    reportFreqConfiguration                SEQUENCE {
        cqi-FormatIndicator                     ENUMERATED { widebandCQI, subbandCQI }
OPTIONAL,        -- Need R
        pmi-FormatIndicator                     ENUMERATED { widebandPMI, subbandPMI }
OPTIONAL,        -- Need R
        csi-ReportingBand                       CHOICE {
            subbands3                               BIT STRING(SIZE(3)),
            subbands4                               BIT STRING(SIZE(4)),
            subbands5                               BIT STRING(SIZE(5)),
            subbands6                               BIT STRING(SIZE(6)),
            subbands7                               BIT STRING(SIZE(7)),
            subbands8                               BIT STRING(SIZE(8)),
            subbands9                               BIT STRING(SIZE(9)),
```

```
                subbands10                              BIT STRING(SIZE(10)),
                subbands11                              BIT STRING(SIZE(11)),
                subbands12                              BIT STRING(SIZE(12)),
                subbands13                              BIT STRING(SIZE(13)),
                subbands14                              BIT STRING(SIZE(14)),
                subbands15                              BIT STRING(SIZE(15)),
                subbands16                              BIT STRING(SIZE(16)),
                subbands17                              BIT STRING(SIZE(17)),
                subbands18                              BIT STRING(SIZE(18)),
                ...,
                subbands19-v1530                        BIT STRING(SIZE(19))
            }   OPTIONAL      -- Need S


        }
    OPTIONAL,    -- Need R
        timeRestrictionForChannelMeasurements           ENUMERATED {configured,
    notConfigured},
        timeRestrictionForInterferenceMeasurements      ENUMERATED {configured,
    notConfigured},
        codebookConfig                                  CodebookConfig
    OPTIONAL,     -- Need R
        dummy                                           ENUMERATED {n1, n2}
    OPTIONAL,     -- Need R
        groupBasedBeamReporting                         CHOICE {
            enabled                                         NULL,
            disabled                                        SEQUENCE {
                nrofReportedRS                                  ENUMERATED {n1, n2, n3, n4}
    OPTIONAL      -- Need S
            }
        },
        cqi-Table                                       ENUMERATED {table1, table2, table3, spare1}
    OPTIONAL,     -- Need R
        subbandSize                                     ENUMERATED {value1, value2},
        non-PMI-PortIndication                          SEQUENCE (SIZE (1..maxNrofNZP-CSI-RS-
    ResourcesPerConfig)) OF PortIndexFor8Ranks OPTIONAL,     -- Need R
        ...,
        [[
        semiPersistentOnPUSCH-v1530                     SEQUENCE {
            reportSlotConfig-v1530                          ENUMERATED {sl4, sl8, sl16}
        }
    OPTIONAL      -- Need R
        ]]
    }


    CSI-ReportPeriodicityAndOffset ::=  CHOICE {
        slots4                                          INTEGER(0..3),
        slots5                                          INTEGER(0..4),
        slots8                                          INTEGER(0..7),
        slots10                                         INTEGER(0..9),
        slots16                                         INTEGER(0..15),
        slots20                                         INTEGER(0..19),
        slots40                                         INTEGER(0..39),
        slots80                                         INTEGER(0..79),
        slots160                                        INTEGER(0..159),
        slots320                                        INTEGER(0..319)
    }

    PUCCH-CSI-Resource ::=              SEQUENCE {
        uplinkBandwidthPartId               BWP-Id,
        pucch-Resource                      PUCCH-ResourceId
    }

    PortIndexFor8Ranks ::=              CHOICE {
        portIndex8                          SEQUENCE{
            rank1-8                             PortIndex8
    OPTIONAL,     -- Need R
```

```
        rank2-8                              SEQUENCE(SIZE(2)) OF PortIndex8
OPTIONAL,    -- Need R
        rank3-8                              SEQUENCE(SIZE(3)) OF PortIndex8
OPTIONAL,    -- Need R
        rank4-8                              SEQUENCE(SIZE(4)) OF PortIndex8
OPTIONAL,    -- Need R
        rank5-8                              SEQUENCE(SIZE(5)) OF PortIndex8
OPTIONAL,    -- Need R
        rank6-8                              SEQUENCE(SIZE(6)) OF PortIndex8
OPTIONAL,    -- Need R
        rank7-8                              SEQUENCE(SIZE(7)) OF PortIndex8
OPTIONAL,    -- Need R
        rank8-8                              SEQUENCE(SIZE(8)) OF PortIndex8
OPTIONAL     -- Need R
        },
    portIndex4                               SEQUENCE{
        rank1-4                              PortIndex4
OPTIONAL,    -- Need R
        rank2-4                              SEQUENCE(SIZE(2)) OF PortIndex4
OPTIONAL,    -- Need R
        rank3-4                              SEQUENCE(SIZE(3)) OF PortIndex4
OPTIONAL,    -- Need R
        rank4-4                              SEQUENCE(SIZE(4)) OF PortIndex4
OPTIONAL     -- Need R
        },
    portIndex2                               SEQUENCE{
        rank1-2                              PortIndex2
OPTIONAL,    -- Need R
        rank2-2                              SEQUENCE(SIZE(2)) OF PortIndex2
OPTIONAL     -- Need R
        },
    portIndex1                               NULL
}

PortIndex8::=                                INTEGER (0..7)
PortIndex4::=                                INTEGER (0..3)
PortIndex2::=                                INTEGER (0..1)

-- TAG-CSI-REPORTCONFIG-STOP
-- ASN1STOP
```

| CSI-ReportConfig field descriptions |
| --- |
| **carrier**<br>Indicates in which serving cell the CSI-ResourceConfig indicated below are to be found. If the field is absent, the resources are on the same serving cell as this report configuration. |
| **codebookConfig**<br>Codebook configuration for Type-1 or Type-II including codebook subset restriction. |
| **cqi-FormatIndicator**<br>Indicates whether the UE shall report a single (wideband) or multiple (subband) CQI. (see TS 38.214 [19], clause 5.2.1.4) |
| **cqi-Table**<br>Which CQI table to use for CQI calculation (see TS 38.214 [19], clause 5.2.2.1). |
| **csi-IM-ResourcesForInterference**<br>CSI IM resources for interference measurement. csi-ResourceConfigId of a CSI-ResourceConfig included in the configuration of the serving cell indicated with the field "carrier" above. The CSI-ResourceConfig indicated here contains only CSI-IM resources. The bwp-Id in that CSI-ResourceConfig is the same value as the bwp-Id in the CSI-ResourceConfig indicated by resourcesForChannelMeasurement. |
| **csi-ReportingBand**<br>Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on) (see TS 38.214 [19], clause 5.2.1.4). This field is absent if there are less than 24 PRBs (no sub band) and present otherwise, the number of sub bands can be from 3 (24 PRBs, sub band size 8) to 18 (72 PRBs, sub band size 4). |
| **dummy**<br>This field is not used in the specification. If received it shall be ignored by the UE. |
| **groupBasedBeamReporting**<br>Turning on/off group beam based reporting (see TS 38.214 [19], clause 5.2.1.4) |
| **non-PMI-PortIndication**<br>Port indication for RI/CQI calculation. For each CSI-RS resource in the linked ResourceConfig for channel measurement, a port indication for each rank R, indicating which R ports to use.<br>Applicable only for non-PMI feedback (see TS 38.214 [19], clause 5.2.1.4.2).<br>The first entry in non-PMI-PortIndication corresponds to the NZP-CSI-RS-Resource indicated by the first entry in nzp-CSI-RS-Resources in the NZP-CSI-RS-ResourceSet indicated in the first entry of nzp-CSI-RS-ResourceSetList of the CSI-ResourceConfig whose CSI-ResourceConfigId is indicated in a CSI-MeasId together with the above CSI-ReportConfigId; the second entry in non-PMI-PortIndication corresponds to the NZP-CSI-RS-Resource indicated by the second entry in nzp-CSI-RS-Resources in the NZP-CSI-RS-ResourceSet indicated in the first entry of nzp-CSI-RS-ResourceSetList of the same CSI-ResourceConfig, and so on until the NZP-CSI-RS-Resource indicated by the last entry in nzp-CSI-RS-Resources in the in the NZP-CSI-RS-ResourceSet indicated in the first entry of nzp-CSI-RS-ResourceSetList of the same CSI-ResourceConfig. Then the next entry corresponds to the NZP-CSI-RS-Resource indicated by the first entry in nzp-CSI-RS-Resources in the NZP-CSI-RS-ResourceSet indicated in the second entry of nzp-CSI-RS-ResourceSetList of the same CSI-ResourceConfig and so on. |
| **nrofReportedRS**<br>The number (N) of measured RS resources to be reported per report setting in a non-group-based report. N <= N_max, where N_max is either 2 or 4 depending on UE capability.<br>(see TS 38.214 [19], clause 5.2.1.4) When the field is absent the UE applies the value 1 |
| **nzp-CSI-RS-ResourcesForInterference**<br>NZP CSI RS resources for interference measurement. csi-ResourceConfigId of a CSI-ResourceConfig included in the configuration of the serving cell indicated with the field "carrier" above. The CSI-ResourceConfig indicated here contains only NZP-CSI-RS resources. The bwp-Id in that CSI-ResourceConfig is the same value as the bwp-Id in the CSI-ResourceConfig indicated by resourcesForChannelMeasurement. |
| **p0alpha**<br>Index of the p0-alpha set determining the power control for this CSI report transmission (see TS 38.214 [19], clause 6.2.1.2). |
| **pdsch-BundleSizeForCSI**<br>PRB bundling size to assume for CQI calculation when reportQuantity is CRI/RI/i1/CQI. If the field is absent, the UE assumes that no PRB bundling is applied (see TS 38.214 [19], clause 5.2.1.4.2). |
| **pmi-FormatIndicator**<br>Indicates whether the UE shall report a single (wideband) or multiple (subband) PMI. (see TS 38.214 [19], clause 5.2.1.4). |
| **pucch-CSI-ResourceList**<br>Indicates which PUCCH resource to use for reporting on PUCCH. |

[Table 24]

The IE CSI-ResourceConfig defines a group of one or more NZP-CSI-RS-ResourceSet, CSI-IM-ResourceSet and/or CSI-SSB-ResourceSet.

**CSI-ResourceConfig information element**

```
-- ASN1START
-- TAG-CSI-RESOURCECONFIG-START

CSI-ResourceConfig ::=        SEQUENCE {
     csi-ResourceConfigId       CSI-ResourceConfigId,
     csi-RS-ResourceSetList     CHOICE {
          nzp-CSI-RS-SSB               SEQUENCE {
               nzp-CSI-RS-ResourceSetList    SEQUENCE (SIZE (1..maxNrofNZP-CSI-RS-
ResourceSetsPerConfig)) OF NZP-CSI-RS-ResourceSetId

OPTIONAL,  -- Need R
               csi-SSB-ResourceSetList    SEQUENCE (SIZE (1..maxNrofCSI-SSB-
ResourceSetsPerConfig)) OF CSI-SSB-ResourceSetId

OPTIONAL   -- Need R
          },
          csi-IM-ResourceSetList        SEQUENCE (SIZE (1..maxNrofCSI-IM-ResourceSetsPerConfig)) OF
CSI-IM-ResourceSetId
     },

     bwp-Id                     BWP-Id,
     resourceType               ENUMERATED { aperiodic, semiPersistent, periodic },
     ...
}

-- TAG-CSI-RESOURCECONFIG-STOP
-- ASN1STOP
```

| CSI-ResourceConfig field descriptions |
|---|
| **bwp-Id** <br> The DL BWP which the CSI-RS associated with this CSI-ResourceConfig are located in (see TS 38.214 [19], clause 5.2.1.2 |
| **csi-ResourceConfigId** <br> Used in CSI-ReportConfig to refer to an instance of CSI-ResourceConfig |
| **csi-RS-ResourceSetList** <br> Contains up to maxNrofNZP-CSI-RS-ResourceSetsPerConfig resource sets if ResourceConfigType is 'aperiod c' and 1 otherwise (see TS 38.214 [19], clause 5.2.1.2) |
| **csi-SSB-ResourceSetList** <br> List of SSB resources used for beam measurement and reporting in a resource set  (see TS 38.214 [19], section FFS_Section) |
| **resourceType** <br> Time domain behavior of resource configuration (see TS 38.214 [19], clause 5.2.1.2). It does not apply to resources provided in the csi-SSB-ResourceSetList. |

[Table 25]

The IE NZP-CSI-RS-ResourceSet is a set of Non-Zero-Power (NZP) CSI-RS resources (their IDs) and set-specific parameters.

*NZP-CSI-RS-ResourceSet* information element

```
-- ASN1START
-- TAG-NZP-CSI-RS-RESOURCESET-START
NZP-CSI-RS-ResourceSet ::=          SEQUENCE {
    nzp-CSI-ResourceSetId               NZP-CSI-RS-ResourceSetId,
    nzp-CSI-RS-Resources                SEQUENCE (SIZE (1..maxNrofNZP-CSI-RS-ResourcesPerSet))
OF NZP-CSI-RS-ResourceId,
    repetition                          ENUMERATED { on, off }
OPTIONAL,    -- Need S
    aperiodicTriggeringOffset           INTEGER(0..6)
OPTIONAL,    -- Need S
    trs-Info                            ENUMERATED {true}
OPTIONAL,    -- Need R
    ...
}

-- TAG-NZP-CSI-RS-RESOURCESET-STOP
-- ASN1STOP
```

| NZP-CSI-RS-ResourceSet field descriptions |
|---|
| **aperiodicTriggeringOffset**<br>Offset X between the slot containing the DCI that triggers a set of aperiodic NZP CSI-RS resources and the slot in which the CSI-RS resource set is transmitted. The value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. When the field is absent the UE applies the value 0. |
| **nzp-CSI-RS-Resources**<br>NZP-CSI-RS-Resources associated with this NZP-CSI-RS resource set (see TS 38.214 [19], clause 5.2). For CSI, there are at most 8 NZP CSI RS resources per resource set |
| **repetition**<br>Indicates whether repetition is on/off. If the field is set to 'OFF' or if the field is absent, the UE may not assume that the NZP-CSI-RS resources within the resource set are transmitted with the same downlink spatial domain transmission filter and with same NrofPorts in every symbol (see TS 38.214 [19], clauses 5.2.2.3.1 and 5.1.6.1.2). Can only be configured for CSI-RS resource sets which are associated with CSI-ReportConfig with report of L1 RSRP or "no report" |
| **trs-Info**<br>Indicates that the antenna port for all NZP-CSI-RS resources in the CSI-RS resource set is same. If the field is absent or released the UE applies the value "false" (see TS 38.214 [19], clause 5.2.2.3.1). |

[Table 26]

The IE CSI-SSB-ResourceSet is used to configure one SS/PBCH block resource set which refers to SS/PBCH as indicated in ServingCellConfigCommon.

*CSI-SSB-ResourceSet* information element

```
-- ASN1START
-- TAG-CSI-SSB-RESOURCESET-START

CSI-SSB-ResourceSet ::=          SEQUENCE {
    csi-SSB-ResourceSetId               CSI-SSB-ResourceSetId,
    csi-SSB-ResourceList                SEQUENCE (SIZE(1..maxNrofCSI-SSB-ResourcePerSet)) OF
SSB-Index,
    ...
}

-- TAG-CSI-SSB-RESOURCESET-STOP
-- ASN1STOP
```

[Table 27]

The IE CSI-IM-ResourceSet is used to configure a set of one or more CSI Interference Management (IM) resources (their IDs) and set-specific parameters.

**CSI-IM-ResourceSet information element**

```
-- ASN1START
-- TAG-CSI-IM-RESOURCESET-START

CSI-IM-ResourceSet ::=              SEQUENCE {
    csi-IM-ResourceSetId                CSI-IM-ResourceSetId,
    csi-IM-Resources                    SEQUENCE (SIZE(1..maxNrofCSI-IM-ResourcesPerSet)) OF
CSI-IM-ResourceId,
    ...
}
-- TAG-CSI-IM-RESOURCESET-STOP
-- ASN1STOP
```

| CSI-IM-ResourceSet field descriptions |
|---|
| **csi-IM-Resources** |
| CSI-IM-Resources associated with this CSI-IM-ResourceSet (see TS 38.214 [19], clause 5.2) |

# [Table 28]

The CSI-AperiodicTriggerStateList IE is used to configure the UE with a list of aperiodic trigger states. Each codepoint of the DCI field "CSI request" is associated with one trigger state. Upon reception of the value associated with a trigger state, the UE will perform measurement of CSI-RS (reference signals) and aperiodic reporting on L1 according to all entries in the associatedReportConfigInfoList for that trigger state.

**CSI-AperiodicTriggerStateList information element**

```
-- ASN1START
-- TAG-CSI-APERIODICTRIGGERSTATELIST-START

CSI-AperiodicTriggerStateList ::=    SEQUENCE (SIZE (1..maxNrOfCSI-AperiodicTriggers)) OF CSI-
AperiodicTriggerState

CSI-AperiodicTriggerState ::=        SEQUENCE {
    associatedReportConfigInfoList       SEQUENCE
(SIZE(1..maxNrofReportConfigPerAperiodicTrigger)) OF CSI-AssociatedReportConfigInfo,
    ...
}

CSI-AssociatedReportConfigInfo ::=   SEQUENCE {
    reportConfigId                       CSI-ReportConfigId,
    resourcesForChannel                  CHOICE {
        nzp-CSI-RS                           SEQUENCE {
            resourceSet                          INTEGER (1..maxNrofNZP-CSI-RS-
ResourceSetsPerConfig),
            qcl-info                             SEQUENCE (SIZE(1..maxNrofAP-CSI-RS-
ResourcesPerSet)) OF TCI-StateId OPTIONAL  -- Cond Aperiodic
        },
        csi-SSB-ResourceSet                  INTEGER (1..maxNrofCSI-SSB-ResourceSetsPerConfig)
    },
    csi-IM-ResourcesForInterference      INTEGER(1..maxNrofCSI-IM-ResourceSetsPerConfig)
OPTIONAL,  -- Cond CSI-IM-ForInterference
    nzp-CSI-RS-ResourcesForInterference  INTEGER (1..maxNrofNZP-CSI-RS-ResourceSetsPerConfig)
OPTIONAL,  -- Cond NZP-CSI-RS-ForInterference
    ...
}

-- TAG-CSI-APERIODICTRIGGERSTATELIST-STOP
-- ASN1STOP
```

| CSI-AssociatedReportConfigInfo field descriptions |
|---|
| **csi-IM-ResourcesForInterference**<br>CSI-IM-ResourceSet for interference measurement. Entry number in csi-IM-ResourceSetList in the CSI-ResourceConfig indicated by csi-IM-ResourcesForInterference in the CSI-ReportConfig indicated by reportConfigId above (1 corresponds to the first entry, 2 to the second entry, and so on). The indicated CSI-IM-ResourceSet should have exactly the same number of resources like the NZP-CSI-RS-ResourceSet indicated in nzp-CSI-RS-ResourcesforChannel. |
| **csi-SSB-ResourceSet**<br>CSI-SSB-ResourceSet for channel measurements. Entry number in csi-SSB-ResourceSetList in the CSI-ResourceConfig indicated by resourcesForChannelMeasurement in the CSI-ReportConfig indicated by reportConfigId above (1 corresponds to the first entry, 2 to the second entry, and so on). |
| **nzp-CSI-RS-ResourcesForInterference**<br>NZP-CSI-RS-ResourceSet for interference measurement. Entry number in nzp-CSI-RS-ResourceSetList in the CSI-ResourceConfig indicated by nzp-CSI-RS-ResourcesForInterference in the CSI-ReportConfig indicated by reportConfigId above (1 corresponds to the first entry, 2 to the second entry, and so on). |
| **qcl-info**<br>List of references to TCI-States for providing the QCL source and QCL type for each NZP-CSI-RS-Resource listed in nzp-CSI-RS-Resources of the NZP-CSI-RS-ResourceSet indicated by nzp-CSI-RS-ResourcesforChannel. Each *TCI-StateId* refers to the TCI-State which has this value for *tci-StateId* and is defined in *tci-StatesToAddModList* in the *PDSCH-Config* included in the *BWP-Downlink* corresponding to the serving cell and to the DL BWP to which the *resourcesForChannelMeasurement* (in the *CSI-ReportConfig* indicated by *reportConfigId* above) belong to. First entry in qcl-info-forChannel corresponds to first entry in nzp-CSI-RS-Resources of that NZP-CSI-RS-ResourceSet, second entry in qcl-info-forChannel corresponds to second entry in nzp-CSI-RS-Resources, and so on (see TS 38.214 [19], clause 5.2.1.5.1) |
| **reportConfigId**<br>The reportConfigId of one of the CSI-ReportConfigToAddMod configured in CSI-MeasConfig |
| **resourceSet**<br>NZP-CSI-RS-ResourceSet for channel measurements. Entry number in nzp-CSI-RS-ResourceSetList in the CSI-ResourceConfig indicated by resourcesForChannelMeasurement in the CSI-ReportConfig indicated by reportConfigId above (1 corresponds to the first entry, 2 to thesecond entry, and so on). |

| Conditional Presence | Explanation |
|---|---|
| *Aperiodic* | The field is mandatory present if the *NZP-CSI-RS-Resources* in the associated *resourceSet* have the resourceType aperiodic. The field is absent otherwise. |
| *CSI-IM-ForInterference* | This field is optional need M if the *CSI-ReportConfig* identified by *reportConfigId* is configured with *csi-IM-ResourcesForInterference*; otherwise it is absent. |
| *NZP-CSI-RS-ForInterference* | This field is optional need M if the *CSI-ReportConfig* identified by *reportConfigId* is configured with *nzp-CSI-RS-ResourcesForInterference*; otherwise it is absent. |

[Table 29]

The CSI-SemiPersistentOnPUSCH-TriggerStateList IE is used to configure the UE with list of trigger states for semi-persistent reporting of channel state information on L1. See also TS 38.214 [19], clause 5.2.

### *CSI-SemiPersistentOnPUSCH-TriggerStateList* information element

```
-- ASN1START
-- TAG-CSI-SEMIPERSISTENTONPUSCHTRIGGERSTATELIST-START

CSI-SemiPersistentOnPUSCH-TriggerStateList ::=  SEQUENCE(SIZE (1..maxNrOfSemiPersistentPUSCH-
Triggers)) OF CSI-SemiPersistentOnPUSCH-TriggerState

CSI-SemiPersistentOnPUSCH-TriggerState ::=        SEQUENCE {
    associatedReportConfigInfo                    CSI-ReportConfigId,
    ...
}

-- TAG-CSI-SEMIPERSISTENTONPUSCHTRIGGERSTATELIST-STOP
-- ASN1STOP
```

Regarding the aforementioned CSI report setting (CSI-ReportConfig), each report setting (CSI-ReportConfig) may be associated with CSI resource setting associated with corresponding report setting and one DL BWP identified by a higher layer parameter bwp-id given by CSI-ResourceConfig. As a time-domain reporting operation with respect to each report setting (CSI-ReportConfig), an aperiodic, semi-persistent, or periodic scheme may be supported, and the time-domain reporting operation may be configured from the BS for the UE by a reportConfigType parameter configured by a higher layer. A semi-persistent CSI reporting method supports a PUCCH-based semi-persistent (semi-PersistentOn-PUCCH) reporting method or a PUSCH-based semi-persistent (semi-PersistentOnPUSCH) reporting method. According to the periodic or semi-persistent CSI reporting method, the UE may be configured, from the BS by higher layer signaling, with a PUCCH or PUSCH resource to transmit CSI. Periodicity and slot offset of the PUCCH or PUSCH resource to transmit CSI may be given by numerology of a UL BWP configured for transmission of a CSI report. According to the aperiodic CSI reporting method, the UE may receive, from the BS by L1 signaling (DCI format 0_1 described above), scheduling of a PUSCH resource to transmit CSI.

Regarding the CSI resource setting (CSI-ResourceConfig), each CSI resource setting CSI-ReportConfig may include S(≥1) CSI resource sets (given by higher layer parameter csi-RS-ResourceSetList). The CSI resource set list may be configured of a non-zero power (NZP) CSI-RS resource set and an SS/PBCH block set or may be configured of a CSI-interference measurement (CSI-IM) resource set. Each CSI resource setting may be located on a DL BWP identified by higher layer parameter bwp-id, and CSI resource setting may be associated with CSI report setting of the same DL BWP. A time-domain operation of a CSI-RS resource in the CSI resource setting may be configured to one of 'aperiodic', 'periodic' or 'semi-persistent' by higher layer parameter resourceType. For the periodic or semi-persistent CSI resource setting, the number of CSI-RS resource sets may be limited to S=1, and configured periodicity and slot offset may be given by numerology of the DL BWP identified by bwp-id. The UE may be configured, from the BS by higher layer signaling, with one or more CSI resource settings for channel or interference measurement, and for example, the CSI resource settings may include CSI resources below.

- CSI-interference measurement (IM) resource for IM
- NZP CSI-RS resource for IM
- NZP CSI-RS resource for channel measurement

For CSI-RS resource sets associated with resource setting configured to 'aperiodic', 'periodic' or 'semi-persistent' by higher layer parameter resourceType, a trigger state with respect to CSI report setting in which reportType is configured to 'aperiodic' and resource setting for channel or interference measurement of one or more component cells (CCs) may be configured by higher layer parameter CSI-AperiodicTriggerStateList.

The aperiodic CSI reporting by the UE may be performed by using a PUSCH, the periodic CSI reporting by the UE may be performed by using a PUCCH, and when the semi-persistent CSI reporting is triggered or activated by DCI, the semi-persistent CSI reporting by the UE may be performed by using a PUSCH, and after the semi-persistent CSI reporting is activated by a medium access control (MAC) control element (CE) (MAC CE), the semi-persistent CSI reporting may be performed by using a PUCCH. As described above, CSI resource setting may also be configured to 'aperiodic', 'periodic' or 'semi-persistent'. Combinations of the CSI report setting and the CSI resource setting may be supported based on Table 30 below.

[Table 30]

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.321]: for reporting on PUSCH. the UE receives triggering on DCI | Triggered by DCI: additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]: for reporting on PUSCH, the UE receives triggering on DCI | Triggered by DCI: additionally, activation command [10, TS 38.321] possible as defined in Subclause 5.2.1.5.1. |
| Aperiodic CSI-RS | Not Supported | Not Supported | Triggered by DCI: additionally, activation command [10, TS 38.321] possible as defined in Subclause 5.2.1.5.1. |

The aperiodic CSI reporting may be triggered by "CSI request" field of the aforementioned DCI format 0_1 corresponding to scheduling DCI with respect to a PUSCH. The UE may monitor a PDCCH, may obtain the DCI format 0_1, and may obtain scheduling information with respect to a PUSCH and a CSI request indicator. The CSI request indicator may be configured with $N_{TS}$ (=0, 1, 2, 3, 4, 5, or 6) bits, and may be determined by higher layer signaling (reportTriggerSize). One trigger state from among one or more aperiodic CSI report trigger states configurable by higher layer signaling (CSI-AperiodicTriggerStateList) may be triggered by the CSI request indicator.

- When all bits of the CSI request field are 0, this may indicate that a CSI report is not requested.

- If the number (M) of CSI trigger states in configured CSI-AperiodicTriggerStateList is greater than 2NTs-1, M CSI trigger states may be mapped to 2NTs-1 according to a predefined mapping relation, and one trigger state from among 2NTs-1 CSI trigger states may be indicated by the CSI request field.

- If the number (M) of CSI trigger states in configured CSI-AperiodicTriggerStateList is equal to or smaller than 2NTs-1, one of M CSI trigger states may be indicated by the CSI request field.

Table 31 below shows an example of a relation between a CSI request indicator and a CSI trigger state indicative by the CSI request indicator.

[Table 31]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may perform measurement on a CSI resource in the CSI trigger state triggered by the CSI request field, and may generate CSI (including at least one of CQI, PMI, CRI, SSBRI, LI, RI, or L1-RSRP described above) from a result of the measurement. The UE may transmit the generated CSI by using the PUSCH scheduled by the corresponding DCI format 0_1. When one bit corresponding to a UL data indicator (UL-SCH indicator) in the DCI format 0_1 indicates "1", the UE may multiplex UL data (UL-SCH) and the obtained CSI with a PUSCH resource scheduled by the DCI format 0_1 and may transmit it. When one bit corresponding to a UL data indicator (UL-SCH indicator) in the DCI format 0_1 indicates "0", the UE may map only the CSI to a PUSCH resource scheduled by the DCI format 0_1, without UL data (UL-SCH), and may transmit it.

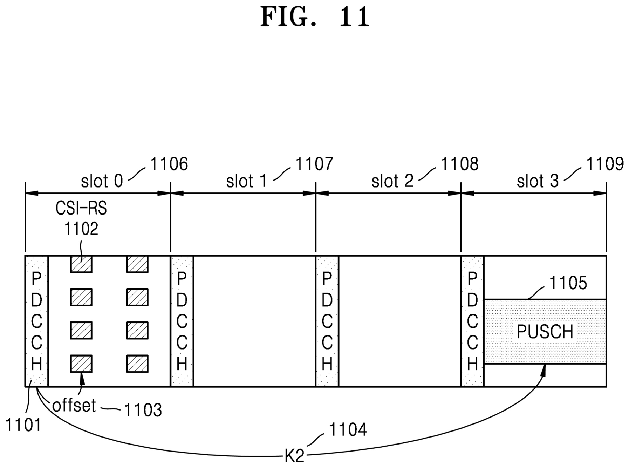

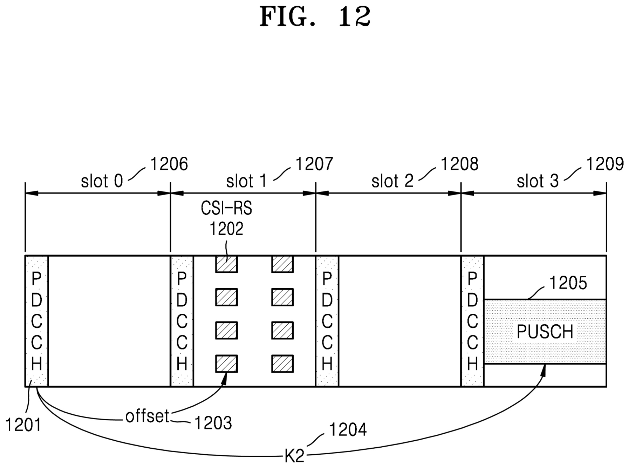

FIGS. 11 and 12 illustrate examples of an aperiodic CSI reporting method, according to an embodiment of the present disclosure.

Referring to FIG. 11, a UE may obtain DCI format 0_1 by monitoring a PDCCH 1101, and may obtain, from the DCI format 0_1, scheduling information with respect to a PUSCH 1105 and CSI request information. The UE may obtain, from the received CSI request indicator, resource information with respect to a CSI-RS 1102 to be measured. The UE may determine at what time point to measure transmitted CSI-RS 1102, based on a time point of reception of the DCI format 0_1 and a parameter (aforementioned aperiodicTriggeringOffset) with respect to offset in CSI resource set configuration (e.g., NZP CSI-RS resource set configuration (NZP-CSI-RS-ResourceSet)). In detail, the UE may be configured, from a BS by higher layer signaling, with an offset value X of parameter aperiodicTriggeringOffset in NZP-CSI-RS resource set configuration, and the configured offset value X may indicate offset between a slot in which DCI to trigger an aperiodic CSI report is received and a slot in which a CSI-RS resource is to be transmitted. For example, a value of the parameter aperiodicTriggeringOffset and the offset value X may have mapping relations described in Table 32 below.

[Table 32]

| aperiodic Triggering Offset | Offset X |
|:---:|:---:|
| 0 | 0 slot |
| 1 | 1 slot |
| 2 | 2 slots |
| 3 | 3 slots |
| 4 | 4 slots |
| 5 | 16 slots |
| 6 | 24 slots |

Referring to FIG. 12, the offset value is configured as X=0. In this case, the UE may receive a CSI-RS 1102 in a slot (corresponding to a slot 0 of FIG. 11) in which the DCI format 0_1 triggering the aperiodic CSI report is received, and may report CSI information on a PUSCH 1105 to the BS, the CSI information being measured by using the received CSI-RS 1102. The UE may obtain, from the DCI format 0_1, scheduling information (a plurality of pieces of information respectively corresponding to fields of the DCI format 0_1) with respect to the PUSCH 1105 for a CSI report. For example, the UE may obtain information about a slot in which the PUSCH 1105 is to be transmitted, from time-domain resource allocation information of the DCI format 0_1 with respect to the PUSCH 1105. In the example of FIG. 11, the UE may obtain 3 as K2 value corresponding to a slot offset value for PDCCH-to-PUSCH, and thus, the PUSCH 1105 may be transmitted in a slot 3 1109 that is distant, by 3 slots, from the slot 0 1106 in which the PDCCH 1101 is received.

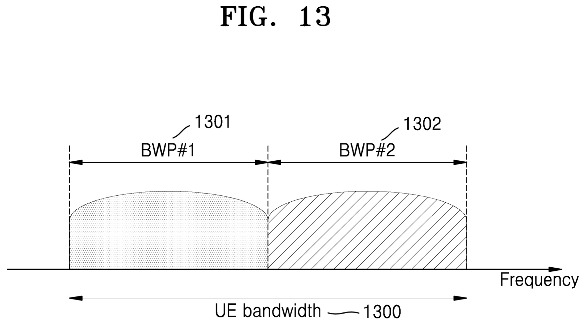

In the example of FIG. 12, the UE may obtain DCI format 0_1 by monitoring a PDCCH 1201, and may obtain, from the DCI format 0_1, scheduling information with respect to a PUSCH 1205 and CSI information. The UE may obtain, from a received CSI request indicator, resource information with respect to a CSI-RS 1202 to be measured. In the example of FIG. 12, the aforementioned offset value for CSI-RS is configured as X=1. In this case, the UE may receive the CSI-RS 1202 in a slot (slot 0 1206 of FIG. 13) in which the DCI format 0_1 triggering an aperiodic CSI report is received, and may report, to the BS via the PUSCH 1205, CSI information measured by using a received CSI-RS.

Next, BWP configuration in the 5G communication system will now be described in detail.

FIG. 13 illustrates an example of configuration of BWPs in a 5G communication system, according to an embodiment of the present disclosure.

Referring to FIG. 13, UE bandwidth 1400 may be configured into two BWPs, i.e., BWP#1 1301 and BWP#2 1302. A BS may configure a UE with one or more BWPs, and may configure, for each BWP, a plurality of pieces of information as in Table 33 below.

[Table 33]

```
BWP ::=                    SEQUENCE {

    bwp-Id                 BWP-Id,

    locationAndBandwidth   INTEGER (1..65536),

     subcarrierSpacing        ENUMERATED {n0, n1, n2, n3, n4, n5},

    cyclicPrefix           ENUMERATED { extended }

    }
```

The plurality of pieces of information may be transmitted from the BS to the UE by higher layer signaling, e.g., RRC signaling. At least one BWP among the configured one or more BWPs may be activated. Whether to activate a configured BWP may be notified from the BS to the UE semi-statically by RRC signaling or dynamically by DCI.

Before the UE is RRC connected, the UE may be configured by the BS with an initial BWP for initial access in a master information block (MIB). In more detail, the UE may receive, via the MIB in an initial access process, configuration information for a CORESET and search space in which a PDCCH may be transmitted for reception of system information (e.g., remaining system information (RMSI) or system information block 1 (SIB1)) requested for initial access. Each of the CORESET and the search space which are configured in the MIB may be regarded with identity (ID) 0. The BS may notify, in the MIB, the UE of configuration information such as frequency allocation information, time allocation information, numerology, etc., for CORESET #0. Also, the BS may notify, in the MIB, the UE of configuration information such as a monitoring periodicity and occasion for the CORESET #0, i.e., configuration information for search space #0. The UE may regard a frequency region configured as the CORESET #0 obtained from the MIB, as the initial BWP for initial access. Here, the ID of the initial BWP may be regarded as 0.

Configuration of the BWP supported by the 5G communication system may be used for various purposes.

According to an embodiment, when a bandwidth supported by the UE is smaller than a system bandwidth, the BS may support additional bandwidth via configuration of the BWP. For example, the BS may configure the UE with a frequency location (configuration information 2) of the BWP, such that the UE may transmit or receive data in a particular frequency location in the system bandwidth.

In order to support different numerologies, the BS may configure a plurality of BWPs for the UE. For example, in order to support data transmission and reception using both 15 KHz subcarrier spacing and 30 KHz subcarrier spacing for a certain UE, the BS may configure two BWPs with 15 KHz and 30 KHz subcarrier spacings, respectively. The different BWPs may be frequency division multiplexed, and in a case where a UE attempts to transmit and receive data with particular subcarrier spacing, a BWP configured with the subcarrier spacing may be activated.

Also, in order to reduce power consumption of the UE, the BS may configure BWPs with different bandwidth sizes for the UE. For example, when the UE supports very large bandwidth, e.g., 100 MHz bandwidth, and always transmits or receives data in the bandwidth, very high power consumption may occur. In particular, in a situation where there is no traffic, monitoring unnecessary DL control channel in the large 100 MHz bandwidth may be very inefficient in terms of power consumption. In order to reduce the power consumption of the UE, the BS may configure a BWP with relatively small bandwidth, e.g., a 20 MHz BWP, for the UE. In the situation that there is no traffic, the UE may perform monitoring in the 20 MHz BWP, and when data occurs, the UE may transmit or receive the data on the 100 MHz BWP based on an indication from the BS.

In a method of configuring a BWP, UEs before being RRC connected may receive, via the MIB, configuration information for the initial BWP in an initial access process. In more detail, the UE may be configured, based on the MIB of a physical broadcast channel (PBCH), with a control resource set for a DL control channel on which DCI for scheduling a SIB may be transmitted. A bandwidth of the CORESET configured based on the MIB may be regarded as the initial BWP, and the UE may receive, on the initial BWP, a PDSCH on which the SIB is transmitted. The initial BWP may also be used for other system information (OSI), paging, or random access, in addition to reception of the SIB.

When one or more BWPs are configured for the UE, the BS may indicate, to the UE, switching of BWP by using a BWP indicator field in DCI. For example, in FIG. 3, when a currently-activated BWP of the UE is BWP#1 1301, the BS may indicate BWP#2 1302 with a bandwidth indicator in DCI to the UE, and the UE may perform BWP switching to the BWP#2 1302 indicated with the BWP indicator in the received DCI.

As described above, the DCI-based BWP switching may be indicated by DCI that schedules a PDSCH or a PUSCH, and thus, when the UE receives a BWP switching request, the UE may need to perform, in the switched BWP without difficulty, transmission or reception of the PDSCH or the PUSCH scheduled by the DCI. For this end, a requirement for a delay time TBWP required for BWP switching is defined in a standard, and, for example, may be defined as in Table 34 below.

[Table 34]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 17 |
| Note 1: Depends on UE capability. | | | |
| Note 2: If the BWP switch involves changing of SCS, the BWP switch delay is determined by the larger one between the SCS before BWP swit ch and the SCS after BWP switch. | | | |

The requirement for BWP switching delay time supports type 1 or type 2 depending on a capability of the UE. The UE may report a supportable BWP delay time type to the BS.

According to the requirement for the BWP switching delay time, when the UE receives DCI including the BWP switching indicator in slot n, the UE may complete switching to a new BWP indicated by the BWP switching indicator no later than slot n+TBWP, and may transmit or receive, on the new BWP, a data channel scheduled by the DCI. When the BS attempts to schedule the data channel on the new BWP, the BS may determine to allocate a time domain resource for the data channel by considering the BWP switching delay time (TBWP) of the UE. That is, when the BS schedules a data channel on a new BWP, as for a method of determining time domain resource allocation for the data channel, the BS may schedule the data channel after the BWP switching delay time. Accordingly, the UE may not expect the DCI, which indicates BWP switching, to indicate a slot offset value (K0 or K2) smaller than the BWP switching delay time TBWP.

If the UE receives DCI indicating BWP switching (e.g., DCI format 1_1 or 0_1), the UE may not perform any transmission or reception during time duration from a third symbol of the slot in which a PDCCH including the DCI is received to a starting point of a slot indicated by a slot offset value (K0 or K2) indicated in a time domain resource allocation indicator field in the DCI. For example, when the UE has received DCI indicating BWP switching in slot n and a slot offset value indicated by the DCI is K, the UE may not perform any transmission or reception from a third symbol of the slot n to a symbol before slot n+k (i.e., a last symbol of slot n+K-1).

Hereinafter, a method of configuring transmission and reception associated parameters for each BWP in the 5G wireless communication system will now be described.

The UE may be configured by the BS with one or a plurality of BWPs and may be additionally configured with parameters to be used for transmission and reception (e.g., configuration information related to UL and DL data channels and control channels, etc.) for each of the configured BWPs. For example, referring to FIG. 13, when the UE is configured with the BWP#1 1301 and the BWP#2 1302, the UE may be configured with transmission/reception parameter#1 for the BWP#1 1301 and transmission/reception parameter#2 for the BWP#2 1302. When the BWP#1 1301 is activated, the UE may perform transmission and reception with the BS based on the transmission/reception parameter #1, and when the BWP#2 1302 is activated, the UE may perform transmission and reception with the BS based on the transmission/reception parameter#2.

In more detail, the UE may be configured by the BS with parameters below.

First, a plurality of pieces of information as in Table 35 may be configured for a UL BWP.

[Table 35]

```
BWP-Uplink ::= SEQUENCE {

bwp-Id                    BWP-Id,

bwp-Common                BWP-UplinkCommon OPTIONAL, -- Cond SetupOtherBWP

bwp-Dedicated             BWP-UplinkDedicated OPTIONAL, -- Cond SetupOtherBWP

...

}

BWP-UplinkCommon ::= SEQUENCE {

genericParameters         BWP,

rach-ConfigCommon         SetupRelease { RACH-ConfigCommon } OPTIONAL, -- Need M

pusch-ConfigCommon        SetupRelease { PUSCH-ConfigCommon } OPTIONAL, -- Need M

pucch-ConfigCommon        SetupRelease { PUCCH-ConfigCommon } OPTIONAL, -- Need M

...

}

BWP-UplinkDedicated ::= SEQUENCE {

pucch-Config                 SetupRelease { PUCCH-Config } OPTIONAL, -- Need M

pusch-Config                 SetupRelease { PUSCH-Config } OPTIONAL, -- Need M

configuredGrantConfig        SetupRelease { ConfiguredGrantConfig } OPTIONAL, --
Need M

srs-Config                   SetupRelease { SRS-Config } OPTIONAL, -- Need M

beamFailureRecoveryConfig    SetupRelease { BeamFailureRecoveryConfig } OPTIONAL, -
- Cond SpCellOnly

...

}
```

According to Table 35, the UE may be configured by the BS with cell-specific (or cell common or common) transmission-associated parameters (e.g., parameters associated with a random access channel (RACH), a PUCCH, and a PUSCH) (corresponding to BWP-UplinkCommon). Also, the UE may be configured by the BS with UE-specific (or dedicated) transmission-associated parameters (e.g., parameters associated with a PUCCH, a PUSCH, configured grant UL transmission (configured grant PUSCH), and a sounding reference signal (SRS)) (corresponding to BWP-UplinkDedicated).

Next, a plurality of pieces of information as in Table 36 may be configured for a DL BWP.

[Table 36]

```
BWP-Downlink ::= SEQUENCE {

bwp-Id                    BWP-Id,

bwp-Common                BWP-DownlinkCommon OPTIONAL, -- Cond SetupOtherBWP

bwp-Dedicated             BWP-DownlinkDedicated OPTIONAL, -- Cond SetupOtherBWP

...

}

BWP-DownCommon ::= SEQUENCE {

genericParameters         BWP,

pdcch-ConfigCommon        SetupRelease { PDCCH-ConfigCommon } OPTIONAL, -- Need M

pdsch-ConfigCommon        SetupRelease { PDSCH-ConfigCommon } OPTIONAL, -- Need M

...

}

BWP-DownDedicated ::= SEQUENCE {

pdcch-Config                SetupRelease { PDCCH-Config } OPTIONAL, -- Need M

pdsch-Config                SetupRelease { PDSCH-Config } OPTIONAL, -- Need M

sps-Config                  SetupRelease { SPS-Config } OPTIONAL, -- Need M

radioLinkMonitoringConfig   SetupRelease { radioLinkMonitoringConfig} OPTIONAL, -
- Cond SpCellOnly

...

}
```

According to Table 36, the UE may be configured by the BS with cell-specific (or cell common or common) reception-associated parameters (e.g., parameters associated with a PDCCH and a PDSCH) (corresponding to BWP-DownlinkCommon). Also, the UE may be configured by the BS with UE-specific (or dedicated) reception-associated parameters (e.g., parameters associated with a PDCCH, a PDSCH, configured grant DL transmission (semi-persistent scheduled PDSCH), and radio link monitoring (RLM)) (corresponding to BWP-UplinkDedicated).

Hereinafter, discontinuous reception (DRX) configuration in the 5G communication system will now be described in detail.

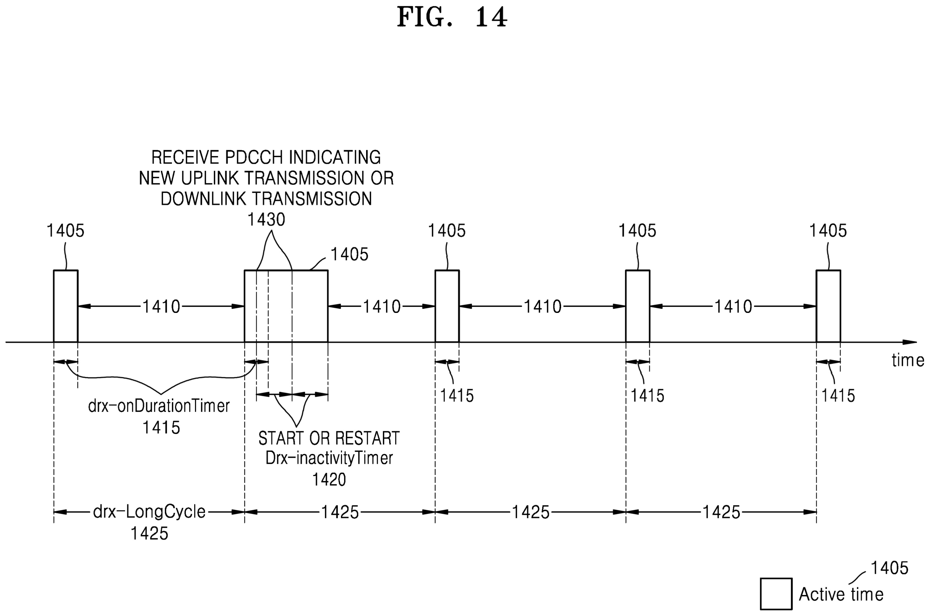

FIG. 14 illustrates DRX in a 5G communication system, according to an embodiment of the present disclosure.

DRX refers to an operation of a UE, in which the UE that uses a service discontinuously receives data while in an RRC connected state in which a radio link is configured between the UE and a BS. When the DRX is applied, the UE may turn on a receiver at a particular time to monitor a control channel, and when no data is received for a certain period of time, the UE may turn off the receiver, thereby reducing power consumption of the UE. The DRX operation may be controlled by a MAC layer entity, based on various parameters and timers.

Referring to FIG. 14, active time 1405 is a period of time in which the UE wakes up in every DRX cycle and monitors a PDCCH. The active time 1405 may be defined as below.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or

- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, ra-ContentionResolutionTimer, and the like are timers whose values are configured by the BS, and have a function to configure the UE to monitor a PDCCH when a certain condition is satisfied.

drx-onDurationTimer 1415 is a parameter to configure a minimum time in which the UE stays awake. drx-InactivityTimer 1420 is a parameter to configure an extra period of time in which the UE additionally stays awake when a PDCCH indicating new UL transmission or DL transmission is received (1430). drx-RetransmissionTimerDL is a parameter to configure a maximum period of time in which the UE stays awake to receive DL retransmission in a DL HARQ procedure. drx-RetransmissionTimerUL is a parameter to configure a maximum period of time in which the UE stays awake to receive UL retransmission grant in a UL HARQ procedure. The drx-onDurationTimer, drx-InactivityTimer, drx-RetransmissionTimerDL and drx-RetransmissionTimerUL may be configured with time, the number of subframes, the number of slots, or the like. ra-ContentionResolutionTimer is a parameter to monitor the PDCCH in a random access procedure.

inActive time 1410 is a time configured not to monitor the PDCCH or not to receive the PDCCH during a DRX operation, and may correspond to a rest of the entire time performing the DRX operation excluding the Active time 1405. When the UE does not monitor the PDCCH during the Active time 1405, the UE may enter a sleep or inactive state to reduce power consumption.

The DRX cycle refers to a cycle in which the UE wakes up and monitors a PDCCH. That is, the DRX cycle refers to a time gap from after the UE monitors the PDCCH to a time to monitor a next PDCCH, or an occurrence cycle of on duration. The DRX cycle may have two types which are short DRX cycle and long DRX cycle. The short DRX cycle may be optionally applied.

A long DRX cycle 1425 may be a DRX cycle having a longer cycle among two DRX cycles configured for the UE. The UE may start drx-onDurationTimer 1415 again at a point in time after a lapse of the long DRX cycle 1425 from a starting point (e.g., a start symbol) of drx-onDurationTimer 1415 during the long DRX operation. When the UE operates in the long DRX cycle 1425, the UE may start the drx-onDurationTimer 1415 in a slot after drx-SlotOffset from a subframe that satisfies Equation 2 below. Here, the drx-SlotOffset may refer to a delay before the drx-onDurationTimer 1415 starts. The drx-SlotOffset may be configured with time, the number of slots, or the like.

[Equation 2]

$$[(SFN*10)+\text{subframe number}] \bmod (\text{drx-LongCycle}) = \text{drx-StartOffset}$$

Here, drx-LongCycleStartOffset may include the long DRX cycle 1525 and drx-StartOffset, and may be used to define a subframe for starting the long DRX cycle 1425. The drx-LongCycleStartOffset may be configured with time, the number of subframes, the number of slots, or the like.

A short DRX cycle may be a DRX cycle having a shorter cycle among the two DRX cycles configured for the UE. While the UE operates in the long DRX cycle 1425, when a certain event occurs, e.g., reception of a PDCCH indicating new UL transmission or DL transmission (1430), the UE may start or restart drx-InactivityTimer 1420, and when the drx-InactivityTimer 1420 expires or the UE receives a DRX command MAC CE, the UE may operate in the short DRX cycle. For example, referring to FIG. 14, the UE may start drx-ShortCycleTimer when previous drx-onDurationTimer 1415 or drx-InactivityTimer 1420 expires, and may operate in the short DRX cycle until the drx-ShortCycleTimer expires. When the UE receives the PDCCH indicating new UL transmission or DL transmission (1430), the UE may expect additional UL transmission or DL transmission at a later time and thus may extend Active Time 1405 or delay an arrival of InActive Time 1410. While the UE operates in the short DRX cycle, the UE restarts drx-onDurationTimer 1415 at a time elapsed by the short DRX cycle from a start point of on duration. Afterward, when drx-ShortCycleTimer expires, the UE operates again in the long DRX cycle 1425.

When the UE operates in the short DRX cycle, the UE may start drx-onDurationTimer 1415 after drx-SlotOffset from a subframe that satisfies Equation 3 below. Here, the drx-SlotOffset may refer to a delay before the drx-onDurationTimer 1415 starts. For example, the drx-SlotOffset may be configured with time, the number of slots, or the like.

[Equation 3]

$$[(SFN*10)+\text{subframe number}] \bmod (\text{drx-ShortCycle})$$
$$= (\text{drx-StartOffset}) \bmod (\text{drx-ShortCycle})$$

Here, drx-ShortCycle and drx-StartOffset may be used to define a subframe where the short DRX cycle is to start. drx-ShortCycle and drx-StartOffset may be configured with time, the number of subframes, the number of slots, or the like.

The DRX operation has been described so far with reference to FIG. 14. According to an embodiment of the present disclosure, the UE may reduce power consumption of the UE by performing the DRX operation. However, even when the UE performs the DRX operation, it is not that the UE always receives a PDCCH associated with the UE in the Active Time 1405. Accordingly, an embodiment of the present disclosure may provide a signal for controlling an operation of the UE so as to further efficiently save power of the UE.

As described above, in order to achieve a high-speed data service of several Gbps, the 5G communication system uses a spatial multiplexing method supporting signal transmission and reception in an ultra-wide bandwidth or using multiple transmission and reception antennas, and supports various power saving modes to reduce power consumption of a UE. A BS also experiences excessive power consumption. For example, the number of requested power amplifiers (PAs) increases in proportion to the number of transmission antennas of the BS or the UE. A maximum output of each of the BS and the UE depends on a feature of a PA, and in general, a maximum output of the BS varies depending on a cell size covered by the BS. Normally, a maximum output is expressed as dBm. A maximum output of the UE is generally 23 dBm or 26 dBm. As an example of a commercial-use 5G BS, the BS may have 64 transmission antennas and 64 PAs corresponding thereto in a frequency band of 3.5 GHz, and may operate in a bandwidth of 100 MHz. That is, energy consumption of the BS increases in proportion to an output of PAs and an operation time of the PAs. Compared to an LTE BS, the 5G BS has a wide bandwidth and many transmission antennas as an operating frequency band of the 5G BS is relatively high. These features have an effect of increasing a data rate but cause costs of large energy consumption of the BS. Therefore, the more the number of BSs configuring a mobile communication network increases, the more the energy consumption of the mobile communication network proportionally increases.

As described above, energy consumption of the BS significantly depends on an operation of a PA. As the PA involves a transmission operation of the BS, a DL transmission operation of the BS is highly associated with energy consumption of the BS. A portion of a UL reception operation of the BS is not relatively large in energy consumption of the BS. A physical channel and a physical signal the BS transmits via a DL are as below.

- PDSCH: DL data channel including data to be transmitted to one or more UEs.
- PDCCH: DL control channel including scheduling information about a PDSCH and a PUSCH. Alternatively, a PDCCH may solely transmit control information such as a slot format, a power control command, etc., without a PDSCH or a PUSCH for scheduling. The scheduling information includes resource information on which a PDSCH or a PUSCH is mapped, HARQ-associated information, power control information, or the like.
- PBCH: DL broadcast channel providing an MIB that is essential system information needed for a UE to transmit and receive a data channel and a control channel.
- PSS: It is a signal used as a reference for DL time/frequency synchronization and provides partial information of a cell ID.
- SSS: It is a signal used as a reference for DL time and/or frequency (hereinafter, time/frequency) synchronization and provides other partial information of the cell ID.
- DM-RS: Reference signal for the UE to estimate a channel for each of a PDSCH, a PDCCH, and a PBCH
- CSI-RS: DL signal for reference when the UE measures a DL channel state.
- Phase-tracking reference signal (PT-RS): DL signal for phase tracking

In terms of BS energy saving, when the BS stops a DL transmission operation, an operation of a PA also stops in response thereto, such that a BS energy saving effect increases, not only the PA but also operations of other BS devices such as a baseband device decrease, and thus, additional energy saving is possible. Equally, if a UL reception operation may be stopped, even if a portion of the UL reception operation is relatively small in entire energy consumption of the BS, an additional energy saving effect may be obtained.

A DL transmission operation of the BS is basically dependent on the amount of DL traffic. For example, when the BS does not have data to be transmitted to a UE, there is no need for the BS to transmit a PDCCH for scheduling a PDSCH or a PDSCH. Alternatively, if the data may be temporarily suspended from transmission as the data is not sensitive to a transmission delay, the BS may not transmit a PDSCH and/or a PDCCH.

On the contrary, physical channels and physical signals which include PSS, SSS, PBCH, CSI-RS, and the like are characterized in that they are repeatedly transmitted based on preset defined periodicity, regardless of data transmission to the UE. Therefore, even when the UE does not receive data, the UE may continuously update DL time/frequency synchronization, a DL channel state, a radio link quality, or the like. That is, the PSS, SSS, PBCH, and CSI-RS have to be transmitted via a DL, regardless of DL data traffic, and thus causes energy consumption to the BS. Therefore, by adjusting transmission of the signals irrelative (or low relativity) to data traffic to less frequently occur, BS energy saving may be achieved.

While the BS does not perform DL transmission via the two BS energy saving methods, an operation of PAs of the BS, an operation of a radio frequency (RF) device related thereto, an operation of a baseband device, or the like may be stopped or minimized such that an energy saving effect of the BS may be maximized.

As another method, by switching off some of antennas or the PAs of the BS, energy consumption of the BS may be saved (hereinafter, 'BS energy saving method 2'). In this case, as a reaction to the energy saving effect of the BS, a decrease in cell coverage or a decrease in throughput may be caused. For example, when the BS that has 64 transmission antennas and 64 PAs corresponding thereto in a frequency band of 3.5 GHz and operates in a bandwidth of 100 MHz activates only 4 transmission antennas and 4 PAs during a preset time period so as to reduce BS energy consumption and switches off the others, BS energy consumption during the time period may be reduced by about 1/16 (=4/64), but, due to a decrease in a maximum transmission power and a decrease in a beamforming gain, it is difficult to achieve cell coverage and throughput of 64 antennas and 64 PAs.

The BS energy saving methods may be reclassified into three methods. There are a BS energy saving method in a frequency domain which adjusts a size of a BWP according to traffic of a BS, a BS energy saving method in a spatial domain which adaptively decreases the number of antenna ports, and a BS energy saving method in a time domain which adjusts periodicity of CSI-RS, SSB, and DRX. The three BS energy saving methods may be used in a manner that only a specific method may be solely used according to a BS characteristic such as BS traffic or coverage or the methods may be used in a combined manner, and a plurality of pieces of change information corresponding thereto have to be shared with a UE.

Consequently, in a situation where changed information or energy saving mode is shared with a UE, it is also necessary to examine an influence of coexistence between an energy saving mode and technologies that cause large energy consumption such as CA/DC, PDSCH/PUSCH/PUCCH repetition, and mTRP.

Hereinafter, a method of indicating a BS energy saving method proposed in the present disclosure will now be described through specific embodiments.

### <First embodiment>

First embodiment describes a structure of a network communication system for achieving energy saving.

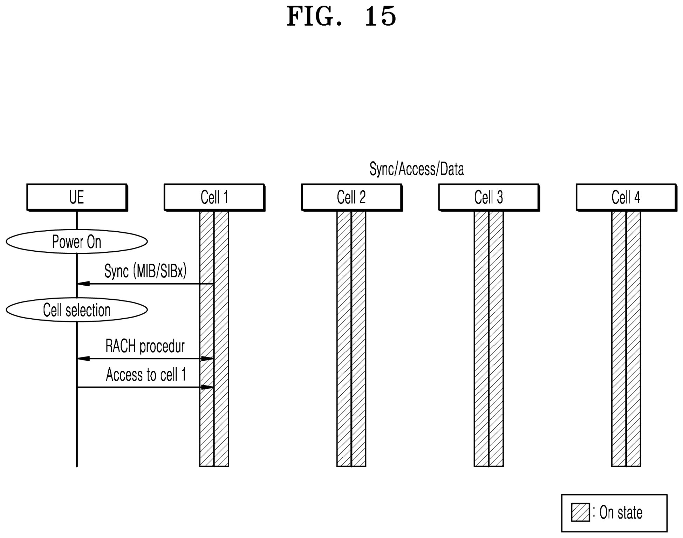

FIG. 15 is a diagram for describing an existing network communication system.

Referring to FIG. 15, a plurality of cells, for example, Cell 1, Cell 2, Cell 3, and Cell 4, are illustrated. Because all cells should support not only UEs in a connected state (or connected UEs) but also UEs in an idle state (or idle UEs), even when there is no traffic, it is inevitable to perform energy saving in a short cycle such as light sleep or microsleep for periodic reference signal (e.g., SSB) transmission.

Although the plurality of cells are illustrated in FIG. 15, it should be noted that each of the cells may correspond to at least one of a distributed unit (DU), a radio unit (RU), a transmission and reception point (TRP), or a carrier, and is not limited thereto. Referring to FIG. 15, an idle UE may synchronize with a cell transmitting a synchronization signal, may select a cell for performing initial access, and may finally access the cell by performing a random access channel (RACH) procedure. FIG. 15 illustrates a case where a UE accesses Cell 1 and performs communication. In the existing communication system of FIG. 15, because all cells are powered on for synchronization/access with UEs considering mobility of idle UEs, it may be difficult to achieve network power saving.

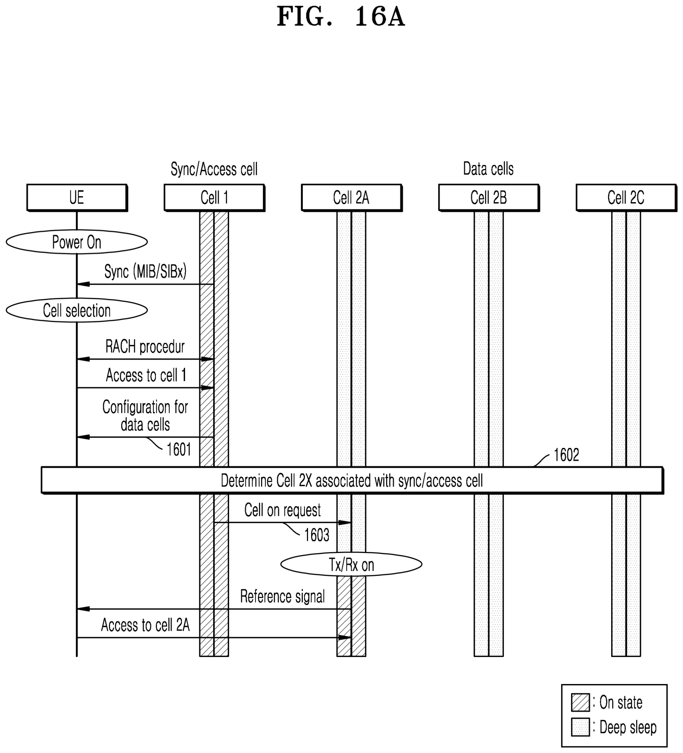

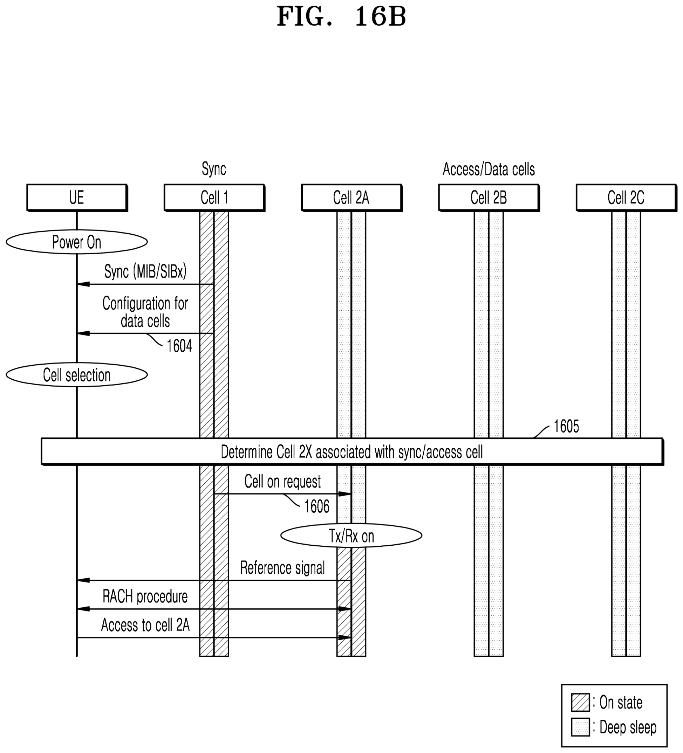

FIGS. 16A and 16B are diagrams for describing a network communication system for achieving energy saving, according to an embodiment of the present disclosure.

Referring to FIG. 16A, a plurality of cells, for example, Cell 1 and Cell 2 (Cell 2A, Cell 2B, and Cell 2C), are illustrated. Unlike in FIG. 15, Cell 1 is a cell for synchronization/access (sync/access cell), and Cell 2 (Cell 2A, Cell 2B, and Cell 2C) may be a data cell that only performs data communication with a UE without performing a sync/access function. Although the plurality of cells are illustrated in FIG. 16A, it should be noted that each of the cells may correspond to at least one of a DU, an RU, a TRP, or a carrier, and is not limited thereto.

Referring to FIG. 16A, an idle UE may synchronize with Cell 1 transmitting a synchronization signal, and may finally perform initial access to Cell1 by performing an RACH procedure. After initial access to Cell 1, the UE finally attempts to access a cell that will actually transmit and receive data (e.g., Cell 2A, Cell 2B, or Cell 2C). In FIG. 16A, it is assumed that Cell 1 may control Cell 2A, Cell 2B, and Cell 2C for network power saving. Accordingly, Cell 1 may provide configuration information for the cells controlled by Cell 1 to the UE (1601), and may determine cells to be controlled through an inter-cell interface (1602).

In detail, Cell 1 may control Tx/Rx power on/off of the controlled cell(s), for example, Cell 2A, Cell 2B, and/or Cell 2C. Accordingly, when Cell 1 requests Tx/Rx power on to the controlled cell(s) (1603), the cell(s) may transmit and receive a signal to and from the UE. There may be various methods of turning on/off Tx/Rx power of the cell(s) controlled by Cell 1. For example, location information of the UE may be utilized. However, it should be noted that the present disclosure does not limit this method to a specific method.

Through the method of FIG. 16A, Cell 2A, Cell 2B, and Cell 2C may be in a deep sleep state, and only the cell(s) whose Tx/Rx is turned on by the request of Cell 1 may be powered on (On state) and may transmit a signal to the UE.

Although a reference signal is illustrated as the signal transmitted by the cell(s) whose Tx/Rx is turned on in FIG. 16A, it should be noted that the present disclosure does not limit the signal transmitted by the cell(s) whose Tx/Rx is turned on to a specific signal. Accordingly, the UE may receive the reference signal from the cell(s) whose Tx/Rx is turned on and may perform data communication. FIG. 16A illustrates a case where the UE performs data communication with Cell 2A.

Next, referring to FIG. 16B, a plurality of cells, for example, Cell 1 and Cell 2 (Cell 2A, Cell 2B, and Cell 2C), are illustrated. Unlike in FIG. 16A, Cell 1 is a cell for synchronization (sync cell), and Cell 2 (Cell 2A, Cell 2B, and Cell 2C) may be an access/data cell that performs initial access and data communication with a UE without performing a synchronization function. Although the plurality of cells are illustrated in FIG. 16B, it should be noted that each of the cells may correspond to a DU, an RU, a TRP, or a carrier, and is not limited thereto.

Referring to FIG. 16B, an idle UE may synchronize with a cell transmitting a synchronization signal and may select the cell. FIG. 16B illustrates a case where Cell 1 is selected. In FIG. 16B, it is assumed that Cell 1 may control Cell 2 (Cell 2A, Cell 2B, and Cell 2C) for network energy saving. Accordingly, Cell 1 may provide configuration information for the cells controlled by Cell 1 (1604), and may determine cells to be controlled through an inter-cell interface (1605).

In detail, Cell 1 may control Tx/Rx power on/off of the controlled cell(s), for example, Cell 2A, Cell 2B, and/or Cell 2C. Accordingly, when Cell 1 requests Tx/Rx power on to the controlled cell(s) (1606), the cell(s) may transmit and receive a signal to and from the UE. There may be various methods of turning on/off Tx/Rx power of the cell(s) controlled by Cell 1. For example, location information of the UE may be utilized. However, it should be noted that the present disclosure does not limit this method to a specific method.

Through the method of FIG. 16B, Cell 2 (Cell 2A, Cell 2B, and Cell 2C) may be in a deep sleep state, and only the cell(s) whose Tx/Rx is turned on by the request of Cell 1 may be powered on (On state) and may transmit a signal to the UE. Although a reference signal is illustrated as the signal transmitted by the cell(s) whose Tx/Rx is turned on in FIG. 16B, it should be noted that the present disclosure does not limit the signal transmitted by the cell(s) whose Tx/Rx is turned on to a specific signal. Unlike in FIG. 16A, FIG. 16B illustrates a case where an RACH procedure is performed with the cell(s) whose Tx/Rx is turned on by Cell 1, rather than Cell 1 itself. FIG. 16B illustrates a case where the UE performs an RACH procedure with Cell 2A and then performs access and data communication.

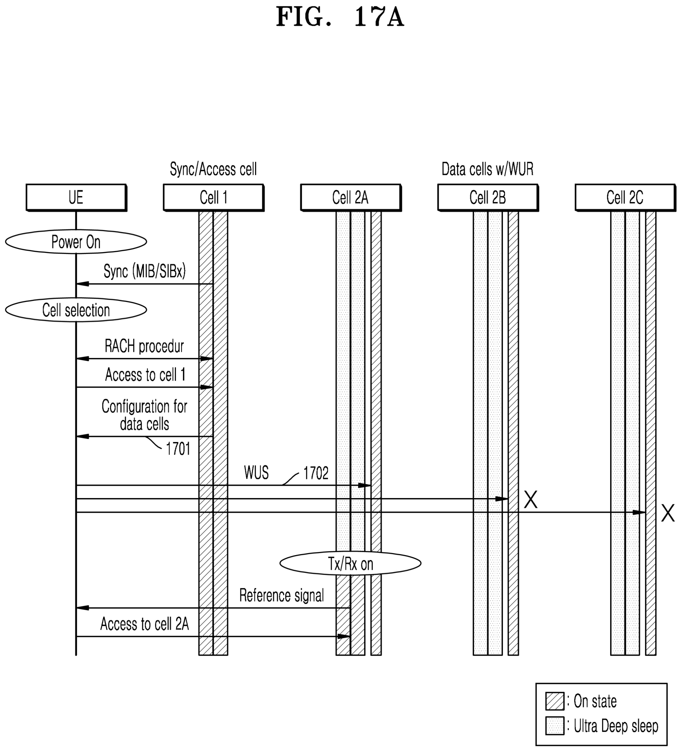

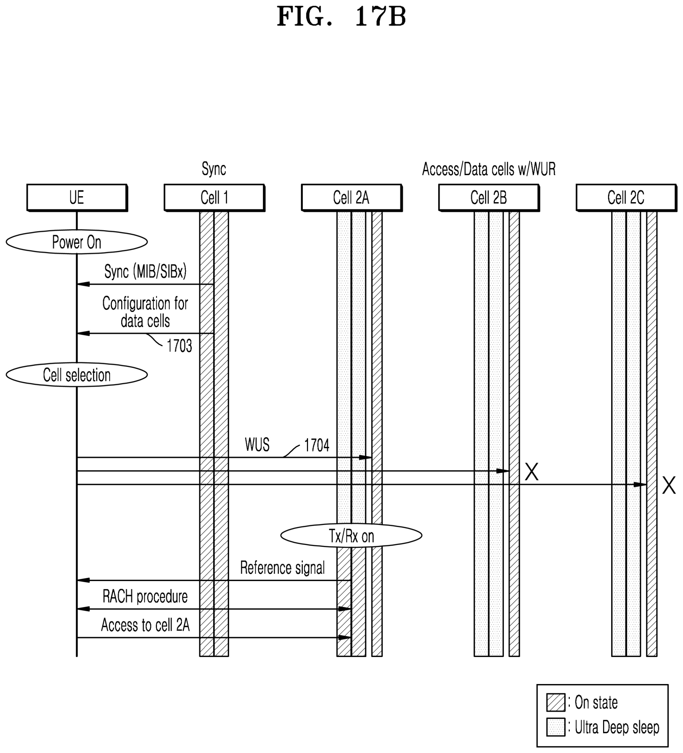

FIGS. 17A and 17B are diagrams for describing a network communication system for achieving energy saving, according to an embodiment of the present disclosure.

Referring to FIG. 17A, a plurality of cells, for example, Cell 1 and Cell 2 (Cell 2A, Cell 2B, and Cell 2C), are illustrated. Cell 1 may be a sync/access cell, and Cell 2 (Cell 2A, Cell 2B, and Cell 2C) may be a data cell that performs only data communication with a UE without performing a sync/access function. Unlike in FIGS. 16A and 16B, in the system of FIGS. 17A and 17B, Cell 2A, Cell 2B, and Cell 2C may include a wake-up receiver (WUR). When including a WUR, Cell 2 (Cell 2A, Cell 2B, and Cell 2C) may turn off a main radio (MR) and enter an ultra deep sleep state, which may be more advantageous for energy saving. Although the plurality of cells are illustrated in FIG. 17A, it should be noted that each of the cells may correspond to at least one of a DU, an RU, a TRP, or a carrier, and is not limited thereto.

Referring to FIG. 17A, an idle UE may synchronize with Cell 1 transmitting a synchronization signal, may select a cell for initial access from among Cell 1, Cell 2A, Cell 2B, or Cell 2C, and may finally access the cell by performing an RACH procedure. In FIG. 17A, it is assumed that Cell 1 may provide information for Cell 2 (Cell 2A, Cell 2B, and Cell 2C). Accordingly, Cell 1 may provide configuration information for other cells (Cell 2A, Cell 2B, and Cell 2C) to the UE (1701). The UE receiving the configuration information may transmit a wake-up signal (WUS) to the other cells (Cell 2A, Cell 2B, and Cell 2C) (1702). The cells (Cell 2A, Cell 2B, and Cell 2C), which have been in an ultra deep sleep state, may receive the WUS, may turn on the MR to enter an On state, and may transmit a signal to the UE. In this case, the configuration information for the other cells (Cell 2A, Cell 2B, and Cell 2C) may include configuration information for a power saving mode operation of each cell.

When the MRs of all of the cells (Cell 2A, Cell 2B, and Cell 2C) are turned on, the effect of network power saving may be reduced. Accordingly, it is necessary to allow only required cells to wake up through various methods. For example, there may be considered a method of turning on the MR only when a strength of the WUS received by the cells (Cell 2A, Cell 2B, and Cell 2C), which have been in the ultra deep sleep state, is greater than or equal to a certain threshold value. The strength of the WUS may be referred to as wake-up signal received power (WUSRP). Various methods may be considered for setting the threshold value. In detail, the setting may be performed through RRC, MAC-CE, DCI, or a combination thereof. Also, it should be noted that the present disclosure does not limit a method of improving the effect of network power saving to the above method.

Although a reference signal is illustrated as the signal transmitted by the cell(s) whose MR is turned on in FIG. 17A, it should be noted that the present disclosure does not limit the signal to a specific signal. FIG. 17A illustrates a case where the MR of Cell 2A receiving the WUS is turned on to transmit a reference signal to the UE and perform data communication. In this case, the MRs of Cell 2B and Cell 2C remain in the ultra deep sleep state.

Next, referring to FIG. 17B, a plurality of cells, for example, Cell 1 and Cell 2 (Cell 2A, Cell 2B, and Cell 2C), are illustrated. Unlike in FIG. 17A, Cell 1 may be a sync cell, and Cell 2 (Cell 2A, Cell 2B, and Cell 2C) may be an access/data cell that performs initial access and data communication with a UE without performing a synchronization function. Unlike in FIG. 16, in the system of FIG. 17, Cell 2 (Cell 2A, Cell 2B, and Cell 2C) may include a WUR. When including a WUR, Cell 2 (Cell 2A, Cell 2B, and Cell 2C) may turn off an MR and enter an ultra deep sleep state, which may be more advantageous for energy saving. Although the plurality of cells are illustrated in FIG. 17B, it should be noted that each of the cells may correspond to at least one of a DU, an RU, a TRP, or a carrier, and is not limited thereto.

Referring to FIG. 17B, an idle UE may synchronize with a cell transmitting a synchronization signal and may select the cell. FIG. 17B illustrates a case where Cell 1 is selected. In FIG. 17B, it is assumed that Cell 1 may provide information for Cell 2 (Cell 2A, Cell 2B, and Cell 2C). Accordingly, Cell 1 may provide configuration information for other cells (Cell 2A, Cell 2B, and Cell 2C) to the UE (1703). The UE receiving the configuration information may transmit a WUS to the other cells (Cell 2A, Cell 2B, and Cell 2C) (1704). The cells (Cell 2A, Cell 2B, and Cell 2C), which have been in an ultra deep sleep state, may receive the WUS, may turn on the MR to enter an On state, and may transmit a signal to the UE. In this case, the configuration information for the other cells (Cell 2A, Cell 2B, and Cell 2C) may include configuration information for a power saving mode operation of each cell.

When the MRs of all of the cells (Cell 2A, Cell 2B, and Cell 2C) are turned on, the effect of network power saving may be reduced. Accordingly, it is necessary to allow only required cells to wake up through various methods. For example, there may be considered a method of turning on the MR only when a strength of the WUS received by the cells (Cell 2A, Cell 2B, and Cell 2C), which have been in the ultra deep sleep state, is greater than or equal to a certain threshold value. The strength of the WUS may be referred to as WUSRP. However, it should be noted that the present disclosure does not limit a method of improving the effect of network power saving to the above method.

Although a reference signal is illustrated as the signal transmitted by the cell(s) whose MR is turned on in FIG. 17B, it should be noted that the present disclosure does not limit the signal to a specific signal. Unlike in FIG. 17A, FIG. 17B illustrates a case where the UE performs an RACH procedure with the access/data cells (Cell 2A, Cell 2B, and Cell 2C). FIG. 17B illustrates a case where the UE performs an RACH procedure with Cell 2A and then performs access and data communication. In this case, the MRs of Cell 2B and Cell 2C remain in the ultra deep sleep state.

<Second embodiment>

Second embodiment relates to allocation of a physical cell ID (PCI). The PCI is mainly used by a UE to decode DL PHY layer channels.

In the case of LTE, the PCI is typically used for initialization of sequence generation as follows.

- CRS sequence generation
- Scrambling sequence generation for DL PHY channels (i.e., PDCCH, PDSCH, PMCH, PBCH, and etc)
- RS group hopping pattern for PUCCH and PUSCH
- RS sequence hopping for PUSCH

In the case of NR, the PCI is typically used for initialization of sequence generation as follows.

- Scrambling sequence generation for PBCH
- Scrambling sequence generation for PDCCH (if pdcch-DMRS-ScramblingID is not configured)
- Scrambling sequence generation for PXSCH and PUCCH formats 2/3/4 (if dataScrablingIdentityPXSCH is not configured)
- DMRS sequence generation for PDCCH (if pdcch-DMRS-ScramblingID is not configured)
- DMRS sequence generation for PDSCH and PUCCH formats 2/3/4 (if scramblingID is not configured)
- DMRS sequence generation for PUSCH (if scramblingID is not configured in case of OFDM or if nPUSCH-Identity is not configured in case of DFT-s-OFDM)

For example, a DMRS sequence for PDSCH is generated as shown in Equation 4.

[Equation 4]

$$r(n) = \frac{1}{\sqrt{2}}(1 - 2 \cdot c(2n)) + j\frac{1}{\sqrt{2}}(1 - 2 \cdot c(2n + 1))$$

Here, c(i) denotes a Gold sequence having a length of 31, and initialization of the sequence is generated as shown in the following equation.

[Equation 5]

$$c_{init} = \left(2^{17}\left(N_{symbol}^{slot}n_{s,f}^{\mu} + l + 1\right)\left(2N_{ID}^{n_{SCID}} + 1\right) + 2N_{ID}^{n_{SCID}} + n_{SCID}\right)\mathrm{mod}2^{31}$$

Here, $N_{symbol}^{slot}$ denotes the number of symbols per slot, $n_{s,f}^{\mu}$ denotes a slot number within one frame, and l denotes an OFDM symbol number within a slot.

When a higher-layer parameter *DMRS-DownlinkConfig* IE is provided and a PDSCH is scheduled by a PDCCH using DCI format 1_1 whose CRC is scrambled by a C-RNTI or CS-RNTI, $N_{ID}^{0}, N_{ID}^{1} \in \{0, 1, ..., 65536\}$ for $n_{SCDI} \in \{0,1\}$ is indicated by *scramblingID0* and *scramblingID1 within the DMRS-DownlinkConfig* IE.

When a higher-layer parameter *DMRS-DownlinkConfig* IE is provided and a PDSCH is scheduled by a PDCCH using DCI format 1_0 whose CRC is scrambled by a C-RNTI or CS-RNTI, $N_{ID}^{0} \in \{0, 1, ..., 65536\}$ for $n_{SCID}$=0 is indicated by *scramblingID0 within the DMRS-DownlinkConfig* IE.

Except for the above cases, $N_{ID}^{n_{SCID}} = N_{ID}^{cell}$. That is, in most cases, $N_{ID}^{cell}$, which is the PCI, is involved in initialized of most sequence generations, and each UE obtains the PCI from an SSB and uses the PCI to decode DL PHY layer channels.

PCI $N_{ID}^{cell}$ consists of two parts as shown in the following equation, and may be respectively obtained from a PSS and an SSS.

[Equation 6]

$$N_{ID}^{cell} = 3 \cdot N_{ID}^{(1)} + N_{ID}^{(2)}$$

Here, $N_{ID}^{(1)}$ denotes a cell group ID that may be obtained from the SSS, and $N_{ID}^{(2)}$ denotes a sector ID that may be obtained from the PSS. $N_{ID}^{(2)}$ may have three sequences from 0 to 2, and LTE uses a Zadoff-Chu sequence, whereas NR uses an M-sequence. In LTE, $N_{ID}^{(1)}$ may have 168 sequences from 0 to 167 by concatenating two M-sequences, whereas in NR, $N_{ID}^{(1)}$ may have 336 sequences from 0 to 335 by using a PN Gold sequence (generated by XORing two M-sequences).

Accordingly, the PCI calculated through Equation 6 may have 504 unique sequences in LTE, whereas the PCI may have a total of 1,008 unique sequences in NR, thereby enhancing sequence randomization and increasing robustness against inter-cell interference.

Considering scenarios of First embodiment, an existing gNB may perform a functional split based on functions suitable for idle/inactive UEs and connected UEs. However, when the two functions are divided in an already deployed gNB, coverage of data cells or access data cells for connected UEs may decrease, and a data rate may also be reduced. Accordingly, to meet coverage and date rate requirements for connected UEs, a gNB may switch to a data cell or an access/data cell to mainly support connected UEs, and an additional sync cell or sync/access cell may be required to support idle/inactive UEs. Accordingly, the following description relates to PCI allocation during initial access in a situation where a sync cell or a sync/access cell (collectively referred to as a sync cell for convenience) and an access/data cell or a data cell (collectively referred to as a data cell for convenience) coexist.

As seen from First embodiment, a sync cell manages a plurality of data cells. In this case, a PCI of a data cell may be the same as or different from a PCI of the sync cell. When the PCI of the data cell and the PCI of the sync cell are the same, because all data cells sharing the PCI use the same scramble, the UE may not distinguish each data cell. Accordingly, each data cell may use a separate ID, such as a logical ID defined by the sync cell, allowing the UE to distinguish each data cell. On the other hand, when a PCI of a data cell and the PCI of the sync cell are different from each other, because each data cell uses a different scramble sequence, the UE may already distinguish each data cell.

However, in a target scenario, because the number of cells per unit area increases compared to an existing scenario (due to addition of sync cells), more sequence randomization is required in order to reduce inter-cell interference. Accordingly, in this case, more PCIs may be required.

When a data cell is in a deep sleep state, because the UE may not receive an SSB from the data cell, the UE may not obtain a PCI of the data cell. Accordingly, in this case, each sync cell should transmit information for data cell including a PCI (e.g., WUS configuration, SSB configuration, carrier frequency bandwidth of the data cell, etc.) to the UE. This information may be transmitted from the sync cell to the UE through transmission of 'configurations for data cell' performed in 1601 and 1604 of FIG. 16 and 1701 and 1703 of FIG. 17. In this process, when the UE receives 'configurations for data cell' without accessing the sync cell as in FIG. 16B and FIG. 17B, because RRC connection is not established in the UE, the 'configurations for data cell' may be received through SIB. On the other hand, when the UE receives the 'configurations for data cell' after performing random access to the sync cell as shown in FIG. 16A and FIG. 17A, because RRC connection is established in the UE, the UE may receive the 'configurations for data cell' through SIB or RRC configuration.

However, when the information about the PCI of the data cell is transmitted from the sync cell, a lot of overhead may occur due to the PCI. The overhead due to the PCI may be reduced by providing a correlation between the PCIs of the sync cell and the data cell.

For example, a specific method of reducing PCI overhead may vary according to whether the PCI of the sync cell and the PCI of the data cell are the same or different from each other. First, it is assumed that the PCI of the sync cell and the PCI of the data cell are the same. In this case, because the PCI of the sync cell and the PCI of the data cell are the same, initialization values of sequences for various channels/signals such as DMRS are also the same. Accordingly, when frequency bands of the sync cell and the data cell are the same, the UE may not determine whether received information comes from the sync cell or the data cell. When frequency bands of the sync cell and the data cell are different from each other, the UE may not distinguish multiple data cells within one sync cell. Accordingly, in order to solve this problem, the 'configurations for data cell' transmitted from the sync cell may include a logical cell ID that may distinguish each data cell, instead of a PCI of each data cell.

Second, it is assumed that the PCI of the sync cell and the PCI of the data cell are different from each other. In this case, because initialization values of sequences for various channels/signals are different, the UE may easily distinguish between the sync cell, the data cell, and each of the data cells. However, a lot of PCI overhead may occur, and as the number of PCIs increases, interference randomization may be insufficient. In order to reduce this drawback, it may be necessary to configure the PCIs of the sync cell and the data cell in a hierarchical structure as much as possible. A specific embodiment of this will be described in Third embodiment.

In order to reduce overhead due to the PCI, a method by which the UE obtains the PCI or the logical ID is also important. In a first method, the sync cell may transmit configuration information for the data cell to the UE through 'configurations for data cell'. This operation linearly increases overhead according to the number of data cells. In a second method, each UE may obtain the PCI of the data cell through SSB detection without the assistance of the sync cell. In this case, overhead is not significantly different from an existing case. However, there may be a method appropriately considering both methods, which will be described through Third embodiment.

<Third embodiment>

Third embodiment relates to PCI configuration and SSB structure when PCIs of a sync cell and a data cell are different or the same.

First, it is assumed that the PCI of the sync cell is different from the PCI of the data cell. As described in Second embodiment, the PCIs of the sync cell and the data cell may need to have a hierarchical structure. In this case, the sync cell and the data cell may share a partial or full set of each other's PCI.

Table 37 shows possible PCIs that the data cell may have when the PCI of the sync cell and the PCI of the data cell are different from each other.

[Table 37]

| | | | PSS | SSS | TSS |
|---|---|---|---|---|---|
| Sync cell | | | $N_{ID}^{(2)}$ | $N_{ID}^{(1)}$ | |
| Data cell | Alt 1 | Alt 1-1 | $N_{ID}^{(2)}$ | $N_{ID}^{(1)}$ | |
| | | Alt 1-2 | $N_{ID}^{(2)}$ | $N_{ID}^{(1)}$ | |
| | | Alt 1-3 | $N_{ID}^{(2)}$ | $N_{ID}^{(1)}$ | $N_{ID}^{(3)}$ |
| | Alt 2 | | $N_{ID}^{(2)}$ | $N_{ID}^{(1)}$ | |

Alt 1 corresponds to a case where the sync cell and the data cell fully or partially share the PCIs, and Alt 2 corresponds to a case where the PCIs of the sync cell and the data cell are completely different from each other. Alt 1-1 corresponds to a case where the sync cell and the data cell share only $N_{ID}^{(2)}$ that may be detected in a PSS among $N_{ID}^{(1)}$ and $N_{ID}^{(2)}$ of the sync cell (shaded values in Table 37). In this case, an additional definition of $N_{ID}^{(1)}$ is required for the data cell (unshaded value in Table 37). At least for $N_{ID}^{(1)}$, because the PCI of the data cell has a different set from the PCI of the sync cell, a separate sequence different from a sequence used in the sync cell (e.g., concatenation of two M-sequences in LTE, and XOR of two M-sequences, i.e., a PN Gold sequence in NR) should be used so that a minimum sequence distance between the sync cell and the data cell is not reduced. When multiple data cells exist within one sync cell, $N_{ID}^{(1)}$ for the data cells may be greater than or equal to $N_{ID}^{(1)}$ for the sync cell, and PCIs that may be represented for the data cells may be $3 \cdot N_{ID}^{(1)}+N_{ID}^{(2)}$, which is the same as before.

Alt 1-2 corresponds to a case where the sync cell and the data cell share only $N_{ID}^{(1)}$ that may be detected only in an SSS. In this case, an additional definition of $N_{ID}^{(2)}$ is required for the data cell (the unshaded value in Table 37). At least for $N_{ID}^{(2)}$, because the PCI of the data cell has a different set from the PCI of the sync cell, a separate sequence different from a sequence used in the sync cell (e.g., a Zadoff-Chu sequence in LTE and an M-sequence in NR) should be used so that a minimum sequence distance between the sync cell and the data cell is not reduced. When multiple data cells exist within one sync cell, $N_{ID}^{(2)}$ for the data cells may be greater than or equal to $N_{ID}^{(2)}$ for the sync cell, and PCIs that may be represented for the data cells may be $3 \cdot N_{ID}^{(1)}+N_{ID}^{(2)}$, which is the same as before.

Alt 1-3 corresponds to a case where the sync cell and the data cell share $N_{ID}^{(1)}$ and $N_{ID}^{(2)}$, which may be detected in the PSS and the SSS, but a third ID $N_{ID}^{(3)}$ exists. In this case, an additional definition of $N_{ID}^{(3)}$ is required

for the data cell (unshaded value in Table 37). At least for $N_{ID}^{(3)}$, because the PCI of the data cell has a different set from the PCI of the sync cell, a separate sequence (e.g., a tertiary SS (TSS) different from the PSS and the SSS used in the sync cell should be used so that a minimum sequence distance between the sync cell and the data cell is not reduced. Alternatively, a value for $N_{ID}^{(3)}$ may be transmitted from the sync cell to the UE through "configurations for data cell" without a separate sequence (e.g., TSS). The PCI that may be represented for the data cell is $N \cdot (3 \cdot N_{ID}^{(1)} + N_{ID}^{(2)}) + N_{ID}^{(3)}$. Here, $N$ denotes a maximum number of IDs that $N_{ID}^{(3)}$ may have.

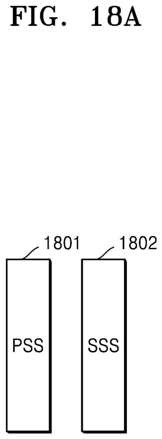

FIGS. 18A to 18C illustrate an SSB structure of a sync cell and data cells (excluding a PBCH), according to an embodiment of the present disclosure.

A UE should synchronize with the sync cell in order to receive information for the data cells from the sync cell, regardless of whether the UE accesses the sync cell. To this end, the SSB structure of the sync cell may include a PSS 1801 and an SSS 1802 as shown in FIG. 18A. The UE receiving an SSB including the PSS 1801 and the SSS 1802 obtains

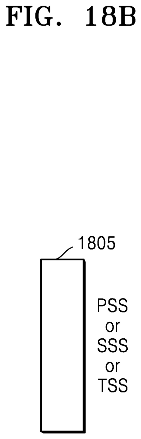

$N_{ID}^{(1)}$ and $N_{ID}^{(2)}$ of the sync cell, and then searches for the data cells, receives SSBs from active data cells, and calculates PCIs of the data cells. When an SSB structure of a data cell is the same as shown in FIG. 18A, for Alt 1-1 and Alt 1-2 of Table 37, one of the PSS and the SSS may be the same as that of the sync cell. On the other hand, for the PSS or the SSS, which is not the same as that of the sync cell, there may be a value having a sequence different from that of the sync cell. Alternatively, as shown in FIG. 18B, because a value already known through the sync cell does not need to be additionally obtained, only one of the PSS and the SSS may be transmitted (1805). Alternatively, only one of the PSS, the SSS, or the TSS may be transmitted.

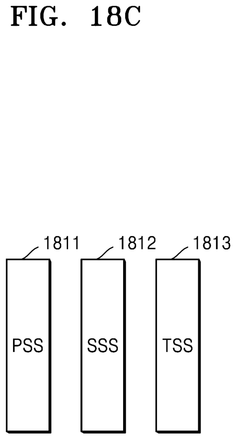

In the case of Alt 1-3, because an additional $N_{ID}^{(3)}$ value is required, as shown in FIG. 18C,

$N_{ID}^{(1)}$ and $N_{ID}^{(2)}$ may be respectively received through an SSS 1811 and a PSS 1812, and

$N_{ID}^{(3)}$ may be received through a TSS 1813. In this case, because the SSB structure of the data cell is changed, additional configuration for the TSS should be defined. First, the type and number of sequences need to be defined. Assuming that the PSS and the SSS are the same as in NR, the TSS may linearly increase according to the number of added data cells, and should have a large value enough to provide sufficient interference randomization. Second, a resource location for the TSS needs to be defined. As shown in FIG. 18C, there may be a one-symbol difference between the SSS and the TSS (in this case, a PBCH may be transmitted in that symbol), or the TSS may be transmitted in a symbol immediately after the SSS. In the case of Alt 1-3, transmission may be performed as in FIGS. 18A and 18B. For example, when transmission is performed as shown in FIG. 18B, because $N_{ID}^{(1)}$ and $N_{ID}^{(2)}$

have already been transmitted from the sync cell and thus only information about $N_{ID}^{(3)}$ is required, only one SS may be transmitted. Alternatively, as in FIG. 18B, because it may be difficult to achieve synchronization with only one SS, the existing SSB structure as in FIG. 18A may be used as it is, and the UE may determine whether a desired data cell belongs to the selected sync cell based on an ID of scrambled $3 \cdot N_{ID}^{(1)} + N_{ID}^{(2)}$ in the received PSS or SSS, and may extract an actual $N_{ID}^{(3)}$ value through a PCI for $N \cdot (3 \cdot N_{ID}^{(1)} + N_{ID}^{(2)}) + N_{ID}^{(3)}$ for the remaining SSS or PSS.

In Table 37, Alt 2 relates to a situation where the PCIs of the sync cell and each data cell have completely different sets. Hence, a sequence for the PCI used in the sync cell and a sequence for the PCI used in each data cell should be completely different from each other. In this case, the PCI for each data cell may be received by the UE through SSB, and the UE may compare the PCI of each data cell received through sync and SSB with a pre-shared data cell list for Alt 2 through the sync cell.

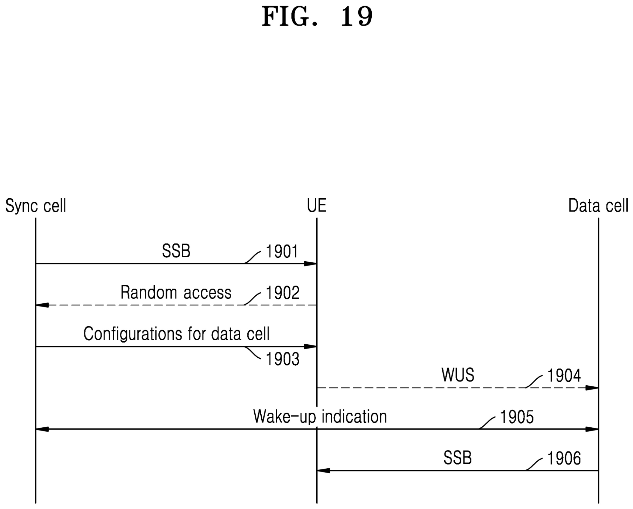

FIG. 19 illustrates a procedure for obtaining a PCI between a sync cell, a data cell, and a UE, according to an embodiment of the present disclosure.

First, the sync cell transmits an SSB that is a periodic signal (1901), and the UE synchronizes with the sync cell and performs random access according to whether the UE accesses the sync cell (1902). Next, the UE receives configurations for data cell from the sync cell, and obtains information of the data cell based on the received configurations for data cell. The information of the data cell may include at least one of information that the UE may obtain via SIB, such as a carrier frequency and bandwidth of the data cell, an SSB structure or position, or full information of the PCI or partial information of the PCI. For example, in the case of partial information, assuming that the sync cell and the data cell have a hierarchical structure, $N_{ID}^{(3)}$ may be included as in Alt 1-3. The UE receiving the configurations for data cell (1903) may transmit a WUS according to capability (1904). In this case, the UE may transmit the WUS by scrambling a PCI of the selected sync cell or scrambling a UE ID, which is a unique ID of the UE, so that a data cell within the selected sync cell receives the WUS. When the WUS is transmitted (1904), the data cell measures a strength of the received WUS and determines whether to wake up a main radio of the data cell through coordination with the sync cell. For example, the data cell may instructed on whether to wake up the main radio through a wake up indication (1905) received from the sync cell. When the data cell does not have a WUR function, the sync cell may determine whether to wake up the main radio of the data cell and may transmit the wake up indication. The data cell receiving the wake up indication wakes up the main radio and transmits an SSB to synchronize with the UE (1906). Although not shown, the UE may receive an indication for receiving the SSB from the sync cell, or may receive the SSB from the data cell when a certain time elapses after the WUS is transmitted (e.g., a timer expires after the WUS is transmitted).

The SSB of the data cell may vary according to whether the PCI is fully or partially shared with the sync cell. For example, when the PCI of the sync cell and the PCI of the data cell are completely different from each other as in Alt-2 of Table 37, the sync cell may provide the full PCI of the data cell in the configurations for data cell (1903) or the data cell may scramble and send the PCI in sequence initialization of the PSS and the SSS, similar to the existing SSB. On the other hand, in an environment where some or all parts are shared as in Alt-1 of Table 37, because the UE may extract part of the PCI of the data cell based on the PCI of the sync cell, a structure of the SSB may be changed and transmitted as in Alt 1-1 to 1-3. Such an SSB structure may be transmitted through the configurations for data cell (1903) of the sync cell.

Next, there is a case where the PCI of the sync cell and the PCI of the data cell are the same. As described in Second embodiment, the PCIs of the sync cell and the data cell may have a hierarchical structure. In this case, because the PCIs of the sync cell and the data cell appear to be the same, data cells in the sync cell should be distinguished by using logical cell IDs. Just as the PCI is used for scrambling of each channel or DMRS sequence generation, the logical cell ID may also be used for sequence generation. When the logical cell ID and the PCI perform the same function, the logical cell ID may not be different significantly from a virtual cell ID used in existing CA or mTRP. However, the logical cell ID may be transmitted to idle/inactive UEs, unlike the virtual cell ID. When the logical cell ID does not operate in the same way as the PCI, because all data cells have the same cell ID, it is difficult for the UE to distinguish each data cell. Accordingly, as in the former case, the logical ID should be involved in each sequence generation, and the logical cell ID should be transmitted as shown in Table 38.

[Table 38]

| | | PSS | SSS | TSS |
|---|---|---|---|---|
| Sync cell | | $N_{ID}^{(2)}$ | $N_{ID}^{(1)}$ | |
| Data cell | Alt 1 | $N_{ID}^{(2)}$ | $N_{logicalID}$ | |
| | Alt 2 | $N_{logicalID}$ | $N_{ID}^{(1)}$ | |
| | Alt 3 | $N_{ID}^{(2)}$ | $N_{ID}^{(1)}$ | $N_{logicalID}$ |
| | Alt 4 | $N_{ID}^{(2)}$ | $N_{ID}^{(1)}$ | |

Alt 1 corresponds to a case where only $N_{ID}^{(2)}$, which may be detected in the PSS, among $N_{ID}^{(1)}$ and $N_{ID}^{(2)}$ (shaded value in Table 38) of the sync cell is re-transmitted for the data cell, and $N_{logicalID}$ is received through the SSS. The UE first verifies whether $N_{ID}^{(2)}$ received through the PSS is the same as that of the sync cell, and then receives $N_{logicalID}$ through the SSS and calculates a cell ID of the data cell. The cell ID calculation is determined based on three ID values of $N_{ID}^{(1)}$ received from the SSS of the sync cell as well as $N_{ID}^{(2)}$ and $N_{logicalID}$

Alt 2 corresponds to a case where $N_{ID}^{(1)}$, which may be detected only in the SSS, is re-transmitted for the data cell, and $N_{logicalID}$ is additionally received through the PSS. The UE first verifies whether $N_{ID}^{(1)}$ received through the SSS is the same as that of the sync cell, and then receives $N_{logicalID}$ through the PSS and calculates a cell ID of the data cell. The cell ID calculation is determined based on three ID values of $N_{ID}^{(2)}$ received from the PSS of the sync cell as well as $N_{ID}^{(1)}$ and $N_{logicalID}$.

Alt 3 corresponds to a case where $N_{ID}^{(1)}$ and $N_{ID}^{(2)}$, which may be detected in the PSS and the SSS, are re-transmitted, and $N_{logicalID}$ is additionally received through the TSS. The UE first verifies whether $N_{ID}^{(2)}$ received through the PSS and $N_{ID}^{(1)}$ received through the SSS are the same as those of the sync cell, and then receives $N_{logicalID}$ through the TSS and calculates a cell ID of the data cell. The cell ID calculation is determined based on three ID values of $N_{logicalID}$ received through the TSS as well as $N_{ID}^{(1)}$ and

$$N_{ID}^{(2)}.$$

Alt 4 corresponds to a case where an SSB transmitted from the data cell includes $N_{ID}^{(1)}$ and $N_{ID}^{(2)}$ of the PSS and the SSS transmitted from the sync cell. After the UE recognizes that the SSB is a data cell controlled by the sync cell, the UE performs scrambling of other channels or DMRS sequence generation based on a cell ID calculated by considering $N_{logicalID}$ transmitted from the sync cell and the PCI of the sync cell together. The sync cell may inform the UE of only $N_{logicalID}$ through the "Configurations for data cell", or when the UE has the capability to access the sync cell, information about the data cells may be received together when the UE transmits a PRACH and then receives a random access response (RAR).

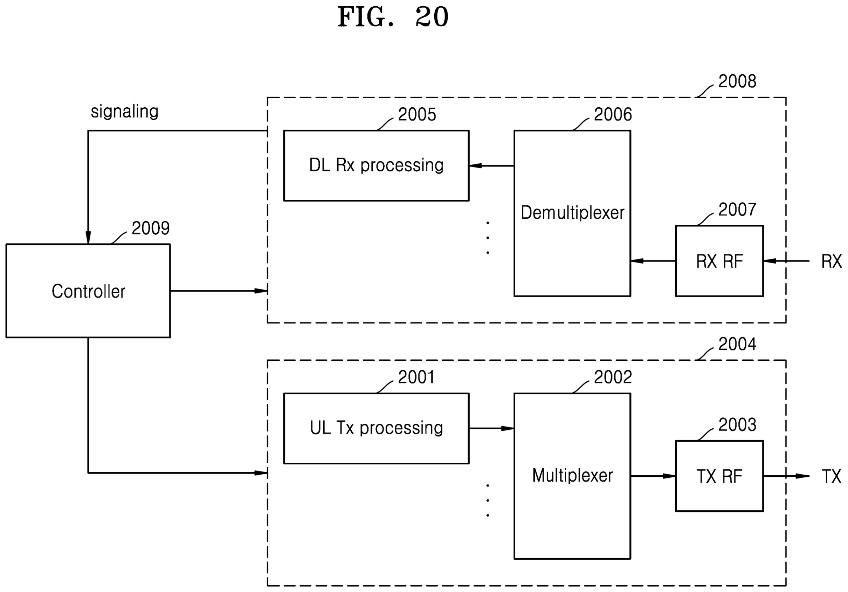

FIG. 20 illustrates a UE transceiving apparatus, according to an embodiment of the present disclosure. For convenience of descriptions, devices not directly related to the present disclosure may not be illustrated and described.

Referring to FIG. 20, a UE may include a transmitter 2004 including a UL transmission processing block 2001, a multiplexer 2002, and a transmission RF block 2003, a receiver 2008 including a DL reception processing block 2005, a demultiplexer 2006, and a reception RF block 2007, and a controller 2009. As described above, the controller 2009 may control configuration blocks of the receiver 2008 for receiving a data channel or a control channel transmitted from a BS and configuration blocks of the transmitter 2004 for transmitting a UL signal.

The UL transmission processing block 2001 of the transmitter 2004 of the UE may perform processes including channel coding, modulation, and the like, to generate a signal to be transmitted. The signal generated in the UL transmission processing block 2001 may be multiplexed with another UL signal by the multiplexer 2002, and may be signal processed by the transmission RF block 2003, and then may be transmitted to the BS.

The receiver 2008 of the UE demultiplexes the signal received from the BS into DL reception processing blocks. The DL reception processing block 2005 may perform processes including DL signal demodulation, channel decoding, and the like of the BS to obtain control information or data transmitted by the BS. The UE receiver 2008 may apply an output result of the DL reception processing block to the controller 2009 to support an operation of the controller 2009.

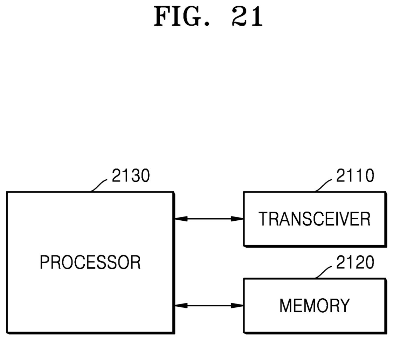

FIG. 21 is a block diagram illustrating a UE, according to an embodiment of the present disclosure.

As illustrated in FIG. 21, the UE of the present disclosure may include a processor 2130, a transceiver 2110, and a memory 2120. However, elements of the UE are not limited thereto. For example, the UE may include more elements than the shown elements or may include fewer elements than the shown elements. Furthermore, the processor 2130, the transceiver 2110, and the memory 2120 may be implemented as one chip. According to an embodiment, the transceiver 2110 of FIG. 21 may include the transmitter 2004 and the receiver 2008 of FIG. 20. Also, the processor 2130 of FIG. 21 may include the controller 2009 of FIG. 20.

In an embodiment, the processor 2130 may control a series of processes for the UE to be operated according to the aforementioned embodiments of the present disclosure. For example, according to an embodiment of the present disclosure, components of the UE may be controlled to perform a transmission/reception method of the UE according to whether a BS mode is an energy saving mode or a BS normal mode. The processor 2130 may include one or more processors, and the processor 2130 may execute a program stored in the memory 2120 to perform a transmission/reception operation of the UE in a wireless communication system to which carrier aggregation of the present disclosure is applied.

The transceiver 2110 may transmit and receive a signal to and from a BS. The signal transmitted and received to and from the BS may include control information and data. The transceiver 2110 may include an RF transmitter for up-converting and amplifying a frequency of a transmitted signal and an RF receiver for low-noise amplifying a received signal and down-converting a frequency of the received signal. However, this is merely an example of the transceiver 2110, and thus elements of the transceiver 2110 are not limited to the RF transmitter and the RF receiver. Also, the transceiver 2110 may receive signals through wireless channels and output the signals to the processor 2130, and may transmit signals output from the processor 2130, through wireless channels.

According to an embodiment, the memory 2120 may store programs and data required to operate the UE. Also, the memory 2120 may store control information or data included in a signal transmitted and received by the UE. The memory 2120 may include a storage medium such as a ROM, a RAM, a hard disk, a CD-ROM, and a DVD, or a combination thereof. Also, the memory 2120 may include a plurality of memories, and according to an embodiment, the memory 2620 may store the program for performing transmission and reception operations of the UE according to whether a BS mode is a BS energy saving mode or a BS normal mode according to the embodiments of the present disclosure.

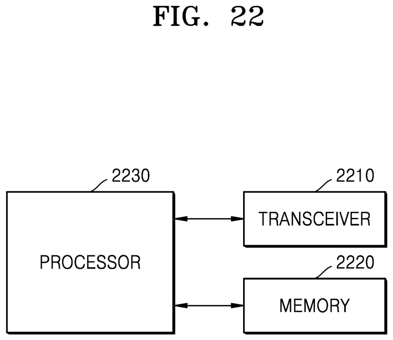

FIG. 22 is a block diagram illustrating a BS, according to an embodiment of the present disclosure.

As shown in FIG. 22, the BS may include a processor 2230, a transceiver 2210, and a memory 2220. However, elements of the BS are not limited thereto. For example, the BS may include more elements than the shown elements or may include fewer elements than the shown elements. In addition, the processor 2230, the transceiver 2210, and the memory 2220 may be implemented as one chip.

The processor 2230 may control a series of processes for the BS to be operated according to the embodiments of the present disclosure. For example, components of the BS may be controlled to perform a method of scheduling a UE according to whether a BS mode is a BS energy saving mode or a BS normal mode, according to an embodiment of the present disclosure. The processor 2230 may include one or more processors, and the processor 2230 may perform a method of scheduling a UE according to whether a BS mode is a BS energy saving mode or a BS normal mode by executing the program stored in the memory 2220.

The transceiver 2210 may transmit and receive a signal to and from a UE. The signal transmitted/received to/from the UE may include control information and data. The transceiver 2210 may include an RF transmitter for up-converting and amplifying a frequency of a transmitted signal and an RF receiver for low-noise amplifying a received signal and down-converting a frequency of the received signal. However, this is merely an example of the transceiver 2210, and thus elements of the transceiver 2210 are not limited to the RF transmitter and the RF receiver. Also, the transceiver 2210 may receive signals through wireless channels and output the signals to the processor 2230, and may transmit signals output from the processor 2230, through wireless channels.

In an embodiment, the memory 2220 may store a program and data required for operation of the BS. Furthermore, the memory 2220 may store control information or data included in a signal transmitted or received by the BS. The memory 2220 may be implemented as a storage medium including a ROM, a RAM, a hard disk, a CD-ROM, a DVD, and the like, or any combination thereof. Also, a plurality of memories 2220 may be provided. According to an embodiment, the memory 2220 may store a program for performing a method of scheduling a UE according to whether a BS mode is a BS energy saving mode or a BS normal mode according to embodiments of the present disclosure.

In specific embodiments of the present disclosure described above, elements included in the present disclosure are expressed as singular or plural according to the specific embodiments. However, singular or plural expressions have been selected properly for a condition provided for convenience of description, and the present disclosure is not limited to singular or plural components, and components expressed as plural may be configured as a single component, or a component expressed as singular may be configured as plural components.

While embodiments of the present disclosure are disclosed and particular terms are used throughout the specification and drawings, they are just used in a general sense to provide easy descriptions and help understanding of the present disclosure and are not intended to limit the scope of the present disclosure. Thus, it will be apparent to one of ordinary skill in the art that the present disclosure is not limited to the embodiments described, which have been provided only for illustrative purposes. Also, the embodiments of the present disclosure may be used in combination when necessary.

Although specific embodiments are described in the detailed description of the present disclosure, various modifications may be made without departing from the scope of the present disclosure. Hence, the scope of the present disclosure is not limited to the above embodiments of the present disclosure, and may be defined by not only the following claims but also equivalents thereof.

**Claims**

1. An operating method of a terminal in a wireless communication system, comprising:

    obtaining, from a first cell, a synchronization signal (SS) of the first cell;
    based on the SS of the first cell, synchronizing with the first cell;
    receiving, from the first cell, configuration information on at least one second cell controllable by the first cell;
    based on synchronization information of the first cell and the configuration information on the at least one second cell, obtaining a physical cell identification (PCI) of a data cell to be accessed among the at least one second cell; and
    based on the PCI, accessing the data cell.

2. The operating method of claim 1, wherein the configuration information on the at least one second cell includes synchronization information of each of the at least one second cell.

3. The operating method of claim 2, wherein the synchronization information of each of the at least one second cell includes at least one of a primary synchronization signal (PSS) identical to a PSS of the first cell or a secondary synchronization signal (SSS) identical to an SSS of the first cell.

4. The operating method of claim 3, wherein, when the synchronization information of each of the at least one second cell has the PSS identical to the PSS of the first cell and the SSS identical the SSS of the first cell, the synchronization information of each of the at least one second cell further includes an additional SS.

5. The operating method of claim 1, wherein the at least one second cell includes a wake-up receiver (WUR).

6. The operating method of claim 1, further comprising:

transmitting a wake-up signal (WUS) to the data cell; and
receiving a synchronization signal block (SSB) from the data cell.

7. The operating method of claim 1, wherein the terminal operates in an idle mode or an inactive mode.

8. A terminal operating in a wireless communication system, the terminal

comprising
a transceiver; and
at least one processor operatively coupled to the transceiver and configured to:

control the transceiver to obtain, from a first cell, a synchronization signal (SS) of the first cell;
based on the SS of the first cell, synchronize with the first cell;
control the transceiver to receive, from the first cell, configuration information on at least one second cell controllable by the first cell;
based on synchronization information of the first cell and the configuration information on the at least one second cell, obtain a physical cell identification (PCI) of a data cell to be accessed among the at least one second cell; and
control the transceiver to access the data cell based on the PCI.

9. The terminal of claim 8, wherein the configuration information on the at least one second cell includes synchronization information of each of the at least one second cell.

10. The terminal of claim 9, wherein the synchronization information of each of the at least one second cell includes at least one of a primary synchronization signal (PSS) identical to a PSS of the first cell or a secondary synchronization signal (SSS) identical to an SSS of the first cell.

11. The terminal of claim 10, wherein, when the synchronization information of each of the at least one second cell has the PSS identical to the PSS of the first cell and the SSS identical to the SSS of the first cell, the synchronization information of each of the at least one second cell further includes an additional SS.

12. The terminal of claim 8, wherein the at least one second cell includes a wake-up receiver (WUR).

13. The terminal of claim 8, wherein the at least one processor is further configured to

control the transceiver to transmit a wake-up signal (WUS) to the data cell, and
control the transceiver to receive a synchronization signal block (SSB) from the data cell.

14. The terminal of claim 8, wherein the terminal operates in an idle mode or an inactive mode.

15. A wireless communication system comprising:

a terminal;
a first cell; and
at least one second cell controllable by the first cell, wherein the terminal is configured to:

obtain, from the first cell, a synchronization signal (SS) of the first cell;
based on the SS of the first cell, synchronize with the first cell;
receive, from the first cell, configuration information on the at least one second cell;
based on synchronization information of the first cell and the configuration information on the at least one second cell, obtain a physical cell identification (PCI) of a data cell to be accessed among the at least one second cell; and

access the data cell based on the PCI.

# FIG. 1

Frame 114

Subframe 105

. . . . . .

Slot 106

Transmission bandwidth $N_{BW}$ subcarriers 104

$N^{RB}_{sc}$ subcarriers 110

Resource element 112

$N^{slot}_{symb}$ symbols 102

frequency

time

# FIG. 2

SS/PBCH periodicity = P

Half frame = 0.5 ms

SS/PBCH block

#0  #1  #2  #3  #4  ......  #L−1

time

t1
201

t2
202

203
#d0

UE1
205  #d1

#d2  Beam sweeping

gNB  #d3

#d4

206  UE2

204

# FIG. 3

301
UE

302
gNB

① Random Access Preamble
Message 1
310

② Random Access Response
Message 2
320

③ Scheduled Transmission
Message 3
330

④ Contention Resolution
Message 4
340

# FIG. 4

401
UE

402
gNB

410
TRANSMIT UE CAPABILITY
INFORMATION REQUEST

420
TRANSMIT UE CAPABILITY
INFORMATION

# FIG. 5

Duration 504

Frequency resourec 503

UE bandwidth part 510

Slot 520

Frequency

Time

control resource set#1 — 501

control resource set#2 — 502

# FIG. 6

FIG. 7

EP 4 716 315 A1

TCI state #0

700

TCI state #1

705

TCI state #2

710

# FIG. 8

```
                                                              805
┌────────────────────────────────────────────────────────────┐
│                   RRC configured TCI states                  │
│   805         810          815                   820         │
│  ┌──────┐   ┌──────┐    ┌──────┐            ┌──────┐         │
│  │TCI #0│   │TCI #1│    │TCI #2│   • • •    │TCI #N│         │
│  └──────┘   └──────┘    └──────┘            └──────┘         │
└────────────────────────────────────────────────────────────┘
```

```
                                                              825
┌────────────────────────────────────────────────────────────┐
│                A list of TCI states for a CORESET            │
│       830            835                         840         │
│    ┌──────┐       ┌──────┐                  ┌──────┐         │
│    │TCI #a│       │TCI #b│      • • •        │TCI #n│         │
│    └──────┘       └──────┘                  └──────┘         │
└────────────────────────────────────────────────────────────┘
```

TCI indication via MAC CE  845

# FIG. 9

| R | Serving Cell ID | BWP ID | Oct 1 |
|---|---|---|---|
| CORESET ID | TCI State ID | | Oct 2 |

# FIG. 10

# FIG. 11

# FIG. 12

# FIG. 13

# FIG. 14

RECEIVE PDCCH INDICATING
NEW UPLINK TRANSMISSION OR
DOWNLINK TRANSMISSION
1430

1405    1405    1405    1405    1405

1410    1410    1410    1410

drx-onDurationTimer
1415

START OR RESTART
Drx-inactivityTimer
1420

drx-LongCycle    1425    1425    1425
1425

1415    1415    1415

time

Active time    1405

EP 4 716 315 A1

# FIG. 15

# FIG. 16A

# FIG. 16B

# FIG. 17A

# FIG. 17B

# FIG. 18A

1801    1802

| | |
|---|---|
| PSS | SSS |

# FIG. 18B

1805

PSS
or
SSS
or
TSS

FIG. 18C

# FIG. 19

# FIG. 20

EP 4 716 315 A1

FIG. 21

# FIG. 22

**EP 4 716 315 A1**

## INTERNATIONAL SEARCH REPORT

| International application No. |
|---|
| **PCT/KR2024/012232** |

**A.    CLASSIFICATION OF SUBJECT MATTER**

**H04W 52/02**(2009.01)i; **H04W 56/00**(2009.01)i; **H04W 48/10**(2009.01)i; **H04J 11/00**(2006.01)i

According to International Patent Classification (IPC) or to both national classification and IPC

**B.     FIELDS SEARCHED**

Minimum documentation searched (classification system followed by classification symbols)

H04W 52/02(2009.01); H04W 68/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동기 신호(Synchronization signal), 데이터 셀(data cell), PCI, WUR, WUS

**C.     DOCUMENTS CONSIDERED TO BE RELEVANT**

| Category* | Citation of document, with indication, where appropriate, of the relevant passages | Relevant to claim No. |
|---|---|---|
| Y<br>A | MODERATOR (NORDIC). Summary of discussions on L1 signal design and procedure for low power WUS. R1-2306181, 3GPP TSG RAN WG1 #113-e. 25 May 2023.<br>    See pages 3, 43-45 and 59. | 1-3,5-10,12-15<br><br>4,11 |
| Y | MODERATOR (INTEL CORPORATION). Discussion Summary #4 for energy saving techniques of NW energy saving SI. R1-2210620, 3GPP TSG RAN WG1 Meeting #110-bis-e. 20 October 2022.<br>    See page 367. | 1-3,5-10,12-15 |
| A | HUAWEI. Network energy saving techniques. R3-225670, 3GPP TSG-RAN WG3 Meeting #117bis-e. 28 September 2022.<br>    See pages 1-10. | 1-15 |
| A | MEDIATEK INC. L1 signal design and procedure for low power WUS. R1-2209504, 3GPP TSG RAN WG1 #110bis-e. 30 September 2022.<br>    See pages 1-4. | 1-15 |
| A | KR 10-2023-0017297 A (ZTE CORPORATION) 03 February 2023 (2023-02-03)<br>    See paragraphs [0032], [0137]-[0139], [0176]-[0178] and [0248]. | 1-15 |

☐ Further documents are listed in the continuation of Box C.          ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **13 November 2024** | **13 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2024/012232** |

| Patent document cited in search report | Publication date (day/month/year) | Patent family member(s) | | | Publication date (day/month/year) |
|---|---|---|---|---|---|
| KR 10-2023-0017297 A | 03 February 2023 | CN | 115699902 | A | 03 February 2023 |
| | | CN | 115699902 | B | 16 July 2024 |
| | | EP | 4049486 | A1 | 31 August 2022 |
| | | EP | 4049486 | A4 | 23 November 2022 |
| | | JP | 2023-531702 | A | 25 July 2023 |
| | | JP | 7513769 | B2 | 09 July 2024 |
| | | US | 2022-0286964 | A1 | 08 September 2022 |
| | | WO | 2022-000181 | A1 | 06 January 2022 |

Form PCT/ISA/210 (patent family annex) (July 2022)